# EUROPÄISCHE PATENTSCHRIFT

(11) **EP 1 519 829 B1**
(45) Veröffentlichungstag und Bekanntmachung des Hinweises auf die Patenterteilung: **31.10.2007**
(21) Anmeldenummer: 03730056.3
(22) Anmeldetag: 16.05.2003
(51) Int. Cl.: B29C 63/00, B29C 63/02, C09J 7/02

(54) **VERFAHREN UND VORRICHTUNG ZUM AUTOMATISIERTEN APPLIZIEREN VON LACKFOLIE AUF KAROSSERIETEILE SOWIE AUTOMATIONSGERECHT GESTALTETER LACKFOLIENVERBUND**
METHOD AND DEVICE FOR AUTOMATED APPLICATION OF LACQUERED FILMS TO BODY PARTS AND AUTOMATION-COMPATIBLE LACQUERED FILM COMPOSITE
PROCEDE ET DISPOSITIF DESTINES A L'APPLICATION AUTOMATIQUE D'UN FILM DE PEINTURE SUR DES PIECES DE CARROSSERIE ET FILM DE PEINTURE COMPOSITE COMPATIBLE AVEC L'AUTOMATISATION

(30) Priorität: 04.07.2002 DE 10230034
(43) Veröffentlichungstag der Anmeldung: 06.04.2005
(73) Patentinhaber: DaimlerChrysler AG, 70327 Stuttgart (DE)
(72) Erfinder: HABISREITINGER, Uwe, 72290 Lossburg (DE); NORDMANN, Bernhard, 71034 Böblingen (DE)
(86) Internationale Anmeldenummer: PCT/EP2003/005154
(87) Internationale Veröffentlichungsnummer: WO 2004/005012

(56) Entgegenhaltungen:
- EP-A- 0 635 864
- WO-A-01/05902
- DE-A- 19 532 998
- DE-A- 19 642 831
- DE-A- 19 809 515
- PATENT ABSTRACTS OF JAPAN vol. 1999, no. 04, 30. April 1999 (1999-04-30) & JP 11 011408 A (SONY CORP), 19. Januar 1999 (1999-01-19)

## Beschreibung

### Technisches Gebiet der Erfindung

Die Erfindung betrifft ein Verfahren und eine Vorrichtung zum automatisierten Applizieren von Lackfolie auf Karosserieteile sowie einen automationsgerecht gestalteten Lackfolienverbund. Dabei geht die Erfindung von einem Verfahren zum automatisierten Applizieren von selbsthaftender Folie auf Karosserieteile nach dem Oberbegriff von Anspruch 1 und von einer entsprechenden Vorrichtung nach Anspruch 15 aus, wie beides beispielsweise aus der DE 196 42 831 A1 als bekannt hervorgeht. In diesem Zusammenhang kann auch noch die DE 198 09 515 A1 genannt werden, die in dem hier interessierenden Aspekt mit der erstgenannten Druckschrift inhaltlich im Wesentlichen übereinstimmt. Bezüglich des Lackfolienverbundes sei als bekannter Gattung auf die DE 195 32 998 A1 verwiesen, die im Oberbegriff von Anspruch 33 wiedergegeben ist.

Bei Fahrzeugen soll häufig die zwischen zwei benachbarten Glasflächen liegende Karosserieoberfläche aus stilistischen Gründen mit einer hochglänzenden, unabhängig von der sonstigen Wagenfarbe schwarz getönten Lackfolie überklebt werden, um dadurch an dieser Stelle den Eindruck einer durchgehenden Glasfläche zu vermitteln. Und zwar kommen hier insbesondere die beiden benachbarten vertikalen Rahmenholme der Fensterrahmen im Bereich der Mittelsäule des Fahrzeugs in Betracht. Zumindest einer dieser Rahmenholme ist am Fensterrahmen einer Seitentür angeordnet. Nachdem diese Karosserieflächen in der Regel nur schmale Streifen darstellen, ist auch der Zuschnitt der zu applizierenden Lackfolie entsprechend länglich geformt und nicht besonders groß, so dass der entsprechende Lackfolienzuschnitt ohne weiteres manuell von einer einzelnen Person gehandhabt werden kann. Nachdem andererseits die Lackfolie während der gesamten Gebrauchsdauer des Fahrzeuges an diesem verbleibt, muss die Lackfolie entsprechend dauerhaft an der Karosserie festgeklebt sein. Hierbei ist zu berücksichtigen, dass die so überklebten Seitenholme im unmittelbaren Sichtbereich der Fahrzeugbenutzer zumindest beim Einsteigen liegen und die Anforderungen an eine einwandfreie Folienapplikation somit besonders hoch sind.

### Stand der Technik

Die eingangs im Zusammenhang mit der Lackfolie erwähnte Druckschrift DE 195 32 998 A1 zeigt einen ebenen Zuschnitt einer solchen selbstklebenden Lackfolie, die auf den Rahmenholm eines Fensterrahmens blasen- und faltenfrei appliziert werden soll. Zur Vermeidung von gefangenen Lufteinschlüssen (Blasen) zwischen Karosserie und Lackfolie ist letztere zumindest in gefährdeten Bereichen flächendeckend mit einer Vielzahl gerastert angeordneter, mikrofeiner Entlüftungsöffnungen versehen. Etwaige Lufteinschlüsse können durch sie ohne weiteres entweichen. Weil die Entlüftungsöffnungen so klein sind, stören sie - zumindest anfänglich - das äußere Erscheinungsbild der mit der Lackfolie applizierten Karosseriepartie nicht. Durch die gerastert angeordneten Entlüftungsöffnungen soll außerdem die räumliche Anpassungsfähigkeit der Lackfolie erhöht und die Gefahr von Faltenbildung reduziert werden. Diese Schrift sagt zwar nichts über die Art der Folienapplikation - manuell oder automatisiert - aus, jedoch kann aus dem Gesamteindruck dieser Schrift nur eine Handapplikation der Lackfolie unterstellt werden. Außerdem ist dieser Druckschrift nicht der vollständige Aufbau des den verarbeitungsbereiten Zuschnitt der Lackfolie enthaltenden Folienverbundes im Anlieferungszustand gezeigt. Kritisch anzumerken ist bei diesem Stand der Technik im übrigen, dass die vielen mikrofeinen Entlüftungsöffnungen im Laufe der Zeit aufgrund von Witterungseinflüssen und Alterungsvorgängen doch sichtbar werden und dadurch die Lackfolie unschön wird.

Es ist davon auszugehen, dass der unterseitig mit einer sehr intensiv klebenden Haftklebeschicht versehenen Lackfolienzuschnitt im verarbeitungsbereiten Anlieferungszustand einen insgesamt dreilagigen Folienverbund darstellt, bei dem der Lackfolienzuschnitt sowohl unterseitig als auch auf der hoch glänzenden Sichtseite jeweils mit einer Schutzfolie oder einem Schutzpapier überklebt ist. Dabei ist das unterseitige Schutzpapier an der Kontaktseite zur Haftklebeschicht des Lackfolienzuschnitts mit einem Antihaftbelag versehen, so dass er sich relativ leicht und vor allem ohne einzureißen von der intensiv klebenden Haftklebeschicht der Lackfolie lösen lässt. Das oberseitige Schutzpapier ist an der Kontaktseite zur Außenseite des Lackfolienzuschnitts mit einer nur gering klebenden Haftklebeschicht versehen, so dass auch dieses Schutzpapier sich leicht von der Lackfolie lösen lässt.

Bei der Handapplikation von Lackfolien wird der unterseitige oder klebeseitige Schutzfolienstreifen vollständig entfernt, so dass die Klebeseite der Lackfolie frei liegt. Der auf der Sichtseite der Lackfolie noch anhaftende Schutzfolienstreifen ist nach der Darstellung in der o.g. DE 195 32 998 A1 gegenüber dem Ende der Lackfolie zurückversetzt, so dass der verbleibende Folienverbund am Lackfolienzuschnitt selber gehandhabt werden muss. Zum Applizieren wird die Lackfolie - manuell geführt an ihren beiden Enden - bei geringem Abstand über der zu überklebenden Karosseriepartie nach Augenmaß in gespanntem Zustand ausgerichtet und bei richtiger Lage mit einem Ende der Lackfolie an die Karosserie angedrückt. Wichtig hierbei ist, dass die Begrenzungskanten des Lackfolienzuschnittes im Endbereich nicht von einem außenseitigen Schutzpapier überdeckt sind. Unter manueller Aufrechterhaltung der Zugspannung in der einseitig festgeklebten Lackfolie wird diese mit der frei gewordenen Hand vom festgeklebten Ende her zum anderen Ende hin entlang einer voranschreitenden Drucklinie an die Karosserie angedrückt. Zur Verbesserung der Haftung wird mit einer nachgiebigen Rakel, vorzugsweise aus einem harten Filzstück, dieses Andrücken bei erhöhter Linienkraft wiederholt. Anschließend werden nach dem Abziehen des außenseitigen Schutzstreifens die seitlich über den Rahmenholm überstehenden Ränder der Lackfolie um die Ränder des Karosserieteils umgebogen und auf der Rückseite ebenfalls angedrückt.

Die Handapplikation von Lackfolien auf die Fahrzeugkarosserie hat verschiedene Nachteile. Zum einen können die Lackfolien nur mit einer geringen Genauigkeit plaziert werden, was zu häufiger Nacharbeit führt. Hierbei ist zu berücksichtigen, dass auf der Karosserie keine exakte Referenzmarke zum Ausrichten des Folienzuschnittes nach Augenmaß vorhanden ist. Im Falle einer Fehlausrichtung kann die Lackfolie entweder leicht schief sitzen, so dass die knapp bemessenen Ränder ungünstig verlaufen oder der Folienzuschnitt sitzt zu hoch oder zu tief. Eine unterschiedliche Höhenposition der Lackfolien ist bei einer Applikation auf die beiden unmittelbar benachbart liegenden Fensterrahmenholme im Bereich der Mittelsäule u.U. sehr störend. Nachteilig ist ferner, dass selbst bei glattem Verlauf der Lackfolie auf der Karosserie und bei starkem Andrücken der Lackfolie an den Rahmenholm gleichwohl häufig Lufteinschlüsse zwischen beiden vorkommen, was sich aber häufig erst nach einer gewissen Verzögerung zeigt. Die an der Klebeschicht adsorbierte Luft wird zunächst in mikrofeinen und unauffälligen Bläschen eingeschlossen. Diese primäre Luft wandert langsam in der Klebeschicht und sammelt sich zu größeren Bläschen, die die Lackfolie lokal aufwölben. Diese nachträglich entstehenden Bläschen müssen durch Nacharbeit, d.h. durch gezielte Nadelstiche, beseitigt werden. Es zeigt sich ferner, dass das vollständige Entfernen des unterseitigen Schutzfolienstreifens, d.h. das Freilegen der Klebeseite der Lackfolie, zu einer Anlagerung von Staubpartikeln auf dieser Klebeschicht führt, die sich u.U. in unschöner Weise auf der Sichtseite der applizierten Lackfolie abzeichnen können. Durch das Abziehen des Schutzfolienstreifens wird ein gewisses elektrostatisches Potential freigelegt, was die Staubpartikel anzieht und an der Klebeschicht bindet. Im Fall von sich abzeichnenden Partikeln zwischen Lackfolie und Karosserie hilft nur, die applizierte Lackfolie in einer Nacharbeit mühselig zu entfernen und u.U. nach einem Reinigen der Karosserie eine neue Lackfolie zu applizieren. Die in vielfältiger Weise verursachte Nacharbeit bei der Handapplikation von Lackfolie beeinträchtigt die Produktivität und verteuert die Produktion erheblich. Abgesehen von dem allen ist anzumerken, dass die Handapplikation von Lackfolie monoton ist, aber trotzdem hohe Aufmerksamkeit erfordert und dass das kräftige manuelle Andrücken der Lackfolie nicht nur sehr ermüdend ist, sondern bei dauernder Beanspruchung auch zu gesundheitlicher Beeinträchtigung, z.B. zu Sehnenscheidenentzündungen oder Gelenkschmerzen, führen kann.

Wegen all dieser Schwierigkeiten ist man auch schon dazu übergegangen, die stilistische Funktion der Lackfolie, nämlich an den mittleren Rahmenholmen der Seitenscheiben den Eindruck einer durchgehenden Glasfläche zu vermitteln, durch ein in einem Schwarzton hochglanzlackiertes Hartplastikteil zu realisieren, welches an der betreffenden Stelle an den Rahmenholm angeklipst und/oder angeschraubt wird. Abgesehen davon, dass ein solches Hartplastikteil einschließlich der Montagemittel erheblich teurer ist als ein Lackfolienzuschnitt, schränkt es bei vorgegebenem Außenmaß des Fahrzeuges auch den Innenraum um die Bauhöhe des Hartplastikteils ein. Im übrigen sind ein solches Hartplastikteil und die Montagemittel auch schwerer als ein Lackfolienzuschnitt.

Die eingangs im Zusammenhang mit dem automatisierten Applizieren von selbstklebender Folie genannte DE 196 42 831 A1 zeigt eine Vorrichtung und ein Verfahren zum serienmäßigen Applizieren von selbsthaftender Schutzfolie auf Fahrzeugkarosserien. Die Schutzfolie dient als Transportverpackung für fabrikneue Fahrzeuge während der Überführung des Fahrzeuges von der Fabrik zum Fahrzeughändler. Vor Aushändigung des Fahrzeuges an den Kunden wird die Schutzfolie von der Karosserie wieder abgezogen. Wegen des nur vorübergehenden Gebrauchs der Schutzfolie ist deren Haftfähigkeit nur relativ gering. Sie soll sich nach Gebrauch leicht, insbesondere ohne einzureißen und ohne Rückstände auf der Karosserie zu hinterlassen, wieder von der Karosserie abziehen lassen. Die Folie braucht nur so fest zu haften, dass sie sich durch den Fahrtwind und/oder durch Witterungseinflüsse während des Transportes nicht selbsttätig von der Karosserie lösen kann. Als zu schützende Karosseriepartien kommen insbesondere die großflächigen Horizontalflächen in Betracht, also Dach, Motorhaube und Heckdeckel. Auch die Fahrertür wird aus Schutzgründen überklebt.

Gemäß der DE 196 42 831 A1 wird die Schutzfolie bei der Applikation als quasi-endlose Materialbahn in einer Vorratsrolle bereitgestellt, wobei die Klebeseite der äußeren Lage innerhalb des Folienwickels unmittelbar auf der Außenseite der nach innen benachbarten Folienlage aufliegt, also mit ihr - entsprechend der geringen Haftfähigkeit der Schutzfolie - verklebt ist. Zum Applizieren der Schutzfolie wird ein abgemessenes, rechteckiges Stück von der Vorratsrolle abgezogen und abgeschnitten, wobei zwei gegenüberliegende Längsseiten des Folienzuschnittes von jeweils einer robotergeführten Halteleiste in Form jeweils einer Saugleiste festgehalten werden, die den Folienzuschnitt in ausgespanntem Zustand halten. Bedarfsweise können in diesem ausgespanntem Zustand bestimmte Partien, z.B. für Anbauteile, aus dem Folienzuschnitt ausgespart werden. Anschließend wird der Folienzuschnitt durch den Handhabungsroboter über der zu überklebenden Karosseriepartie ausgerichtet und unter Annäherung des Folienzuschnittes an die Fahrzeugoberfläche an die entsprechende Karosseriepartie angelegt. Da die zu überklebenden Karosseriepartien leicht gewölbt sind, kommt es durch das Annähern des Folienzuschnittes an das Karosseriebauteil zunächst zu einer etwa mittig liegenden, relativ kleinen Kontaktzone, die sich mit zunehmender Annäherung vergrößert, bis schließlich die gesamte Horizontalfläche annähernd blasen- und faltenfrei überklebt ist. Anschließend wird mit einer gewichtsbelasteten, formentsprechenden Filzrakel die bereits applizierte Schutzfolie entlang einer fortschreitenden Drucklinie angedrückt.

Die bekannte Applikationstechnik bezüglich der nur wenig klebenden, großflächigen Schutzfolien, die in Form von aufgewickelten, quasi-endlosen, einlagigen Materialbahnen bereitgestellt werden, ist nicht auf das Applizieren von kleinflächigen Lackfolienzuschnitten übertragbar, die einzeln vorkonfektioniert als jeweils dreilagiger Folienverbund bereitgestellt werden. Im übrigen sind die Anforderungen bezüglich Lagegenauigkeit, Blasen- und Faltenfreiheit der applizierten Lackfolie um ein wesentliches höher als bei Schutzfolien.

### Aufgabe der Erfindung

Aufgabe der Erfindung ist es, das gattungsgemäß zugrunde gelegte Verfahren bzw. die entsprechende Vorrichtung dahingehend zu verbessern, dass damit Lackfolienzuschnitte auf ausgesuchte Krosseriebereiche in der Weise automatisiert appliziert werden können, dass trotz der gegenüber Schutzfolien stark erhöhter Qualitätsanforderungen Nacharbeit weitestgehend vermieden werden kann. Desweiteren soll durch die Erfindung ein automationsgerechter Lackfolienverbund geschaffen werden, mit dem die Lackfolienappliaktion automatisiert durchgeführt werden kann.

### Erfindungsgemäße Lösung des Problems

Diese Aufgabe wird bei Zugrundelegung des gattungsgemäßen Verfahrens erfindungsgemäß durch die kennzeichnenden Merkmale von Anspruch 1 und bezüglich der Vorrichtung durch die kennzeichnenden Merkmale von Anspruch 15 gelöst. Ein erfindungsgemäß ausgestalteter, automationsgerechter Lackfolienverbund ist in Anspruch 33 gekennzeichnet.

Danach wird zunächst ein automationsgerecht gestalteter Lackfolienverbund geschaffen und dieser mittels eines dazu passenden robotergeführten Applikationswerkzeuges lagegenau sowie blasen- und faltenfrei auf das Karosserieteil aufgeklebt. Für ein sicheres Festhalten des von einem Tisch o.dgl. aufgenommenen Folienverbundes werden die beiden die Enden erfassenden Sauggreifer spiegelbildlich abgewinkelt, um so ein Ablösen der Enden von den Sauggreifern zu verhindern. Danach wird der unterseitige Schutzstreifen, der an einer endseitig überstehenden Abzugsfahne von einem beweglichen Greifwerkzeug erfasst wird, zumindest partiell abgezogen und so die Klebeseite des Nutzteils der Lackfolie freigelegt. Der ausgespannt gehaltene Folienverbund wird in geringem Abstand zu der zu beklebenden und unnachgiebig gehaltenen Karosseriepartie lagerichtig ausgerichtet und der Nutzteil der Lackfolie durch eine bewegliche Rakel aus der Abstandslage heraus auf die Karosserieoberfläche aufgerakelt. Anschließend wird der vom Sauggreifer noch festgehaltene, außenseitige Schutzstreifen von der applizierten Lackfolie abgezogen. Zweckmäßige Ausgestaltungen der Erfindung können den jeweiligen Unteransprüchen entnommen werden.

### Figurenlegende

Die Erfindung ist nachfolgend anhand verschiedener in den beigefügten Zeichnungen dargestellter Ausführungsbeispiele noch erläutert; dabei zeigen:
- Fig. 1 und 2: Längsschnitt (Figur 1) und Draufsicht (Figur 2) durch bzw. auf einen automationsgerecht gestalten Folienverbund mit einem zu applizierenden Lackfolienzuschnitt, wobei die unmittelbar beteiligten Komponenten des Applikationswerkzeuges nach Figur 3 bzw. der Karosserie ebenfalls mit dargestellt sind,
- Fig. 3: eine Seitenansicht auf ein robotergeführtes Applikationswerkzeug beim Anfahren an eine ebenfalls dargestellte Stapelvorrichtung, in der ein gewisser Vorrat an zu applizierenden Folienverbunden lagegerecht gehaltert ist, wobei beim Applikationswerkzeug die Schwenklagerung der Sauggreifer konzentrisch zu den jeweils einander zugekehrt liegenden Kanten angeordnet ist,
- Fig. 4: eine gleiche Seitenansicht wie in Figur 3 auf ein modifiziertes Applikationswerkzeug, wobei die Schwenklagerung zwar durch zurückversetzte Zapfenlagerungen realisiert, aber aufgrund einer verschiebbaren Lagerung des endseitigen Sauggreifers für eine gleichbleibende Spannung des aufgenommenen Folienverbundes nach dem Abwinkeln der Sauggreifer gesorgt ist,
- Fig. 5: einen vertikalen Schnitt durch das Applikationswerkzeug nach Figur 4 parallel zu der Ansicht nach dieser Figur, die Einrichtung zum Abziehen des äußeren Schutzstreifens zeigend,
- Fig. 6 bis 8: drei unterschiedliche Phasen beim Applizieren eines Lackfolienzuschnitts auf ein Karosserieteil, nämlich in Figur 6 den Beginn, in Figur 7 das Ende des Aufrakelns und in Figur 8 das Abziehen des äußeren Schutzstreifens von der applizierten Lackfolie,
- Fig. 9: eine Seitenansicht auf eine weitere Variante eines Applikationswerkzeuges, bei dem der startseitige Sauggreifer an einem zurückversetzten Schwenkzapfen gelagert ist und der endseitige Sauggreifer mittels eines Gelenkvierecks so schwenkbar gelagert ist, dass die zugekehrte Begrenzungskante des endseitigen Sauggreifers sich beim Verschwenken der Sauggreifer nach Betrag und Richtung in der gleichen Richtung verlagert wie die entsprechende Begrenzungskante des startseitigen Sauggreifers,
- Fig. 10: eine vergrößerte Einzeldarstellung der drehantreibbaren Schnabelzange der bisher dargestellten Applikationswerkzeuge mit um 90° schwenkbarem unteren Schnabelteil, zum Fassen und Handhaben der Abzugsfahne des Folienverbundes und zum Aufwickeln des Schutzstreifens,
- Fig. 11 und 12: eine stark vergrößerte Schnittdarstellung (Figur 11) und eine Ansicht (Figur 12) in einem kleineren Maßstab einer anderen Ausführung einer Schnabelzange, die ein parallel verschiebbares Schnabelunterteil aufweist und die als ganzes um die Breite des Folienverbundes zurückziehbar bzw. vorschiebbar ist,
- Fig. 13: eine Teilansicht auf ein weiteres Ausführungsbeispiel eines Applikationswerkzeuges, die Schutzfolien-Abziehvorrichtung darstellend, wobei hier das drehbar angetriebene Greifwerkzeug in Form einer im Querschnitt D-förmigen Saugleiste ausgebildet ist, die zugleich als Wickelkern dient,
- Fig. 14a und 14b: Querschnitt (Figur 14a) und Ansicht auf die offene Saugseite (Figur 14b) der Saugleiste der Schutzfolien-Abziehvorrichtung nach Figur 13,
- Fig. 15a und 15b: Querschnitt (Figur 15a) und Ansicht auf die offene Saugseite (Figur 15b) einer modifizierten Ausgestaltung der Saugleiste, wie sie in der Schutzfolien-Abziehvorrichtung nach Figur 13 verwendet werden könnte,
- Fig. 16a, b, c: drei verschiedene Ausführungsbeispiele von Folienverbunden mit zwischengelegter Stützfolie in den endseitigen Überständen und
- Fig. 17a, b: zwei verschiedene Ausführungsbeispiele von Folienverbunden ohne Stützfolie in den endseitigen Überständen.

### Das automationsgerechte Lackfolien-Applikationsverfahren

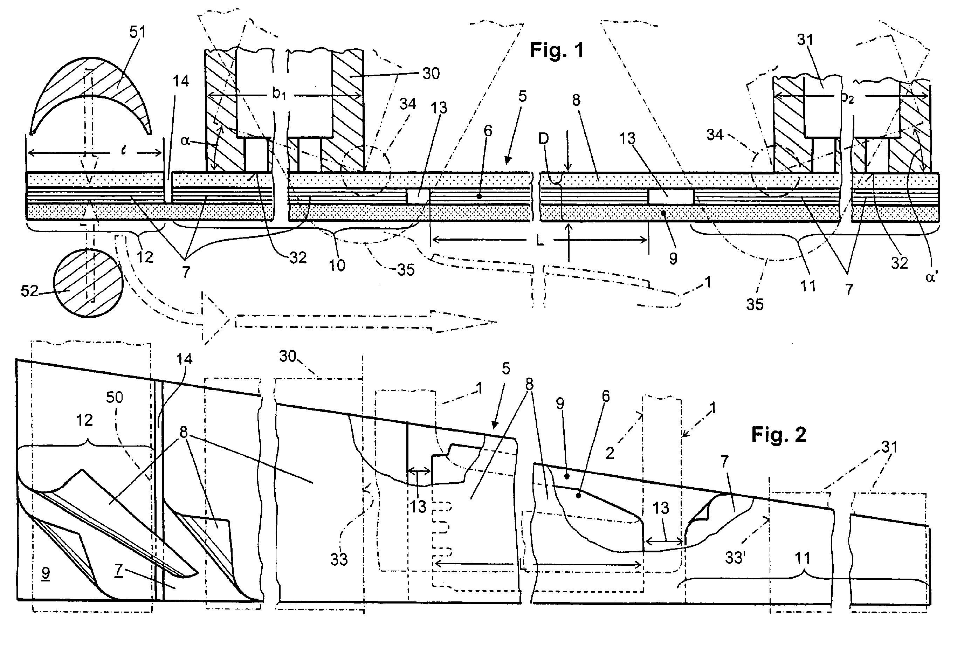

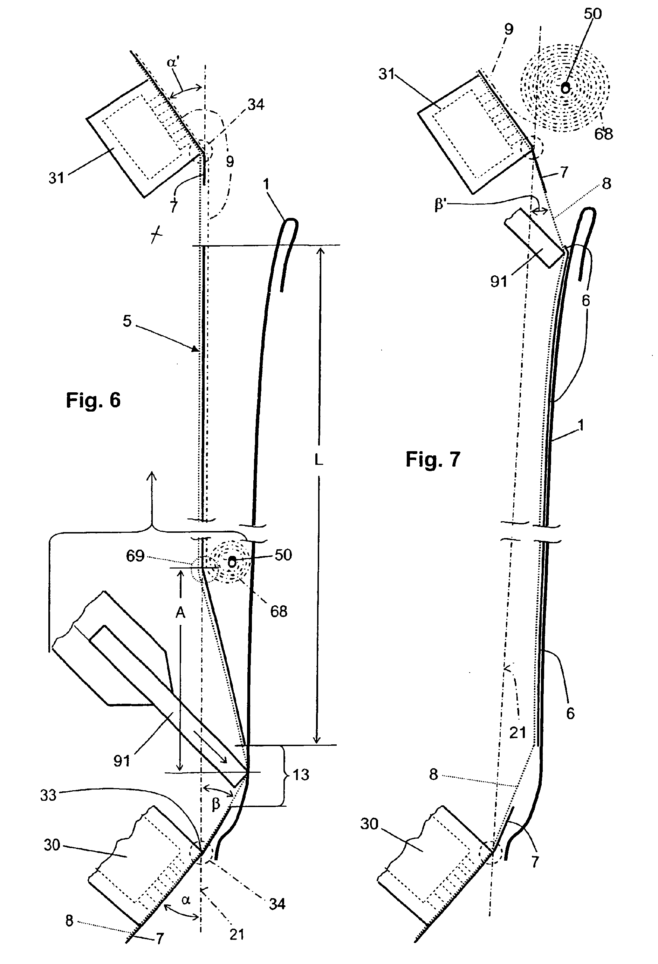

Das erfindungsgemäße Verfahren zum automatisierten Applizieren von selbsthaftender Lackfolie auf Karosserieteile setzt voraus, dass die zu applizierende Lackfolie in Zuschnitten 6 vorkonfektioniert ist und diese robotergerecht bereitgestellt werden. Bei dem mit Lackfolie zu überziehenden Karosserieteil kann es sich z.B. um einen im Bereich der Mittelsäule eines Fahrzeugs liegenden, vertikalen Schenkel eines Fensterrahmens einer Seitentür handeln, der hinsichtlich seiner Außenfläche eine längliche Form des Folienzuschnitts erfordert. Ein solches Karosserieteil 1 ist in den Figuren 1 und 2 strichpunktiert und in den Figuren 6, 7 und 8 in vollen Linien angedeutet. Zum Applizieren wird ein Folienzuschnitt auf der nichtklebenden Außenseite an zwei gegenüberliegend Enden mittels vakuumbeaufschlagbarer Sauggreifer erfasst, ausgespannt gehalten, in diesem Zustand über dem zu beklebenden Karosserieteil lagegenau ausgerichtet und an ihm angeklebt.

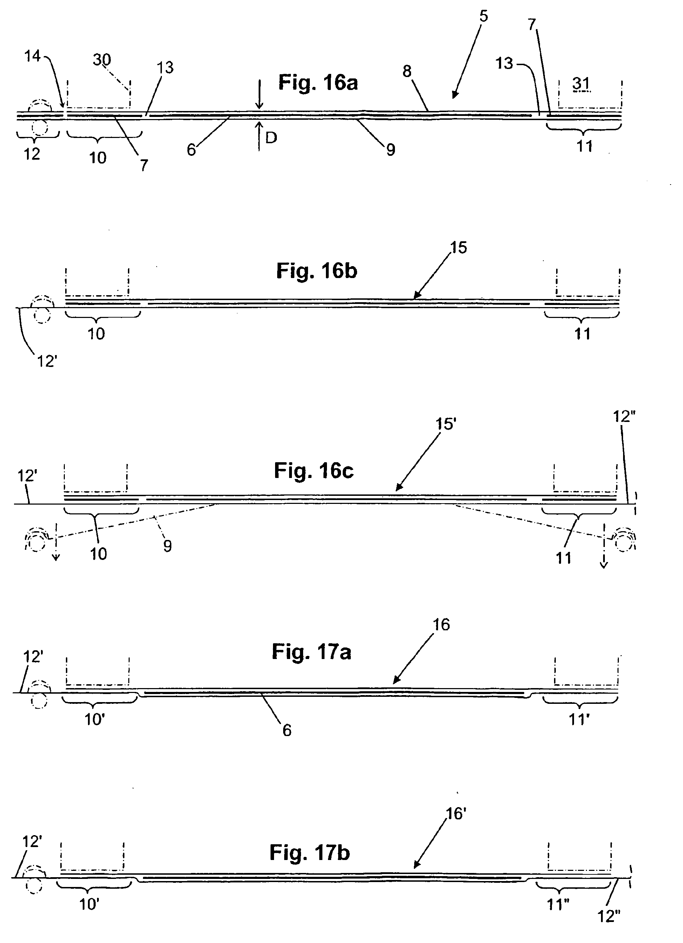

Um die vorkonfektionierten Lackfolienzuschnitte 6 transportieren und automatisiert handhaben zu können, müssen diese außen- und unterseitig jeweils mit einem anhaftenden aber leicht ablösbaren Schutzstreifen 8, 9 versehen sein, also in einem Folienverbund enthalten sein, wobei in den Zeichnungen unterschiedliche Ausführungsformen von Folienverbunden 5 (Figur 1, 2, 6 und 16a), 15 (Figur 16b), 15' (Figur 16c), 16 (Figur 17a), 16' (Figur 17b) dargestellt sind. Auf diese Varianten soll weiter unten näher eingegangen werden, zunächst sei die Beschreibung anhand des in den Figuren 1, 2 und 16a gezeigten Ausführungsbeispiels fortgesetzt. Wichtig für eine einwandfreie Handhabung und Applikation des Lackfolienzuschnitts ist, dass beide Schutzstreifen 8, 9 an den beiden, im Bereich der Schmalseiten des Zuschnitts liegenden Enden gegenüber der Nutzlänge L des Zuschnitts jeweils überstehen und dort Überstände 10 bzw. 11 bilden, an denen der Folienverbund mittels vakuumbeaufschlagbarer Sauggreifer 30 bzw. 31 festgehalten werden kann, ohne den Bereich des Lackfolienzuschnitts 6 selbst zu überdecken.

Die in Längsrichtung des Zuschnittes 6 gemessene Länge des endseitigen Überstandes 11 ist etwa auf die in Längsrichtung des Lackfolienzuschnitts 6 gemessene Aufsetzbreite b₂ des zugehörigen endseitigen Sauggreifers 31 ausgebildet. Zwar ist die Länge des anderen, startseitigen Überstandes 10 ebenfalls etwa auf die Aufsetzbreite b₁ des zugehörigen startseitigen Sauggreifers 30 ausgebildet. Jedoch ist der startseitige Überstand 10 zumindest bezüglich des unterseitigen Schutzstreifens 9 um eine bestimmte Greiflänge 1 über die genannte Aufsetzbreite b₁ hinaus verlängert, so dass noch eine Abzugsfahne 12 mit dieser Greiflänge 1 gebildet wird.

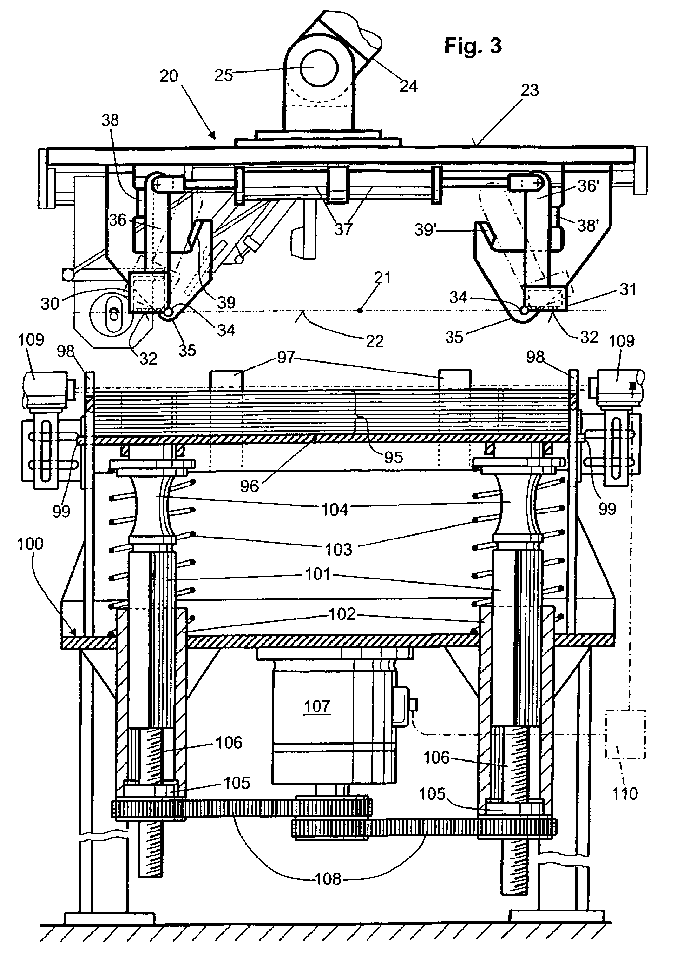

Der solcherart ausgebildete, den Lackfolienzuschnitt 6 enthaltende Folienverbund 5 wird in definierter Lage mit dem außenseitigen Schutzstreifen 8 frei zugänglich im Arbeitsbereich eines mit einem Applikationswerkzeug 20 versehenen, frei programmierbaren Industrieroboters zur Aufnahme durch das Applikationswerkzeug dargeboten. Dieses lagedefinierte Darbieten des Folienverbundes zur Übernahme durch den Handhabungsroboter kann auf unterschiedliche Weise und auch in unterschiedlicher Lage erfolgen. Wichtig dabei ist, dass zum einen die durch mechanische Anschläge o.dgl. genau definierte Position des zu übernehmenden Folienverbundes sich beim Übernehmen nicht verändert, d.h. er muss auf einer festen Unterlage dargeboten werden. Andererseits darf der Folienverbund nicht auf einer starren Unterlage aufliegen. Dies könnte bei einer nie ganz zu vermeidenden, geringfügigen Lageabweichungen zwischen Unterlage und Aufnahmeebene 21 der Sauggreifer 30, 31 des Applikationswerkzeuges 20 zu bleibenden Druckstellen auf der zu applizierenden Lackfolie führen. Auf diesen Punkt sei weiter unten im Zusammenhang mit Figur 3 näher eingegangen. An dieser Stelle sei lediglich bemerkt, dass die Folienverbunde 5 bevorzugt in Horizontallage gestapelt dem Applikationswerkzeug zur Übernahme dargeboten werden. Damit die Folienverbunde sich bis in die Überstände hinein glatt stapeln lassen und im Stapel eben liegen, ist im Bereich der Überstände 10 und 11 zwischen beiden Schutzstreifen 8, 9 jeweils eine der Stärke der Lackfolie 6 entsprechende Stützfolie 7 zwischengefügt, so dass der Folienverbund 5 - abgesehen von gewissen Unterbrechungen - auf seiner gesamten Länge dreilagig ausgebildet ist und eine gleichmäßige Dicke D aufweist. Die Dicke der einzelnen Lagen des Folienverbundes ist mit Rücksicht auf eine deutlichere Darstellbarkeit in Figur 1 übertrieben groß dargestellt.

An dem Applikationswerkzeug 20 sind auf dessen Arbeitsseite 22 zwei Sauggreifer 30, 31 vorgesehen, die mit ihren saugwirksamen Aufnahmeflächen 32 in einer einheitlichen Aufnahmeebene 21 liegen. Sie entsprechen nach Lage und Größe den erwähnten Überständen 10 und 11 des Folienverbundes 5. Entsprechend dem startseitigen und dem endseitigen Überstand sollen die Sauggreifer "startseitiger Sauggreifer" 30 und "endseitiger Sauggreifer" 31 genannt werden. Beide Sauggreifer können mit ihrer saugwirksamen Aufnahmeflächen am oberseitigen Schutzstreifen 8 im Bereich der beiden Überstände 10, 11 aufgesetzt und dann mit Vakuum beaufschlagt werden, wodurch der aufzunehmende Folienverbund aus der dargebotenen Lage in das Applikationswerkzeug übernommen wird.

Beim Handhaben des Folienverbundes 5 während des Applikationsvorganges besteht die Gefahr, dass der Folienverbund von der saugwirksamen Aufnahmeflächen 32 der Sauggreifer - beginnend von der dem Lackfolienzuschnitt jeweils zugekehrt liegenden Begrenzungskante 33 bzw. 33' her - abgehoben wird, Falschluft in das Innere der Sauggreifer eingeschnüffelt und dadurch der oder die Sauggreifer zumindest partiell belüftet wird bzw. werden. Die Festhaltekraft der Sauggreifer würde sehr stark verringert oder gar ganz beseitigt werden. Um dies zu verhindern, werden beide Sauggreifer 30, 31 im Anschluß an die Übernahme des Folienverbundes 5 aus der Aufnahmeebene 21 heraus um jeweils einen bestimmten Winkel α, α', verschwenkt. Die Überstände 10, 11 des aufgenommenen und ausgespannt gehaltenen Folienverbundes 5 ragen dann schräg und angenähert spiegelbildlich zueinander von der Aufnahmeebene 21 in Richtung zur Rückseite 23 des Applikationswerkzeuges hin ab, wie dies in den Figuren strichpunktiert angedeutet ist. Aufgrund geeigneter konstruktiver Vorkehrungen der Sauggreifer 30 und 31 und ihrer Schwenklagerung muss aber sichergestellt werden, dass die Zugspannung in dem aufgenommenen Folienverbund durch die Schwenkbewegung allenfalls in vernachlässigbarer Weise verändert wird. Darauf soll weiter unten im Zusammenhang mit der Beschreibung der einzelnen Alternativen des Applikationswerkzeuges 20, 20' und 20" noch näher eingegangen werden. An dieser Stelle sei lediglich erwähnt, dass die Größe des Schwenkwinkels α, α' der Sauggreifer 30, 31 größer ist als der größte, während des Applikationsvorganges auftretende Winkel β zwischen Folienverbund 5 einerseits und Verbindungslinie zwischen den beiden in der Aufnahmeebene 21 liegenden Begrenzungskante 33, 33' der gegenüberliegenden Sauggreifer andererseits (vgl. Figur 6). Was die absolute Größe der Schwenkwinkel α, α' der Sauggreifer anlangt, so kann in diesem Zusammenhang ein Schwenkwinkel im Bereich von 10 bis 60°, vorzugsweise 15 bis 45° empfohlen werden.

Vorbereitend für das Applizieren der Lackfolie wird der unterseitige Schutzstreifen 9 vom Lackfolienzuschnitt abgezogen, wofür anfänglich die Abzugsfahne 12 am startseitigen Überstand 10 verwendet wird. Diese Abzugsfahne wird von einem innerhalb des Applikationswerkzeuges beweglichen Greifwerkzeug 50 erfasst und so der unterseitige Schutzstreifen 9 vom Folienverbund abgezogen, wobei bei dem in den Figuren 1, 2, 6 und 16a dargestellten Ausführungsbeispiel am startseitigen Überstand 10 begonnen und fortschreitend die gesamte Klebeseite des Lackfolienzuschnittes 6 freigelegt wird.

Im Zusammenhang mit dem Abziehen des unterseitigen Schutzstreifens 9 vom Folienverbund ist es zum einen möglich, diesen vor dem Applikationsvorgang vollständig vom Folienverbund abzuziehen und erst dann mit dem Applizieren der Lackfolie zu beginnen, wofür es wiederum unterschiedliche, weiter unten im Zusammenhang mit der Beschreibung der Figuren 16b, 16c und 17a, 17b beschriebene Möglichkeiten gibt. Mit Rücksicht auf die Gefahr, dass durch das Abziehen des unterseitigen Schutzstreifens im verbleibenden Folienverbund ein elektrostatisches Potential freigesetzt wird, das Partikel aus der Umgebung an die freiliegende, klebewirksame Seite der Lackfolie 6 anziehen und diese dort festhalten kann, ist es ratsam, die Zeitspanne zwischen Abziehen des Schutzstreifens 9 und Aufkleben der Lackfolie 6 auf das Karosserieteil 1 möglichst kurz zu halten und nur möglichst geringe Ortsveränderung des verbleibenden Folienverbundes während dieser Zeit durchzuführen. Dieses Ziel wird am besten erreicht, wenn der unterseitige Schutzstreifen erst während des Applikationsvorganges, d.h. applikationssimultan abgezogen wird. Erfolgt das Aufkleben der Lackfolie 6 auf das Karosserieteil 1 unmittelbar nach dem Abziehen des Schutzstreifens 9, so kann die Lackfolienapplikation im normalen Fabrikumfeld - anstatt der ansonsten eventuell notwendigen Reinraumbedingungen - durchgeführt werden.

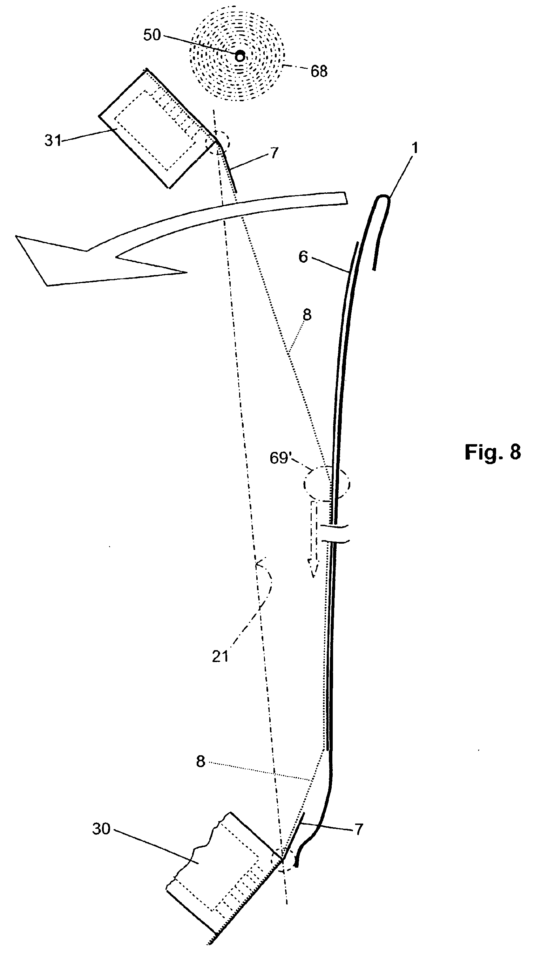

Nachdem der unterseitige Schutzstreifen zumindest partiell von dem im Applikationswerkzeug 20 ausgespannt gehaltenen Folienverbund 5 abgezogen ist, wird dieser mit dem Lackfolienzuschnitt 6 in geringem Abstand zu der zu beklebenden und lagedefiniert und unnachgiebig festgehaltenen Karosseriepartie 1 lagerichtig ausgerichtet. Anschließend wird der Lackfolienzuschnitt 6 durch eine innerhalb des Applikationswerkzeuges 20 längsbewegliche und flexible Rakel 90, 91 aus der ausgespannten Abstandslage heraus auf die zu beklebende Karosseriepartie 1 aufgerakelt. Schließlich wird der oberseitige Schutzstreifen 8 aufgrund einer Abzugbewegung des Applikationswerkzeuges 20, insbesondere des endseitigen Sauggreifers 31, von der Außenseite des vollständig applizierten Lackfolienzuschnittes 6 abgezogen. Dazu wird das Applikationswerkzeug 20 um eine in der Nähe des startseitigen Sauggreifers 30 liegende virtuelle Schwenkachse von der Karosserieoberfläche 1 weggeschwenkt, wie dies in Figur 8 durch den in vollen Linien gezeigten Pfeil angedeutet ist. Stattdessen oder zusätzlich dazu kann das Applikationswerkzeug 20 in Richtung zum startseitigen Ende des Lackfolienzuschnitts 6 hin bewegt werden. Aufgrund der einen und/oder der anderen dieser Bewegungen des Applikationswerkzeuges zieht der endseitige Sauggreifer 31 den äußeren Schutzstreifen 8 vom vollständig auf dem Karosserieteil 1 applizierten Lackfolienzuschnitt 6 ab.

Für das vorteilhafte applikations-simultane Abziehen des unteren Schutzstreifen 9 während des Applikationsvorganges wird der untere Schutzstreifen 9 zunächst nur partiell vom Folienverbund abgezogen und die Klebeseite des Lackfolienzuschnittes 6 nur teilweise freigelegt. Das weitere Abziehen des Schutzstreifens 9 und das Freigelegen der Klebeseite des Lackfolienzuschnittes 6 erfolgt dann entsprechend dem Voranschreiten des Aufrakelns des Lackfolienzuschnittes 6 auf das Karosserieteil. Hierbei wird der Lackfolienzuschnitt 6 nur in einer einzigen Richtung und mit nur einer Rakel 90, 91 auf das Karosserieteil 1 aufgerakelt.

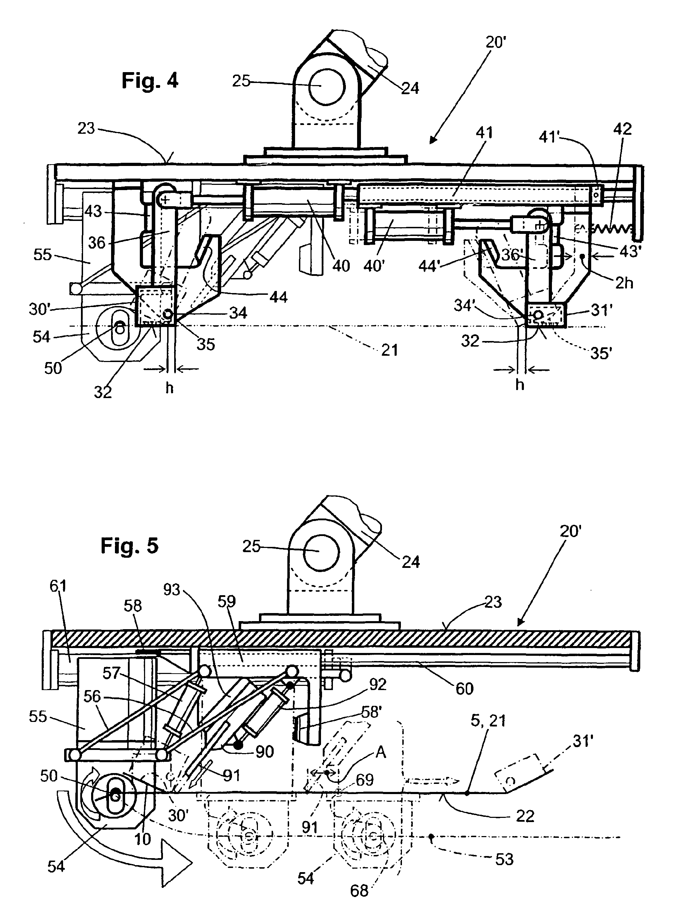

Bei diesem applikations-simultanen Abziehen des unteren Schutzstreifens 9 wird ein annähernd konstanter Abstand A (siehe Figur 5 oder 6) zwischen der voranschreitenden Abzugsstelle 69 des abzuziehenden Schutzstreifens einerseits und der nachfolgenden, ebenfalls voranschreitenden Rakel 90, 91 andererseits eingehalten. Um dieses mit einem einfachen und kompakt bauenden Applikationswerkzeug durchführen zu können, erfolgt das Abziehen des unteren Schutzstreifens 9 durch Überlagerung einer translatorischen Linearbewegung einer Wickeleinrichtung einerseits mit der rotatorischen Wickelbewegung der Wickeleinrichtung andererseits. Die den abgezogenen Schutzstreifen 9 aufwickelnde Wickeleinrichtung wird mit einer mit der Geschwindigkeit der Rakel übereinstimmenden Geschwindigkeit während des Wickelns translatorisch weiterbewegt. Außerdem wird der Schutzstreifen 9 durch den Wickelvorgang - für sich betrachtet - mit einer der Umfangsgeschwindigkeit des Wickels entsprechenden Geschwindigkeit abgezogen, die so eingestellt werden muss, dass sie mit Geschwindigkeit der Rakel 90, 91 übereinstimmt. Translationsgeschwindigkeit und Wickelgeschwindigkeit überlagern sich dabei.

Zur Verhinderung unzulässig großer Dehnungen im Folienverbund 5 und insbesondere im Lackfolienzuschnitt 6 vor allem gegen Ende des Aufrakelvorganges wird der endseitige Sauggreifer 31 an die zu überklebene Karosserieoberfläche 1 angenähert (siehe Figur 7). Zugleich kann der vom endseitigen Sauggreifer 31 erfasste endseitige Überstand 11 des Folienverbundes 5 in dieser Phase nachgleiten gelassen werden, was durch ein gezieltes, im Sinne einer geringeren Haltekraft wirksames Absenken des Vakuums im endseitigen Sauggreifer 31 erfolgen kann.

Wichtig für ein gutes Haften der applizierten Lackfolie auf der Karosserie ist, dass der Lackfolienzuschnitt 6 während des Applikationsvorganges mit einem sehr hohen Liniendruck aufgerakelt wird. Und zwar sollte dieser im Bereich von 10 bis 50 N/cm, vorzugsweise von 20 bis 30 N/cm liegen.

Es ist nicht so einfach, einerseits so hohe Liniendrücke ausüben zu können, andererseits aber trotz einer leichten Wölbung oder Neigung der zu überklebenden Karosserieoberfläche einen über die gesamte Rakelbreite möglichst gleichmäßig hohen Liniendruck verwirklichen zu können. Außerdem sollen trotz der hohen Liniendrücke keine Druckstellen auf der zu applizierenden Lackfolie verbleiben. Um dem allem Rechnung zu tragen, wird der Lackfolienzuschnitt 6 mit einer Rakel 91 aus einem harten Filz von etwa 10 bis 20 mm Stärke aufgerakelt.

Ausgehend von einer lagegenau über der zu applizierenden Stelle des Karosserieteils ausgerichteten, in geringem Abstand zu ihr gehaltenen Position des Lackfolienverbundes (siehe z.B. Figur 6) wird die Rakel 91 auf den Folienverbund aufgesetzt und innerhalb des Applikationswerkzeuges unter starker Anpressung dem Folienverbund entlanggeführt, wobei das Applikationswerkzeug in Längsrichtung des Lackfolienzuschnittes ortsfest über dem Karosserieteil verharrt. Hierbei wird die Klebeseite der Lackfolie 6 mit hohem Liniendruck auf die Karosserieoberfläche aufgerakelt und dabei kleinste Gaseinschlüsse aus der Klebefuge voranschreitend herausgedrückt. Auch zunächst adhäsiv an der freigelegten Klebeschicht gebundene Luft wird aufgrund des hohen Liniendruckes der Rakel ausgequetscht. Dadurch haftet die Lackfolie nicht nur sehr fest an der Karosserieoberfläche, sondern es kann auch nicht zu einem nachträglichen Sammeln von mikrofeinen Gaseinschlüssen zu sichtbaren Gasblasen kommen, weil - wie gesagt - keinerlei Gaseinschlüsse mehr in der Klebefuge zurückbleiben.

Eine Besonderheit der Lackfolienapplikation auf vertikale Rahmenschenkel von Pkw-Seitentüren besteht darin, dass nach dem ordnungsgemäßen Aufkleben des Lackfolienzuschnitts auf die Flachseite des Rahmenschenkels deren überstehenden seitlichen Ränder umgebugt und rückseitig angedrückt werden müssen. Dies kann, so lange dafür noch kein Roboterwerkzeug bereitgestellt ist, in herkömmlicher Weise manuell, u.U. unter Zuhilfenahme von besonderen Handwerkszeugen zum rückseitigen Andrücken vorgenommen werden.

### Der automationsgerecht gestaltete Lackfolienverbund

Nach der grundsätzlichen Erläuterung des Verfahrens zur automatischen Lackfolienapplikation seien, bevor weiter unten auf Einzelheiten bei der Gestaltung des Applikationswerkzeugs 20, 20', 20" eingegangen wird, zunächst noch verschiedene Merkmale und/oder Varianten eines automationsgerecht gestalteten Folienverbundes anhand der Figuren 16a, b, c und der Figuren 17a, b behandelt, soweit dies nicht im Zusammenhang mit der Beschreibung des Applikationsverfahrens bereits geschehen ist. In den Zeichnungen sind unterschiedliche Ausführungsbeispiele von Folienverbunden dargestellt, die nachfolgend zunächst bezüglich ihrer übereinstimmenden Merkmale behandelt werden sollen.

Der äußere Schutzstreifen 8 ist mit einer mäßig stark klebenden Haftklebeschicht versehen, so dass er sich ohne große Kraft und vor allem rückstandsfrei von der Lackfolie 6 abzieher lässt. Der untere Schutzstreifen 9 ist hingegen mit einer Antihaftbeschichtung versehen, so dass er sich ebenfalls leicht und ohne einzureißen oder sich lagenweise abzuschälen von der sehr stark klebenden Haftklebeschicht der Lackfolie 6 abziehen lässt. Es ist angestrebt, dass der untere Schutzstreifen 9 sich bei einem engen Abwinkeln, d.h. aufgrund eines Biegens desselben um einen engen Biegeradius bereits selbsttätig von der Klebeseite des Lackfolienzuschnitts 6 löst. Jedenfalls soll sich der untere Schutzstreifen 9 leichter von der Klebeseite der Lackfolie bzw. der Stützfolie ablösen lassen, als sich der äußere Schutzstreifen 8 von der Außenseite der Lackfolie lösen lässt.

Im Zusammenhang mit der Beschreibung des oben behandelten Applikationsverfahrens wurde der Folienverbund 5 gemäß Ausführungsbeispiel nach den Figuren 1, 2, 6 und 16a zugrunde gelegt. Dieser Folienverbund 5 hat mit den anderen Ausführungsbeispielen der Figuren 16b, 16c, 17a und 17b das Merkmal gemeinsam, dass sowohl startseitige als auch endseitige Überstände 10 und 11 (Figuren 16a, 16b und 16c) bzw. Überstände 10' und 11' (Figuren 17a und 17b) vorgesehen sind, an denen der Folienverbund außerhalb des Lackfolienzuschnitts 6 festgehalten werden kann. Zwischen den äußeren und den unteren Schutzstreifen 8 bzw. 9 im Bereich der Überstände 10 und 11 ist eine in der Dicke entsprechend der Lackfolie bemessene Stützfolie 7 eingefügt, so dass die Folienverbunde 5, 15 und 15' im Bereich dieser Überstände 10 und 11 die gleiche Dicke D wie im Bereich des Lackfolienzuschnitts 6 aufweist. Die Folienverbunde 5, 15 und 15' sind demgemäß für ein gestapeltes Darbieten besonders gut geeignet. Demgegenüber ist bei den Folienverbunden 16 und 16' nach den Figuren 17a und 17b im Bereich der Überstände 10' und 11" in kostengünstiger Weise auf eine Stützfolie verzichtet. Diese Folienverbunde lassen sich bei größerer Stückzahl zwar nicht besonders flach und eben aufstapeln, jedoch mögen sie bei geringer Stückzahl im Stapel noch ausreichend flach und eben liegen. Bei Fertigungen mit geringer Losgröße je Schicht mag diese Art von Folienverbund durchaus brauchbar sein.

Bei allen drei Folienverbunden 5, 15 und 15' (Ausführungsbeispiel nach den Figuren 16a, 16b, 16c) kann die Stützfolie 7 identisch mit der Lackfolie 6 ausgebildet sein. Jedenfalls sollte die Stützfolie vom nutzbaren Teil des Lackfolienzuschnitts 6 durch eine Unterbrechung 13 getrennt sein, damit sie sich ohne weiteres von der Lackfolie 6 löst.

Im Zusammenhang mit den Figuren 1, 2, 6 und 16a sei noch erwähnt, dass bei diesem Ausführungsbeispiel nicht nur in den beiden Überständen 10 und 11, sondern auch in der hier ausschließlich am startseitigen Ende vorgesehenen Abzugsfahne 12 jeweils eine im Vergleich zur Lackfolie 6 gleichstarke Stützfolie 7 zwischen dem äußeren (8) und dem unterseitigen Schutzstreifen 9 eingefügt ist. Von kleinen Unterbrechungen 13 und 14 abgesehen ist der Folienverbund 5 auf der gesamten Länge, also auch bis in die Abzugsfahne 12 hinein, dreilagig ausgebildet. Dadurch ergibt sich eine über die gesamte Länge des Folienverbundes 5 gleichmäßige Dicke D, so dass diese Folienverbunde sich auch in größerer Stückzahl flachliegend und eben aufstapeln lassen.

Zur Sicherstellung der Abzugsfunktion der Abzugsfahne 12 beim Folienverbund 5 ist nur der unterseitige Schutzstreifen 9 bis in die Abzugsfahne 12 hinein durchgehend ausgebildet, wogegen der außenseitige Schutzstreifen 8 und die Stützfolie 7 entlang einer Querlinie lokal auf der ganzen Breite des Folienverbundes 5 mit einem schmalen Schlitz 14 versehen sind. Dieser Schlitz verläuft quer zur Längsrichtung des Folienverbundes 5 entlang einer Linie, die im Bereich zwischen dem startseitigen Überstand 10 und der Abzugsfahne 12 liegt.

Das Ausführungsbeispiel des Folienverbundes 15 nach Figur 16b unterscheidet sich von dem nach Figur 16a lediglich durch die Ausbildung der Abzugsfahne 12', die beim Folienverbund 15 einlagig ausgebildet ist und integraler Bestandteil des unteren Schutzstreifens 9 ist. Nachdem der Folienverbund beim Aufstapeln nur im Bereich des Lackfolienzuschnitts und der Überstände 10 und 11 flach und eben zu liegen braucht, kann die Abzugsfahne 12' innerhalb des Stapels von Folienverbunden ohne weiteres etwas herab hängen. Sobald ein Folienverbund in das Applikationswerkzeug aufgenommen worden ist, ragt die zugehörige Abzugsfahne 12' in den Bereich des in Figur 16b strichpunktiert angedeuteten Greifwerkzeuges einer im Applikationswerkzeug integrierten Abzugsvorrichtung; die Abzugsfahne 12' kann von diesem Greifwerkzeug trotz eines gewissen Herabhängens sicher erfasst werden.

Bei dem in Figur 16c dargestellten Folienverbund 15' ist nicht nur am (dreilagigen) startseitigen Überstand 10 eine (einlagige) Abzugsfahne 12' vorgesehen, sondern auch am äußersten Ende des endseitigen Überstandes 11 ist eine Abzugsfahne 12" angeordnet; beide Abzugsfahnen sind Teil des unteren Schutzstreifens 9. Diese Art der Ausbildung des Folienverbundes 15' ist für ein vollständiges Entfernen des unteren Schutzstreifens 9 vom Folienverbund vor der Applikation des Lackfolienzuschnitts vorgesehen. Dieses vollständige Abziehen des unteren Schutzstreifens kann innerhalb des Applikationswerkzeuges vorgenommen werden, indem die beiden Abzugsfahnen 12' und 12" des im Applikationswerkzeug aufgenommenen Folienverbundes 15' durch bewegliche, im Applikationswerkzeug integrierte Greifwerkzeuge erfasst und quer zur Aufnahmeebene vom festgehaltenen Folienverbund weg bewegt werden, wie dies in Figur 16c strichpunktiert angedeutet ist. Sobald der untere Schutzstreifen 9 vollständig vom Folienverbund gelöst ist, kann der abgezogene Schutzstreifen durch Öffnen der Greifwerkzeuge in einen Abfallbehälter abgeworfen werden. Der Vorteil des Folienverbundes 15' bzw. des vorherigen vollständigen Entfernens des unteren Schutzstreifens 9 vor dem Applizieren der Lackfolie besteht darin, dass das Applikationswerkzeug wesentlich einfacher gestaltet werden kann im Vergleich zu einem solchen, bei dem der untere Schutzstreifen während des Applikationsvorganges entfernt wird. Unter Reinraum-Bedingungen, die heutigentags vielfach in Lackieranlagen für Automobile geschaffen sind, erscheint diese Arbeitsweise u.U. durchaus vertretbar.

Das in Figur 17a dargestellte, weitere Ausführungsbeispiel eines Folienverbundes 16 entspricht, abgesehen von den zweilagig, d.h. ohne eingelagerte Stützfolie ausgebildeten Überständen 10' und 11', weitgehend dem in Figur 16b gezeigten Folienverbund. Lediglich im Bereich des Lackfolienzuschnitts 6 selber ist der Folienverbund 16 dreilagig ausgebildet. Die eine startseitig angebrachte Abzugsfahne 12' ist einlagig ausgebildet. Dieser Folienverbund 16 ist wegen des Verzichts auf die zwischengefügten Stützfolien besonders preisgünstig, lässt sich allerdings in größeren Anzahl nicht bis in den Bereich der Überstände 10' und 11' eben und flachliegend aufstapeln. Bei kleinen Zahlen von Folienverbunden 16 innerhalb eines Stapels mag aber dennoch ein sicheres und lagegenaues Übernehmen eines Folienverbundes in das Applikationswerkzeug möglich sein. Nachdem beim Folienverbund 16 lediglich am startseitigen Ende eine (einlagige) Abzugsfahne 12' vorgesehen ist, ist dieser Folienverbund für ein applikations-simultanes Entfernen des unteren Schutzstreifens geeignet, wie es weiter oben im Zusammenhang mit den Figuren 1 bis 3 und 5 bis 8 bereits beschrieben worden ist.

Das letzte, in Figur 17b gezeigte Ausführungsbeispiel eines Folienverbundes 16' unterscheidet sich von dem nach Figur 17a dadurch, dass - ähnlich wie beim Folienverbund nach Figur 16c - auch am hinteren Ende des Folienverbundes 16' eine (einlagige) Abzugsfahne 12" vorgesehen ist. Dieser Folienverbund 16' ist also für ein vollständiges Entfernen des unteren Schutzstreifens 9 vom Folienverbund innerhalb des Applikationswerkzeuges vor dem Applizieren des Lackfolienzuschnitts geeignet.

### Das automationsgerechte Applikationswerkzeug

### Übereinstimmung der Varianten

Was die maschinenbauliche Vorrichtung zum automatisierten Applizieren selbsthaftender Lackfolien auf Karosserieteile anlangt, so ist hier vor allem das bereits mehrfach erwähnte Applikationswerkzeug zu nennen, welches in den Zeichnungen in verschiedenen Ausführungsbeispielen 20, 20' und 20" dargestellt ist. Das Applikationswerkzeug ist ungeachtet der einen oder anderen Ausführung mit seiner Rückseite 23 am Handgelenk 25 des Arbeitsarmes 24 eines frei programmierbaren Industrieroboters angebracht und durch ihn frei im Raum handhabbar. An der gegenüberliegenden Flachseite des Applikationswerkzeuges, nämlich an der Arbeitsseite 22, sind zwei gezielt mit Vakuum beaufschlagbare bzw. belüftbare Sauggreifer 30 und 31 im Abstand zueinander angeordnet. Mit ihnen kann der vorkonfektionierte, in einem automationsgerecht ausgebildeten Folienverbund enthaltene Lackfolienzuschnitt 6 außenseitig an zwei gegenüberliegenden Enden erfasst, ausgespannt gehalten und in diesem Zustand durch den Industrieroboter bzw. das Applikationswerkzeug nicht nur frei gehandhabt sondern auch an das Karosserieteil 1 lagegenau appliziert werden.

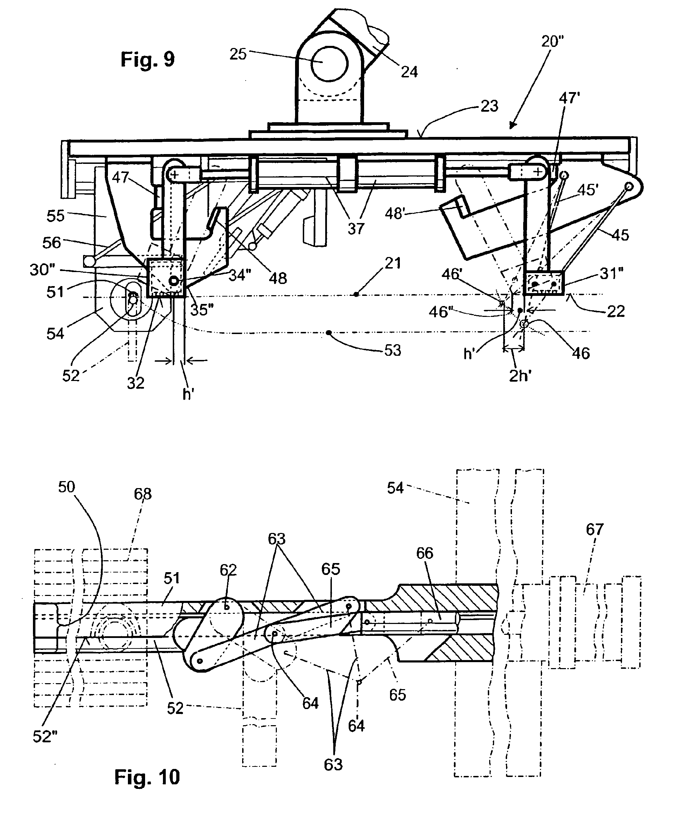

Zunächst sei auf die Übereinstimmungen der verschiedenen Applikationswerkzeuge 20 (Figuren 1-3 und 5-8), 20' (Figur 4) und 20" (Figur 9) eingegangen. In allen drei Ausführungsbeispielen sind die beiden Sauggreifer 30 und 31, 30' und 31' bzw. 30" und 31" jeweils schwenkbar im Applikationswerkzeug gelagert und mit einem Schwenkantrieb 37, 40, 40' versehen. Dadurch können die Sauggreifer mit ihrer saugwirksamen Aufnahmefläche 32 in eine einheitliche Aufnahmeebene 21 - Aufnahmestellung - zur Übernahme eines flach-eben bereitgelegten Lackfolienverbundes 5 einerseits oder in eine annähernd spiegelbildlich zueinander liegende Arbeitsstellung andererseits eingeschwenkt werden. In der geschwenkten Arbeitsstellung ragen die saugwirksamen Aufnahmeflächen 32 von der Aufnahmeebene 21 schräg, d.h. unter einem Winkel α, α' in Richtung zur Rückseite 23 des Applikationswerkzeuges ab. Diese Schwenkbewegung der Sauggreifer dient zur Sicherung eines festen Haltes der erfassten Überstände 10 bzw. 11 des Folienverbundes an den Sauggreifern trotz eines V-förmigen Eindrückens des ausgespannten Folienverbundes aus der Aufnahmeebene während des Applikationsvorganges - siehe z.B. Winkel β in Figur 6. Die Schwenkbarkeit der Sauggreifer ist konstruktiv derart ausgebildet, dass die Zugspannung in dem aufgenommenen Folienverbund durch eine Schwenkbewegung der Sauggreifer 30, 31 allenfalls in vernachlässigbarer Weise verändert wird. D.h. die einander zugekehrt liegenden Begrenzungskanten 33 und 33' der saugwirksamen Aufnahmeflächen 32 dürfen nach dem Verschwenken der Sauggreifer keinen anderen gegenseitigen Abstand haben als vor dem Verschwenken. Bezüglich der konstruktiven Lösung dieses Problems unterscheiden sich die verschiedenen Ausführungsbeispiele der Applikationswerkzeuge voneinander, worauf aber erst weiter unten näher eingegangen werden soll.

Im Zusammenhang mit den Übereinstimmungen der verschiedenen Applikationswerkzeuge 20, 20' und 20" seien noch die Schwenkhebel 36, 36', an denen die Schwenkantriebe 37 (Figuren 3 und 9) sowie 40 und 40' (Figur 4) angreifen, und ferner die zugehörigen, für die Aufnahme- bzw. die Arbeitsstellung der Sauggreifer maßgebenden, vorzugsweise einstellbaren Anschläge erwähnt. Beim Applikationswerkzeug 20 nach Figur 3 bestimmen die Anschläge 38 bzw. 38' die in vollen Linien dargestellte Aufnahmestellung und die Anschläge 39 bzw. 39' die strichpunktiert angedeutete Arbeitsstellung der Sauggreifer 30 bzw. 31. Die für die Aufnahmestellung der Sauggreifer 30' und 31' maßgeblichen Anschläge sind beim Applikationswerkzeuge 20' nach Figur 4 mit 43 und 43' bezeichnet, wogegen die für die Arbeitsstellung verantwortlichen Anschläge mit den Bezugszeichen 44 und 44' versehen sind. Schließlich seinen auch noch die entsprechenden Bezugszeichen für das Applikationswerkzeuge 20" mit den Sauggreifern 30" und 31" nach Figur 9 erwähnt: Anschläge 47 und 47' für die Aufnahmestellung (volle Linien) und Anschläge 48 und 48' für die Arbeitsstellung (strichpunktiert).

Benachbart zu dem Start-Sauggreifer 30, 30', 30", der den startseitigen Überstand 10 des Folienverbundes erfasst, ist bei allen dargestellten Applikationswerkzeugen ferner übereinstimmend ein parallel-verschiebbares in unterschiedlichen Ausführungen dargestelltes Greifwerkzeug 50, 50', 80, 80' angeordnet. Dieses Greifwerkzeug ist so beweglich gelagert und mit einem entsprechenden Bewegungsantrieb versehen, dass es zum einen aufnahmebereit an die Aufnahmeebene 21 neben dem Start-Sauggreifer heran bewegt werden kann - Startposition. Zum anderen kann das Greifwerkzeug aus dieser Startposition unter die Aufnahmeebene 21 in eine Arbeitsebene 53 des Greifwerkzeuges und innerhalb dieser Arbeitsebene parallel dazu und parallel zu sich selber verfahren werden. Auf die näheren Einzelheiten des Greifwerkzeuges selber soll weiter unten im Zusammenhang mit den einzelnen diesbezüglichen Ausführungsbeispielen eingegangen werden. An dieser Stelle sei lediglich vermerkt, dass in allen gezeigten Ausführungsbeispielen die Greifwerkzeuge drehbar gelagert und mit einem entsprechenden Drehantrieb gekoppelt sind und als Wickelkern für den endseitig erfassten unteren Schutzstreifen 9 dienen. Dazu ist das Greifwerkzeug in einem seitenversetzt neben den Sauggreifern 30 und 31 angeordneten Winkelgetriebe 54 drehbar gelagert, von dem es axial frei abragt. Das Greifwerkzeug kann zum Aufwickeln über den Antriebsmotor 55 gezielt in Drehung versetzt werden.

Die konstruktive Gestaltung der beweglichen Führung des Greifwerkzeuges ist bei den verschiedenen Ausführungsbeispielen von Applikationswerkzeugen übereinstimmend dargestellt; sie ist am besten in Figur 5 erkennbar. In dem dort gezeigten Ausführungsbeispiel ist das Greifwerkzeug als drehbar gelagerte Schnabelzange 50 ausgebildet, mit der der endseitig ergriffene Schutzstreifens 9 zugleich auch aufgewickelt werden kann.

Der aus Winkelgetriebe 54 und Motor 55 bestehende Antriebsblock des Greifwerkzeuges ist mittels Parallelogrammlenker 56 an einem Schlitten 59 angekoppelt, so dass der Antriebsblock bzw. die Schnabelzange auf einem Kreisbogen translatorisch aus der in Figur 5 in vollen Linien dargestellten Startposition in die strichpunktiert angedeutete Arbeitsposition verschoben werden kann. In der Startposition - sie ist durch den am Schlitten 59 befestigten Anschlag 58 bestimmt - liegt die Schnabelzange mit ihrem Zentrum auf dem Niveau der Aufnahmeebene 21 des Applikationswerkzeuges. Demgegenüber befindet sich die Schnabelzange nach Überführung in ihre Arbeitsposition in der Arbeitsebene 53 unterhalb der Aufnahmeebene. Die Arbeitsposition wird durch den ebenfalls am Schlitten 59 befestigten Anschlag 58' bestimmt. Zum Verschieben des Antriebsblocks bzw. der Schnabelzange von der Startposition in die Arbeitsposition und umgekehrt ist ein Verschiebeantrieb 57 in Form eines Arbeitszylinders vorgesehen, der bei dem dargestellten Ausführungsbeispiel zwei diagonal gegenüberliegende Gelenkpunkte des Gelenkvierecks verbindet, das durch die beiden Parallelogrammlenker 56 und deren Gelenke aufgespannt ist. Der Schlitten 59 ist auf Führungsstangen 60 parallel zur Aufnahmeebene 21 beweglich geführt. Durch einen am Applikationswerkzeug befestigten Verschiebeantrieb 61 in Form eines Arbeitszylinders, dessen Kolbenstange mit dem Schlitten 59 gekoppelt ist, kann der Schlitten bzw. die Schnabelzange parallel zur Arbeitsebene 21 verschoben werden. Der Verschiebeweg des Schlittens 59 entspricht mindestens der Länge L des zu applizierenden Lackfolienzuschnitts 6.

Mit Rücksicht auf diese nicht unbeträchtliche Länge L des erforderlichen Verschiebeweges des Schlittens 59 wird die in den Figuren horizontal liegende, bauliche Länge des Applikationswerkzeuges besonders groß, weil nämlich nicht nur der genannte Verschiebeweg bzw. die Führungsstangen 60, sondern - zumindest bei den dargestellten Ausführungsbeispielen - zusätzlich auch noch die Länge eines entsprechend langen Arbeitszylinders als Verschiebeantrieb 61 für den Schlitten 59 auf dem Applikationswerkzeug untergebracht werden müssen. Bei sehr langen zu applizierenden Lackfolienzuschnitten, z.B. solchen, die über die Breite des Karosseriedaches appliziert werden müssen, kann es daher u.U. zweckmäßig sein, den Verschiebeantrieb des Schlittens als Spindelantrieb auszubilden, wobei die Spindel platzsparend zwischen den Führungsstangen angeordnet werden kann.

Was die Lage des Greifwerkzeuges bzw. der Schnabelzange in Bezug auf die räumliche Tiefe relativ zur Zeichenebene der verschiedenen Darstellungen der Applikationswerkzeuge anlangt, so sei bemerkt, dass die Schnabelzange in dem gleichen Bereich liegt, in dem auch die bereits erwähnten Sauggreifer 30, 31 und der von ihnen aufgenommene Folienverbund liegen. Im gleichen Bereich befindet sich auch die weiter unten beschriebene, ebenfalls vom Schlitten 59 getragene Rakel 90, mit der die Lackfolie auf die Karosserie aufgerakelt wird. Der Antriebsblock 54/55 zum Verdrehen des Greifwerkzeuges muss daher in einer Ebene jenseits von Greifwerkzeug, Sauggreifer, Folienverbund und Rakel liegen.

Grundsätzlich wäre es auch denkbar, das bewegliche Greifwerkzeug zum endseitigen Erfassen des unteren Schutzstreifens und zum Abziehen desselben vom Folienverbund - abgesehen vom Wechsel des Greifwerkzeuges aus der Startposition in die Arbeitsebene 53 - nur linear innerhalb der Arbeitsebene zu verschieben und auf einen aufwändigen Drehantrieb des Greifwerkzeuges zu verzichten. Dies würde aber zumindest bei dem Wunsch nach einem applikations-simultanen Abziehen des Schutzstreifens voraussetzen, dass der Linearhub des solcherart geführten Greifwerkzeuges dem Doppelten der Länge L des zu applizierenden Lackfolienzuschnittes entspricht; außerdem müsste das solcherart geführte Greifwerkzeug mit der doppelten Geschwindigkeit wie der des Schlittens 59, der die Rakel 90/91 führt, angetrieben werden. Dies alles setzt nicht nur eine aufwändige doppelte Schlittenführung, sondern auch ganz erhebliche bauliche Längen des Applikationswerkzeuges voraus, was letzteres unnötig schwer und unhandlich macht. Deshalb ist in den dargestellten Ausführungsbeispielen das beweglich gelagerte Greifwerkzeug - wie gesagt - zugleich als Wickelvorrichtung ausgebildet, so dass es gemeinsam mit der Rackel 90/91 auf dem Schlitten 59 gehaltert und mit ihr mitbewegt werden kann, gleichwohl aber erlaubt, den unteren Schutzstreifen applikationssimultan von der Lackfolie abzuziehen.

Als weitere verfahrenswesentliche bauliche Komponente der Applikationswerkzeuge 20, 20', 20" ist die bereits erwähnte, innerhalb des Applikationswerkzeuges angeordnete Rakel 90, 91 zu nennen, die in der eigentlichen Applikationsphase in Aktion tritt. Sie ist in zweifacher Hinsicht beweglich angeordnet und mit einem entsprechenden Verschiebeantrieb versehen. Zum einen kann die Rakel mit ihrer Arbeitskante aus einer von der Aufnahmeebene 21 abgerückten, in Figur 5 in vollen Linien dargestellten Warteposition in eine nahe bei der Aufnahmeebene 21 liegende, strichpunktiert angedeutete Arbeitsposition verschoben und in der Arbeitsposition mit bestimmter Kraft an das mit der Lackfolie zu applizierende Karosserieteil 1 angepresst werden. Zu diesem Zweck ist der schlittenartige Rakelhalter 90 - wie Figur 5 am deutlichsten erkennen lässt - auf einer zur Aufnahmeebene 21 geneigten Schlittenführung 93 gelagert und mit einem entsprechenden Anstellantrieb 92 in Form eines Arbeitszylinders versehen, der auch die Anpresskraft der Rakel aufbringt. Zum anderen kann die Rakel in der Arbeitsstellung geradlinig und parallel zur Aufnahmeebene 21 verschoben werden. Um dies zu ermöglichen, ist bei dem in Figur 5 dargestellten Ausführungsbeispiel die Schlittenführung 93 ihrerseits auf dem bereits erwähnten Schlitten 59 angeordnet, der mittelbar auch den schwenkbar gehalterten Antriebsblock 54/55 für die Schnabelzange trägt. Durch den Verschiebeantrieb 61 kann der Schlitten bzw. die Rakel 91 parallel zur Arbeitsebene 21 verschoben werden, wobei die Lackfolie 6 auf das Karosserieteil 1 mit bestimmtem Liniendruck aufgerakelt wird.

Es wurde bereits erwähnt, dass die Lackfolie während der eigentlichen Applikationsphase einerseits mit sehr hohem Liniendruck aufgerakelt werden muss, dass aber andererseits die Karosserieoberfläche leicht gewölbt ist. Um gleichwohl über die gesamte Rakelbreite einen möglichst gleichmäßig hohen Liniendruck verwirklichen zu können und trotzdem keine Druckstellen auf der zu applizierenden Lackfolie zu hinterlassen, besteht die Rakel 91 aus einem harten Filz.

### Die automationsgerechte Stapelvorrichtung

Wie in Figur 3 zu erkennen, ist im Arbeitsbereich des das Applikationswerkzeug 20 handhabenden Industrieroboters eine auf einem Grundgestell 100 elastisch gelagerte, horizontale Stapelplattform 96 mit seitlichen Halte- und Führungsstegen 97, 98 angeordnete, auf der die Folienverbunde zu einem Stapel 95 aufgestapelt und so dem Applikationswerkzeug 20 horizontal liegend dargeboten werden können. Durch die seitlichen Halte- und Führungsstege 97, 98 werden die im Stapel enthaltenen Folienverbunde lagegenau übereinander ausgerichtet. Der Vollständigkeit halber sei erwähnt, dass die Stapelplattform nicht exakt horizontal ausgerichtet zu sein braucht, wenngleich diese Anordnung bevorzugt empfohlen wird. In einzelnen Fällen mag eine leichte Schräglage des Stapels durchaus sinnvoll sein.

Beim dargestellten Ausführungsbeispiel ist die unterseitig elastisch abgestützte Stapelplattform mittels seitlicher Führungszapfen in vertikalen Langlöchern in den Führungsstegen 98 geführt, so dass die Stapelplattform unter Beibehaltung ihrer definierten Position bezüglich der horizontalen Koordinaten nicht nur vertikal verschiebbar, sondern auch um eine durch die Führungszapfen 99 bestimmte Längsachse begrenzt kippbar ist. Diese Kippbarkeit ist durch die elastischen Zwischenglieder 104 zwischen den Tragsäulen 101 und der Unterseite der Stapelplattform ermöglicht. Die elastischen Zwischenglieder erlauben außerdem im Rahmen einer gewissen axialen Kompression ein begrenztes zwangloses Kippen der Stapelplattform um eine senkrecht zur Zeichenebene stehende Schwenkachse. Außerdem sind die Führungssäulen 101 in Vertikalführungen 102 beweglich und durch Hubfedern 103 in eine durch Anschläge (Verstellmuttern 105) begrenzte, obere Endstellung gespannt. Aufgrund dessen kann die Stapelplattform auch in Vertikalrichtung translatorisch nachgeben. Diese in mehrfacher Hinsicht elastische, wenn auch begrenzte Nachgiebigkeit der Stapelplattform ist wichtig für ein schonendes Aufnehmen des auf der Stapelplattform dargebotenen Folienverbundes durch das robotergeführte Applikationswerkzeug. Etwaige im Rahmen der Bewegungstoleranz des Industrieroboters liegende Lageabweichungen zwischen dem zur Übernahme dargebotenen Folienverbund einerseits und der Übernahmeposition des Applikationswerkzeuges andererseits können aufgrund dieser Nachgiebigkeit keine Beschädigungen oder Druckstellen am Folienverbund hervorrufen, weil sich die Stapelplattform einer geringfügigen Lageabweichung des Applikationswerkzeuges selbsttätig und zwanglos anpassen kann.

An sich wäre es bei der vertikalen Nachgiebigkeit der Stapelplattform denkbar, dass das Applikationswerkzeug den Folienstapel 95 oberseitig in Vertikalrichtung anfährt und mit den Sauggreifern 30 und 31 am oberen Ende des Stapels aufsetzt, wobei dieses Aufsetzen durch taktile Sensoren der verschiedensten Bauart und Anordnung detektiert werden kann. Dies hätte jedoch zu Folge, dass das Applikationswerkzeug je nach Resthöhe des Stapels eine mehr oder weniger lange Wegstrecke vor Erreichen des Stapels 95 im Kriechgang durchfahren müsste, damit die Sauggreifer nicht zu hart auf dem Stapel aufsetzen, was die Taktzeit ungünstig verlängern würde. Um dies zu vermeiden, ist die Stapelplattform 96 in der Weise höhenveränderbar gehaltert und mit einem steuerbaren Höhenverstellantrieb versehen, dass sich die Oberkante des Stapels 95 unabhängig von der Anzahl der aufgestapelten Folienverbunde stets in konstanter Höhenposition befindet.

Die kontrollierte Höhenverstellung der Stapelplattform ist bei dem in Figur 3 dargestellten Ausführungsbeispiel durch folgende bauliche Komponenten gelöst. Die Oberkante des Stapels wird durch eine höhenjustierbare Lichtschranke 109 erfasst, die zwei geringfügig höhenversetzte Lichtstrahlen mit separaten Detektoren aufweist. Im Ruhezustand der Höhenverstellung soll der untere Lichtstrahl durch den Stapel abgedunkelt sein, wogegen der obere Lichtstrahl nicht abgedunkelt sein darf. Ist der untere Lichtstrahl nicht abgedunkelt, so wird der Stapel so lange langsam angehoben, bis der untere Lichtstrahl wieder durch den Stapel abgedunkelt wird. Sind hingegen beide Lichtschranken abgedunkelt, so wird der Stapel langsam abgesenkt, und zwar so lange, bis - nur - der obere Lichtstrahl vom Stapel wieder freigegeben wird.

Das Signal der Lichtschranke wird mittelbar über ein geeignetes Steuergerät 110 an einen elektrischen Verstellmotor 107 weitergeleitet, der die Stapelplattform bedarfsweise hebt oder senkt. Zu diesem Zweck sind die verdrehgesichert in den Vertikalführungen 102 geführten Tragsäulen unterseitig mit Verstellspindeln 106 versehen. Auf diesen sind als hubbegrenzende Anschläge fungierende Verstellmuttern 105 verschraubbar, die unterseitig an die Stirnseite der Vertikalführungen 102 anschlagen und die Höhenlage der Tragsäulen 101 bestimmen. Die Tragsäulen sind durch die Hubfedern 103 ständig nach oben vorgespannt und halten die Verstellmuttern auf Anschlag. Die Verstellmuttern ihrerseits können vom Verstellmotor 107 über Zahnriemen 108 verdreht und je nach Drehrichtung der Verstellmutter die Stapelplattform angehoben bzw. abgesenkt werden.

Eine solche oder eine ähnliche elastisch begrenzt nachgiebige Stapelplattform ist auch den anderen Applikationswerkzeugen zugeordnet.

### Die grundsätzliche Arbeitsweise des Applikationswerkzeuges

Die Arbeitsweise des Applikationswerkzeuges in den Ausführungsbeispielen nach den Figuren 1 bis 9 ist nun folgende, wobei eine Vorbereitungsphase des Applikationsvorganges und die eigentliche Applikationsphase zu unterscheiden sind:

In der Vorbereitungsphase des Applikationsvorganges ergreift nach dem Aufnehmen eines Folienverbundes 5 in das Applikationswerkzeug 20 die Schnabelzange 50 die startseitig angebrachte Abzugsfahne 12 des aufgenommenen Folienverbundes. Anschließend schwenken die beiden Sauggreifer aus der in Figur 4 in vollen Linien dargestellte Aufnahmestellung in die in Figur 5 strichpunktiert dargestellte, abgewinkelte Arbeitsstellung, wobei am startseitigen Ende des Folienverbundes aufgrund der Relativbewegung des startseitigen Überstandes 30 gegenüber der zunächst noch ortsfest in der Warteposition gehaltenen Schnabelzange 50 der untere Schutzstreifen und die Stützfolie im Bereich des startseitigen Überstandes vom äußeren Schutzstreifen gelöst wird. Nun wird die Schnabelzange aus der Startposition in die Arbeitsposition bzw. in die Arbeitsebene 53 überführt, wobei zugleich der Wickelantrieb 55 eingeschaltet wird. Die Wickelgeschwindigkeit ist in dieser Phase auf die Verschiebegeschwindigkeit der Schnabelzange auf dem anfänglichen Kreisbogen in der Weise abgestimmt, dass der vom Folienverbund abgezogene Teil des unteren Schutzstreifens 9 einerseits mit einer gewissen Dichte auf die Schnabelzange aufgewickelt und andererseits eine gewisse anfängliche Strecke der Klebeseite des Lackfolienzuschnittes freigelegt wird. Die Stellung des Antriebsblockes 54/55 am Ende dieser Vorbereitungsphase des Applikationsvorganges ist in Figur 5 strichpunktiert (linke Position) angedeutet. Zumindest die letzten Vorgänge dieser Vorbereitungsphase finden vorzugsweise bereits in einer solchen Position des Applikationswerkzeuges statt, in der der Folienverbund lagerichtig in geringem Abstand vor dem Karosserieteil ausgerichtet ist. Ausgehend von der in Figur 5 links angedeuteten strichpunktiert gezeichneten Stellung des Antriebsblockes 54/55 beginnt die eigentliche Applikationsphase des Lackfolienzuschnittes.

Zu Beginn der eigentlichen Applikationsphase wird die Rakel 90/91 aus der in vollen Linien dargestellten Warteposition auf den in der Aufnahmeebene ausgespannten Folienverbund 5 in Richtung des Pfeiles abgesenkt, wobei das in dem Rakelhalter 90 aufgenommene Rakelblatt 91 aus Filz mit einer Kante im Bereich der Folienunterbrechung 13 vor dem Lackfolienzuschnitt 6 aufsetzt - siehe Figur 6, unten. Nachdem das Aufrakeln der Lackfolie auf den Rahmenschenkel der Fenstereinfassung im Einbauzustand der ortsfest und lagedefiniert abgestützten Fahrzeugseitentür erfolgt, ist die Darstellung in den Figuren 6 bis 8 dementsprechend in Vertikalstellung gewählt. Aufgrund des auf die Rakel ausgeübten Anpressdruckes wird der Folienverbund auf die zu applizierende Oberfläche des daneben befindlichen Karosserieteiles 1 angedrückt, wobei der Folienverbund aus der zunächst gestreckten Ausspannlage V-förmig herausgedrückt wird. Der kürzere Schenkel des V-förmig verspannten Folienverbundes nimmt dabei anfänglich einen maximalen Winkel β gegenüber der Aufnahmeebene 21 ein, der kleiner sein muss als der Schwenkwinkel α des Start-Sauggreifers 30, damit sich der Folienverbund nicht von der saugwirksamen Anlagefläche dieses Sauggreifers lösen kann. Ausgehend von der in Figur 6 dargestellten Ausgangsstellung der Rakel 91 wird diese nun innerhalb des Applikationswerkzeuges unter starker Anpressung dem Folienverbund entlanggeführt, wobei das Applikationswerkzeug in Längsrichtung des Lackfolienzuschnittes ortsfest über dem Karosserieteil verharrt.

Während des Aufrakelns der Lackfolie auf die Karosserieoberfläche wird die wickelnd angetriebene Schnabelzange 50 vorauslaufend mit der gleichen Geschwindigkeit wie die Rakel und mit einem konstanten Abstand A zur Rakel translatorisch voranbewegt. Zugleich wird die Schnabelzange mit einer solchen Wickelgeschwindigkeit angetrieben, dass der an der voranschreitenden Ablösestelle 69 von der Lackfolie abgelöste untere Schutzstreifen 9 kontinuierlich und stramm zu einem Wickel 68 aufgewickelt wird. Dabei ist die Umfangsgeschwindigkeit des Wickels konstant, nämlich gleich der Translationsgeschwindigkeit der Rakel, wogegen die Drehgeschwindigkeit der Schnabelzange 50 mit zunehmendem Wickeldurchmesser abnimmt. Im Bereich der voranschreitenden Ablösestelle 69 wird der Folienverbund 5 durch den größer werdenden Wickel abgestützt.

Das Ende des Rakelvorganges ist in Figur 7 dargestellt. Die Rakel 91 hat das Ende des Lackfolienzuschnittes 6 erreicht und der nun schon sehr große Wickel 68 des unteren Schutzstreifens befindet sich bereits außerhalb des Karosserieteils. Der endseitige Sauggreifer 31 ist gegen Ende des Rakelvorganges an das Karosserieteil angenähert worden, um den Spreizwinkel β' des Folienverbundes gegenüber der Aufnahmeebene 21 nicht zu groß, jedenfalls nicht größer als den Schwenkwinkel α' des endseitigen Sauggreifers 31 werden zu lassen, damit ein fester Halt des endseitigen Überstandes 11 am Sauggreifer gewährleistet bleibt.

Zwar wird in dieser Schlussphase das Vakuum im Innern des endseitigen Sauggreifers 31 im Sinne einer geringeren Haltekraft abgesenkt, um ein Nachgleiten des Folienverbundes ohne allzu starkes Anwachsen der Zugspannung zu ermöglichen. Umso wichtiger ist es, dass die durch die Höhe des Vakuums definierte und reduzierte Haltekraft nicht unkontrolliert zusammenbricht.

Bei dem in Figur 8 gezeigten Stadium des Applikationsvorganges ist die Lackfolie 6 bereits vollständig auf dem Karosserieteil 1 angeklebt und der untere Schutzstreifen vollständig vom Folienverbund abgezogen und zu einem Wickel 68 aufgewickelt. Es braucht lediglich noch der äußere Schutzstreifen 8 von der Außenseite der applizierten Lackfolie 6 abgezogen zu werden, der noch an beiden Enden mittels der beiden Sauggreifer 30 und 31 im Applikationswerkzeug festgehalten ist. Dieses Abziehen geschieht durch eine großräumige Schwenkbewegung des Applikationswerkzeuges vom Karosserieteil weg, wobei die Ablösestelle 69' des äußeren Schutzstreifens entgegen der Aufrakelrichtung vom Ende der Lackfolie zu deren Anfang hin läuft. In Figur 8 erfolgt das Abziehen des äußeren Schutzstreifens durch eine weiträumige Bewegung des endseitigen Sauggreifers. Es ist aber ebenso denkbar, dass der äußere Schutzstreifen aufgrund einer ausholenden Bewegung des startseitigen Sauggreifers vorgenommen wird.

Nach dem Abziehen des äußeren Schutzstreifens können beide Schutzstreifen über einem Abfallbehälter abgeworfen werden. Der von den Sauggreifern gehaltene äußere Schutzstreifen wird durch Abschalten des Vakuums und Belüften der Sauggreifer abgeworfen, was praktisch in jeder beliebigen Lage des Applikationswerkzeuges erfolgen kann. Demgegenüber muss zum Abwerfen des auf der Schnabelzange aufgewickelten unteren Schutzstreifens das Applikationswerkzeug in eine solche Stellung gebracht werden, dass die Schnabelzange etwa parallel zur Schwerkraftrichtung ausgerichtet ist und mit ihrem freien Ende nach unten weist, so dass nach dem Öffnen der Schnabelzange der gelockerte Wickel 68 schwerkraftbedingt axial vom Wickelkern abfallen kann.

### Die Schwenkbarkeit der Sauggreifer in ihren Varianten

Es wurde bereits erwähnt, dass ein wichtiges Merkmal die Verschwenkbarkeit der Sauggreifer unter Aufrechterhaltung einer annähernd gleichbleibenden Zugspannung in dem aufgenommenen Folienverbund darstellt und dass die verschiedenen Applikationswerkzeuge sich in dieser Hinsicht voneinander unterscheiden.

### Die kanten-konzentrische Verschwenkung

Bei dem in den Figuren 1 bis 3 und 5 bis 8 angedeuteten oder dargestellten ersten Ausführungsbeispiel eines Applikationswerkzeuges 20 sind die Schwenkzapfen 34 der beiden Sauggreifer 30, 31 konzentrisch zu der dem Lackfolienzuschnitt 6 zugekehrt liegenden Begrenzungskante 33, 33' der Sauggreifer angeordnet, d.h. die geometrischen Örter der Schwenkachsen liegen in der Aufnahmeebene 21 des Applikationswerkzeuges. Die beiden Sauggreifer schwenken also bei diesem Ausführungsbeispiel um die Begrenzungskanten 33 bzw. 33' mit der Folge, dass die Zugspannung in dem aufgenommenen Folienverbund 5 durch eine Schwenkbewegung nicht verändert wird. Der Vorteil dieser Lösung besteht in der baulichen Einfachheit; sie hat jedoch den Nachteil, dass die Lagerung 35 der Schwenkzapfen, ja sogar die Schwenkzapfen 34 selber die Aufnahmeebene 21 bzw. Arbeitsseite 22 des Applikationswerkzeuges nach unten überragen, was u.U. störend für das Aufnehmen eines dünnen Folienverbundes von einer flachen Unterlage sein kann.

### Verschwenkung mit verschiebbarem endseitigen Sauggreifer

Um die Unterseite des Applikationswerkzeuges unterhalb der Aufnahmeebene 21 völlig frei von Bauteilen halten, gleichwohl aber die Sauggreifer bei konstanter Zugspannung im aufgenommenen Folienverbund verschwenken zu können, kann neben dem weiter unten zu behandelnden Applikationswerkzeug 20" (Figur 9) das weitere Ausführungsbeispiel eines Applikationswerkzeuges 20' gemäß den Figuren 4 und 5 verwendet werden, wobei die hier interessierenden Merkmale lediglich in Figur 4 dargestellt sind.

Die Schwenklagerung mit dem Lagerzapfen 34 und der Zapfenlagerung 35 des links dargestellten, startseitigen Sauggreifers 30' ist als übliche Zapfenlagerung ausgebildet, deren Mittelpunkt gegenüber der Aufnahmeebene 21 des Applikationswerkzeuges 20' in Richtung zu dessen Rückseite 23 um ein solches Maß versetzt ist, dass selbst die der Aufnahmeebene 21 am nächsten liegenden Umrisse der Zapfenlagerung 35' noch gegenüber der Aufnahmeebene 21 des Applikationswerkzeuges 20' in Richtung zu dessen Rückseite 23 versetzt liegen. Die Zapfenlagerung 35' des startseitigen Sauggreifers 30' ist ebenso unbeweglich auf dem Applikationswerkzeug befestigt, wie der zugehörige separate Schwenkantrieb 40 in Form eines am Schwenkhebel 36 angreifenden Arbeitszylinders.

Anders ist es beim endseitigen Sauggreifer 31'. Zwar ist auch dieser Sauggreifer mit einer übliche Zapfenlagerung mit Lagerzapfen 34' und Zapfenlagerung 35' ausgerüstet, die gegenüber der Aufnahmeebene 21 um ein vorzugsweise gleiches Maß wie beim startseitigen Sauggreifer 30' zur Rückseite 23 hin versetzt sind. Jedoch sind die Zapfenlagerung 35 ' und der zugehörige, separate Verschwenkantrieb 40' auf einem längsbeweglich gelagerten Schlitten 41 angeordnet, so dass der endseitige Sauggreifer 31' auf dem Applikationswerkzeuges 20' beweglich gehaltert ist. Zur Aufrechterhaltung einer gewissen Zugspannung im aufgenommenen Folienverbund wird der Schlitten und mit ihm der Sauggreifer beispielsweise durch eine Spannfeder 42 in Richtung auf eine beim Aufnehmen eines Folienverbundes eingenommene Endstellung vorgespannt, die beim dargestellten Ausführungsbeispiel durch einen auf der Schlittenführung festsetzbaren Anschlagring 41' vorgegeben ist. Anstelle einer Spannfeder kann auch ein kleiner Arbeitszylinder eingesetzt werden, mit dem eine einstellbare und vom Verschiebeweg unabhängige Spannkraft auf den Folienverbund ausgeübt werden kann.

Die Wirkungsweise der in Figur 4 gezeigten Aufrechterhatung einer bestimmten Zugspannung im aufgenommenen Folienverbund trotz einer Verschwenkung der Sauggreifer um versetzt zur Folienebene liegende Schwenkzapfen 34, 34' ist nun folgende: Zunächst wird bei der in Figur 4 in vollen Linien dargestellten Aufnahmestellung der Sauggreifer ein Folienverbund in das Applikationswerkzeug aufgenommen, wobei der Schlitten 41 des endseitigen Sauggreifers sich in der durch den Anschlagring 41' bestimmten Endstellung befindet. Durch die Verschwenkung des *startseitigen* Sauggreifers 30' im Uhrzeigersinn verschiebt sich die vordere Begrenzungskante der Anlagefläche 32 um den Hub h nach *links.* Der *endseitige* Sauggreifer 31' wird um einen etwa gleich großen Winkel, jedoch in die *entgegen gesetzte* Schwenkrichtung verschwenkt, so dass die linke Begrenzungskante von dessen Anlagefläche 32 - bezogen auf das verschiebbare System der Halterung des endseitigen Sauggreifers 31' - um etwa den gleichen Hub h nach *rechts,* also in die entgegen gesetzte Richtung wie beim anderen Sauggreifer 30' verschoben wird. Gleichwohl kommt es nicht zu einer Erhöhung der Zugspannung im aufgenommenen Folienverbund, weil der beweglich gehalterte, endseitige Sauggreifer 31' dem nach links gerichteten, vom startseitigen Sauggreifer 30' ausgeübten Zug im Folienverbund ohne Zwang, allerdings entgegen der Wirkung der Spannfeder 42, zu folgen vermag und dabei das doppelte des Versatzmaßes, nämlich die Strecke 2. h zurücklegt. Wichtig hierbei ist, dass der startseitige Sauggreifer 30' unnachgiebig im Applikationswerkzeug gehaltert ist und durch eine etwaige Krafteinwirkung in Zugrichtung des Folienverbundes beim Aufrakeln desselben sich nicht innerhalb des Applikationswerkzeuges verlagern kann.

Vorteilhaft an der im Ausführungsbeispiel nach Figur 4 gezeigten Konstruktion für ein Konstanthalten der Zugspannung im aufgenommenen Folienverbund während der einander entgegen gerichteten Schwenkbewegungen der beiden Sauggreifer ist zum einen die baulich einfache Zapfenlagerung an beiden Sauggreifern und zum anderen der Umstand, dass die Aufnahmeebene 21 des Applikationswerkzeuges 20' nicht durch bauliche Komponenten nach unten überragt wird und selbstverständlich die auf einem kontrollierten Niveau bleibende Zugspannung im aufgenommenen Folienverbund. Vorteilhaft ist ferner, dass das Applikationswerkzeug 20' nach Figur 4 aufgrund des Schlittens 41 für den endseitigen Sauggreifer ohne weiteres auf unterschiedliche Längen L des Folienverbundes bzw. der zu applizierenden Lackfolie umgerüstet werden kann, nämlich durch bloßes Verändern der Position des Anschlagringes 41'. Diese Vorteile zusammen genommen rechtfertigen ohne weiteres den größeren Aufwand für den gesonderten Schlitten 41 bezüglich des endseitigen Sauggreifers 31'.

### Die Trapezlenker-Verschwenkung des endseitigen Sauggreifers

In Figur 9 ist ein weiteres Ausführungsbeispiel eines Applikationswerkzeuges 20" gezeigt, welches eine aufwändige Schlittenkonstruktion vermeidet. Die Schwenklagerung 34", 35" des in Figur 9 links dargestellten, startseitigen Sauggreifers 30" ist - ähnlich wie beim Applikationswerkzeug nach Figur 4 - ebenfalls als übliche Zapfenlagerung ausgebildet, deren Mittelpunkt gegenüber der Aufnahmeebene 21 des Applikationswerkzeuges 20" in Richtung zu dessen Rückseite 23 um ein gewisses Maß versetzt ist, so dass die der Aufnahmeebene 21 am nächsten liegenden Umrisse der Zapfenlagerung 35" noch einen nach oben gerichteten Abstand zur Aufnahmeebene 21 des Applikationswerkzeuges 20" haben.

Zwar ist der schwenkbar gelagerte endseitige Sauggreifer 31" ebenfalls in Längsrichtung relativ zum Applikationswerkzeug 20" beweglich, jedoch nicht mittels einer Schlittenführung. Vielmehr ist beim Ausführungsbeispiel nach Figur 9 die Schwenkbarkeit des endseitigen Sauggreifers mit dessen Längsbeweglichkeit baulich vereinigt, was beim dargestellten Ausführungsbeispiel durch ein Gelenkviereck realisiert ist. Dieses ist durch zwei Schwingen 45 und 45' gebildet, die einerseits jeweils am endseitigen Sauggreifer 31" und andererseits jeweils am Applikationswerkzeug 20" angelenkt sind. Die Verbindungslinien der Gelenkmittelpunkte der Schwingen 45, 45' überschneiden sich in jeder beliebigen Bewegungsstellung des Gelenkvierecks, wobei der gegenseitige Schnittpunkt dieser Verbindungslinien den beweglichen Momentanpol, d.h. das momentane Drehzentrum der Schwenkbewegung des endseitigen Sauggreifers 31" darstellt. Mit 46 ist der Momentanpol zu Beginn der Schwenkbewegung, d.h. der Momentanpol der Aufnahmestellung des Sauggreifers 31" bezeichnet, wogegen der Momentanpol am Ende der Schwenkbewegung, d.h. in der Arbeitsstellung des Sauggreifers 31", mit 46' bezeichnet ist. In den Zwischenstellungen bewegt sich der Momentanpol auf der punktiert angedeuteten Momentanpolbahn 46". Die Lage der Gelenkpunkte einschließlich der Länge der Schwingen 45 und 45' ist zum einen so gewählt, dass der Momentanpol 46, 46' in allen Stellungen des Sauggreifers 31" gegenüber der Aufnahmeebene 21 des Applikationswerkzeuges 20" nach unten versetzt liegt, also in der entgegengesetzten Richtung relativ zur Aufnahmeebene liegt wie die Zapfenlagerung 34", 35" des startseitigen Sauggreifers 30".

Darüber hinaus ist die Gelenkviereck-Lagerung des endseitigen Sauggreifers 31" bezüglich gegenseitiger Anordnung der Gelenkpunkte und bezüglich der Länge der Schwingen 45, 45' so ausgebildet, dass der verschwenkungsbdingte Lageversatz (Hub h') der zuschnittnahen Begrenzungskante des endseitigen Sauggreifers 31" nach Betrag und Richtung ebenso groß ist, wie der entsprechende Lageversatz Hub h' des startseitigen Sauggreifers 30". Hierbei bewegt sich der Momentanpol auf der genannten Momentanpolbahn 46" und legt dabei in Längsrichtung etwa den doppelten Weg (2 · h') des endseitigen Sauggreifers selber (h') zurück.

Der Vorteil der Schwenklagerung nach Figur 9 vereinigt die Vorteile einer einfachen baulichen Ausführung mit den übrigen Vorteilen des Ausführungsbeispiels nach Figur 4. Eine Umrüstung des Applikationswerkzeuges 20" auf eine andere Länge des Folienverbundes ist hier ebenfalls möglich, sofern das Gestell, welches die oberen Schwenklager der Schwingen 45 und 45' und die Anschläge 47' und 48' trägt, in Längsrichtung des Applikationswerkzeuges an unterschiedlichen Positionen anschraubbar ist.

### Die Greifwerkzeuge für die Abzugsfahne

### Übereinstimmung der Schnabel-Varianten

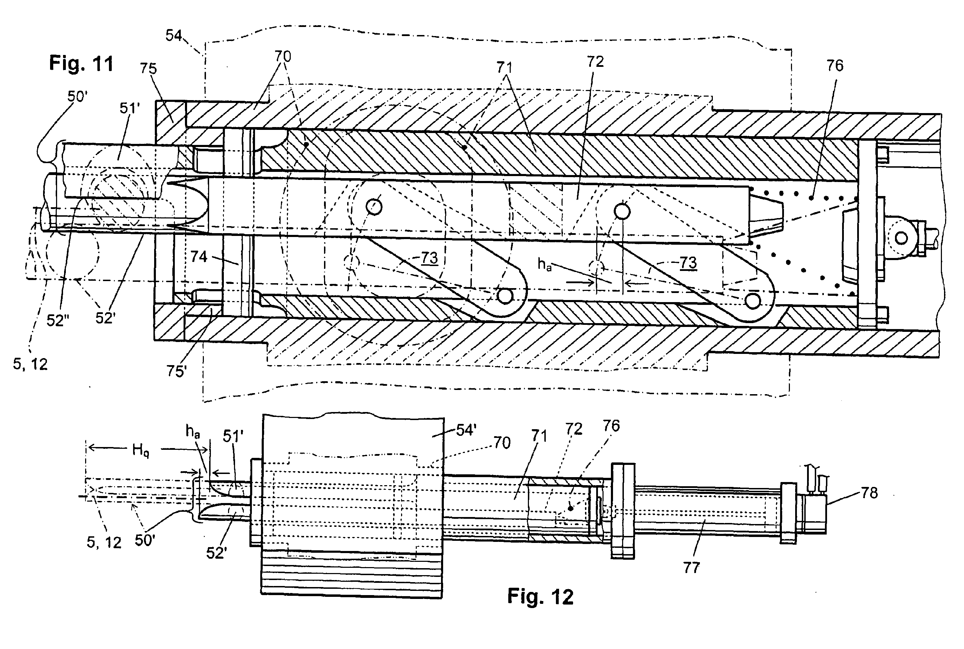

Das bereits mehrfach erwähnte Greifwerkzeug ist wegen seiner praktischen Bedeutung für die Applikationstechnik in unterschiedlichen Ausführungsbeispielen gezeigt. Bei den in den Figuren 9 und 10 einerseits und in den Figuren 11 und 12 andererseits dargestellten Ausführungsbeispielen ist das Greifwerkzeug jeweils als eine beweglich geführte und drehbare Schnabelzange 50 bzw. 50' ausgebildet, die jeweils ein oberes (51 bzw. 51') und ein unteres Schnabelteil 52 bzw. 52' aufweist, die über ihre Längserstreckung hinweg jeweils von konstantem Querschnitt ausgebildet sind. Der obere Schnabelteil 51 bzw. 51' ist im Querschnitt rinnenförmig gestaltet, wobei die beiden Seitenränder gemeinsam eine Anlageebene 51" des oberen Schnabelteiles aufspannen. Zwischen diese Seitenränder taucht der untere Schnabelteil beim Schließen der Schnabelzange radial ein.

Die Schnabelzange 50 bzw. 50' muss sich in der aufnahmebereiten Ausgangsposition in einer solchen Umfangsstellung befinden und der Drehantrieb muss mit einer entsprechend geeigneten Steuerung zum selbsttätigen Herbeiführen dieser Umfangsstellung ausgestattet sein, bei der das obere Schnabelteil 51 bzw. 51' oberhalb der Aufnahmeebene 21 angeordnet ist, wogegen das untere Schnabelteil 52, 52' in der aufnahmebereiten Ausgangsposition sich unterhalb der Aufnahmeebene 21 befindet.

Im Allgemeinfall ist sowohl der obere Schnabelteil 51 bzw. 51' also auch der untere Schnabelteil 52, 52' der Schnabelzange 50, 50' beweglich im Sinne einer Öffnungs- und Schließbewegung ausgebildet.

Nachdem sich das Applikationswerkzeug von oben her dem aufzunehmenden Folienverbund annähert, kann der obere Schnabelteil 51 bzw. 51' unbeweglich im Sinne einer Öffnungs- und Schließbewegung der Schnabelzange 50, 50' ausgebildet sein. Hingegen muss der untere Schnabelteil 52, 52' in diesem Sinne beweglich angeordnet und geführt sowie mit einem entsprechenden Bewegungsantrieb ausgestattet sein. Der Unterschied der beiden Schnabelzangen besteht im wesentlichen zum einen in der Art, wie sie an die Abzugsfahne 12 des aufgenommenen Folienverbundes angesetzt werden und wie sie anschließend den erzeugten Wickel 68 wieder freigeben und zum anderen in der Art der Öffnungs- und Schließbewegung der Schnabelzange. Bei beiden Ausführungsbeispielen von Schnabelzangen muss durch eine geeignete Steuerung im Drehantrieb 55 der Schnabelzange selbsttätig die o.g. Ausgangslage der Schnabelzange eingeschwenkt werden.

### Schnabelzange mit schwenkbarem Unterteil

Bei dem in den Figuren 9 und 10 dargestellten Ausführungsbeispiel der Schnabelzange 50 ist der untere Schnabelteil 52 im Sinne einer Öffnungs- und Schließbewegung der Schnabelzange 50 um 90° verschwenkbar, derart dass in der aufnahmebereiten Ausgangsposition - Schnabelzange 50 ganz geöffnet - der untere Schnabelteil 52 rechtwinklig zur Aufnahmeebene 21 des Applikationswerkzeuges 20" nach unten abragt. Zu diesem Zweck ist der untere Schnabelteil mit dem oberen Schnabelteil 51 über ein Schwenklager 62 verbunden, welches mit seiner Schwenkachse tangential zum Umfang der Schnabelzange ausgerichtet und nahe an deren Umfang angeordnet ist. Auf der diametral gegenüberliegenden Seite des unteren Schnabelteils 52 - gegenüber dem Schwenklager 62 axial zum freien Ende der Schnabelzange hin versetzt - ist ein weiteres Schwenklager angebracht, welches einen radialen Abstand zum Schwenklager 62 aufweist und so einen Betätigangshebel für den unteren Schnabelteil bildet. Am unteren Ende dieses Betätigungshebels greift ein Kniehebelgestänge 63 mit etwa mittig liegendem Kniegelenk 64 an, welches Kniehebelgestänge mit seinem anderen Ende am oberen Schnabelteil 51 an einer gegenüber dem Schwenklager 62 nach hinten versetzten Stelle angelenkt ist. Am Kniegelenk 64 greift ein Koppelglied 65 an, welches seinerseits über einen Betätigungsstößel 66 von einem Hubzylinder 67 aus betätigbar ist. Dadurch kann der untere Schnabelteil 52 einerseits in die in vollen Linien dargestellte Schließstellung und andererseits in die strichpunktiert angedeutete Offenstellung eingeschwenkt werden, bei der der untere Schnabelteil rechtwinklig von der Rotationsachse der Schnabelzange nach unten abragt. Der Betätigungszylinder ist an seinem frei liegenden Ende mit einem - in Figur 10 nicht dargestellten - Druckversorgungskopf versehen, der eine Druckversorgung von einer ortsfesten Umfangsstelle zum rotierenden Betätigungszylinder erlaubt.

Der Vorteil der Schnabelzange 50 nach Figur 10 besteht darin, dass sie nicht nur selber, sondern auch ihr Betätigungsantrieb baulich relativ einfach und robust gestaltet ist. Nachteilig an diesem Ausführungsbeispiel ist jedoch, dass beim Aufnehmen eines Folienverbundes, d.h. im geöffneten Zustand der Schnabelzange, der untere Schnabelteil weit bis unter die Aufnahmeebene 21 hinunterragt. Die Aufnahmeplattform muss also an der Stelle des geöffnet abragenden untere Schnabelteils eine Aussparung haben oder zumindest an dieser Stelle entsprechend schmal ausgebildet sein.

### Schnabelzange mit parallelverschiebbarem Unterteil

Es soll nun auf die in den Figuren 11 und 12 isoliert dargestellte Schnabelzange 50' näher eingegangen werden, die anstelle der Schnabelzange 50 in dem Applikationswerkzeug 20 oder 20' eingebaut sein könnte. Auch hier ist wiederum der obere Schnabelteil 51' unbeweglich im Sinne eines Öffnens bzw. Schließens innerhalb der Schnabelzange angeordnet. Demgegenüber ist der untere Schnabelteil 52' - und nur dieser - parallel zu sich selber im Schließsinn an den oberen Schnabelteil annäherbar bzw. im Öffnungssinn von ihm abrückbar. Außerdem ist die Schnabelzange als ganzes aus dem Bereich des aufzunehmenden Folienverbundes 5 quer zu dessen Längsrichtung herausfahrbar bzw. einfahrbar, wobei der ausführbare Verfahrweg (Querhub Hq) der Schnabelzange mindestens der Breite des aufzunehmenden Folienverbundes 5 bzw. der Abzugsfahne 12 entspricht.

Die Schnabelzange 50' dient neben der Greiffunktion bezüglich der Abzugsfahne 12 des Folienverbundes - wie gesagt - auch als Wickelkern für den unteren Schutzstreifen 9 und ist demgemäß drehantreibbar. Dazu ist die Schnabelzange am frei zugänglichen Stirnende einer Pinole 71 gehaltert, die ihrerseits aufgrund einer unrunden Außenkontur verdrehgesichert aber axial beweglich in einer drehbar in dem Winkelgetriebe 54' gelagerten und drehantreibbaren Hohlwelle 70 gelagert ist. Das Axialverschieben der Schnabelzange um den Querhub H_{q} erfolgt nur im geöffneten Zustand und beim Schließen nur in einer solchen Verdrehstellung der Schnabelzange, dass der obere und der untere Schnabelteil oberhalb bzw. unterhalb des aufzunehmenden Folienverbundes bzw. der von ihm abragenden Abzugsfahne 12 positioniert sind. Erst am äußeren Ende des Querhubes H_{q}, d.h. wenn die Schnabelzange über die gesamte Breite des Folienverbundes hinweg geschoben ist, wird die Schnabelzange geschlossen; dieser Zustand ist in Figur 11 in vollen Linien dargestellt und in Figur 12 strichpunktiert angedeutet. Beim Zurückfahren der Schnabelzange ist es umgekehrt, d.h. sobald die Schnabelzange aus der äußersten Endposition heraus axial zurückbewegt wird, kehrt sie zunächst in die Offenstellung zurück und erst dann beginnt der Rückhub in die zurückgezogene Endstellung, die in Figur 12 in vollen Linien dargestellt ist.

Zum axialen Verschieben der Pinole 71 und der Schnabelzange 51' ist am axial gegenüberliegenden Ende der Pinole ein Betätigungszylinder 77 angebracht, der mit der Pinole umläuft und der demgemäß mit einem in Drehrichtung stillstehenden Druckversorgungskopf 78 zur Druckversorgung bezüglich beider Betätigungsrichtungen des rotierenden Betätigungszylinders versehen sein muss, wie es in Figur ganz rechts angedeutet ist.

Bei dem in den Figuren 11 und 12 dargestellten Ausführungsbeispiel des Greifwerkzeuges ist die Schließ- und Öffnungsbewegung der Schnabelzange mit dem Verschiebeantrieb für sie in der Weise gekoppelt, dass die Bewegung zum Schließen und Öffnen der Schnabelzange von der Axialbewegung der Pinole 70 abgeleitet ist. Zu diesem Zweck ist der untere Schnabelteil 52' an einer Führungsstange 72 angebracht, die innerhalb der hohlen Pinole 71 mittels eines Paares von Parallelogrammlenkern 73 auf einem Kreisbogen beweglich geführt ist, wobei die Führungsstange nicht nur einen radialen Hub im Sinne eines Öffnens bzw. Schließens der Schnabelzange vollführt, sondern auch einen kurzen axialen Hub hₐ der Führungsstange und des unteren Schnabelteils 52' relativ zu dem starr mit der Pinole verbundenen oberen Schnabelteil 51'. Die Führungsstange wird durch eine an ihrem rückwärtigen Ende angebrachte Öffnungsfeder 76 in Richtung auf die Offenstellung der Schnabelzange gespannt. Um ein vom Axialhub der Pinole abgeleitetes Schließen der Schnabelzange zu bewirken, ist im vorderen Bereich der Führungsstange ein in ihr radial beweglich geführter Querstift 74 angeordnet, der durch axial ausgerichtete Langlöcher in der Pinole bis zur Leibung der unrunden Innenbohrung der Hohlwelle 70 hindurchragt. Die Stirnseite der Hohlwelle ist am Rand durch einen Anschlagring 75 verschlossen, der mit axial abragenden Stegen 75' in Aussparungen an der Pinole hineinragt und mit dem Querstift zusammenwirken kann.

Sobald gegen Ende des Querhubes der Pinole 71 der Querstift 74 an den axial abragenden Steg des Anschlagringes 75 anschlägt, wird bei einer axialen Weiterbewegung der Pinole die Führungsstange 72 festgehalten, so dass sie entgegen der Kraft der Öffnungsfeder 76 relativ zur Pinole den genannten Axialhub hₐ ausführt und sich dabei auf dem durch das Parallelogrammlenkerpaar bestimmten Kreisbogen relativ zur Pinole, d.h. sich auch radial in ihr im Sinne einer Schließbewegung bewegt.

Die Schnabelzange 50' nach den Figuren 11 und 12 hat gegenüber der Schnabelzange nach den Figur 10 den Vorteil, dass sie im aufnahmebereiten Zustand ohne weiteres vollständig hinter die Aufnahmeebene 21 zurückgezogen werden kann, so dass ein Folienverbund auch von einer größeren flachen Tischfläche durch das zugehörige Applikationswerkzeug aufgenommen werden könnte. Nachteilig ist allerdings der etwas kompliziertere Antrieb, weil die Schnabelzange neben einer radialen Öffen- und Schließbewegung auch noch einen relativ großen Querhub H_{q} zum seitlichen Ansetzen der geöffneten Schnabelzange an die Abzugsfahne des vom Applikationswerkzeug aufgenommenen Folienverbundes ausführen muss.

### Die vakuum-betriebenen Greifwerkzeuge

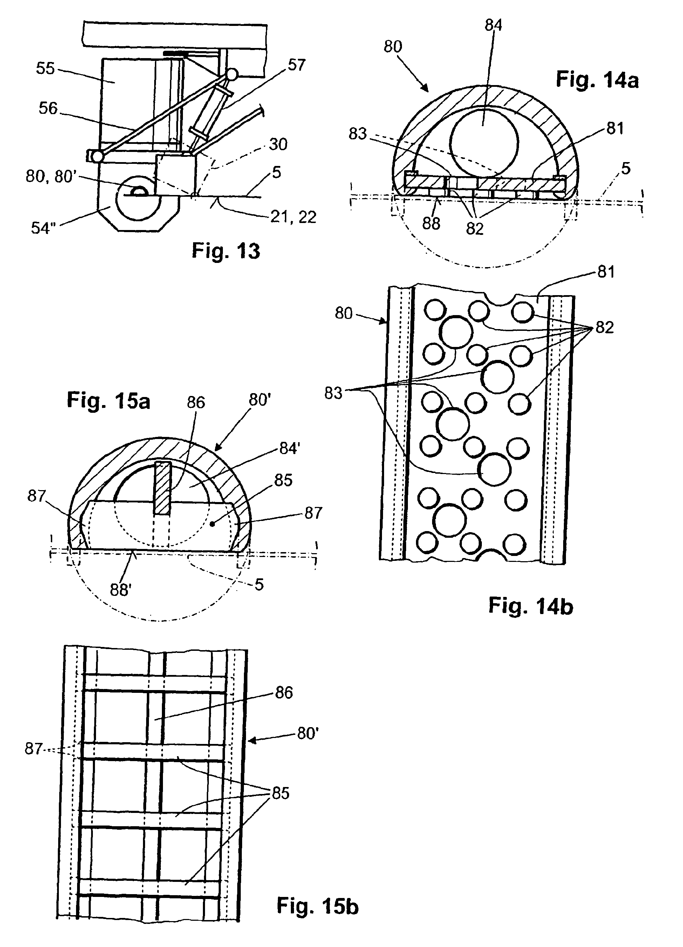

Wesentlich einfacher, nämlich einteilig und weil die Greiffunktion pneumatisch durch Vakuum bewirkt wird, sind die als Saugleisten gestalteten Greifwerkzeuge 80 bzw. 80' nach den Figuren 13 - 15 ausgebildet. Figur 13 stellt die Übersichtszeichnung bezüglich der beiden in den Figuren 14a, 14b bzw. 15a, 15b im Detail gezeigten Ausführungsbeispiele von Saugleisten 80 bzw. 80' dar. Das innerhalb des zugehörigen Applikationswerkzeuges bewegliche Greifwerkzeug dient ebenfalls als Wickelkern für den unteren Schutzstreifen 9. Demgemäß ist es über das Winkelgetriebe 54" und den Antriebsmotor 55 drehantreibbar und weist einen angenähert halbkreisförmigen oder D-förmigen Querschnitt auf. Die gesteuert mit Vakuum beaufschlagbare bzw. belüftbare Saugleiste weist an ihrer Flachseite eine saugwirksame Anlagefläche 88, 88' auf. Das Innere der die Saugleiste tragenden Abtriebswelle des Winkelgetriebes 54" ist axial hohlgebohrt, wobei diese Bohrung als Vakuumzufuhr dient. Am Rückwärtigen Ende der aus dem Winkelgetriebe herausragenden Abtriebswelle ist ein nicht mitrotierender Druckversorgungskopf angebracht. Selbstverständlich muss auch die als Wickelkern dienende Saugleiste im aufnahmebereiten Zustand gezielt in eine solche Drehstellung eingefahren werden können, dass die im Querschnitt D-förmige Saugleiste mit ihrer flachen Aufnahmefläche parallel zur Aufnahmeebene des Applikationswerkzeuges oder parallel zur Abzugsfahne des aufgenommenen Folienverbundes steht. Zum Erfassen der Abzugsfahne 12 am startseitigen Überstand des aufzunehmenden oder im Applikationswerkzeug bereits aufgenommenen Folienverbundes braucht lediglich das Innere der an die Abzugsfahne angelegten Saugleisten mit Vakuum beaufschlagt zu werden.

Die in den Figuren 14a, 14b bzw. 15a, 15b dargestellten Saugleisten 80 bzw. 80' unterscheiden sich im Wesentlichen durch die bauliche Gestaltung der an den Folienverbund 5 anlegbaren, saugwirksamen Aufnahmefläche 88 bzw. 88'. Beim Ausführungsbeispiel der Saugleiste 80 nach den Figuren 14a, 14b ist in die offene Seite eines im Wesentlichen halbkreisförmigen Rohres ein Noppenblech 81 luftdicht eingebördelt. Das Noppenblech ist mit einer Vielzahl gerastert angeordneter, beispielsweise zylindrischer Stütznoppen 82 versehen, zwischen denen Übertrittsöffnungen 83 für das Vakuum angebracht sind. Die Stütznoppen bilden eine sehr geringe Kontakt- und Stützfläche zum aufgenommenen Folienverbund 5 hin, so dass über nahezu der gesamten, zwischen den seitlichen Befestigungsbördeln liegenden Fläche des Noppenbleches das anstehende Vakuum auf den Folienverbund einwirken und den Folienverbund festhalten kann. Das Innere der Saugleiste ist über einen durch die Antriebswelle des als Wickelkern dienenden Greifwerkzeuges hindurch gehenden Sauganschluss 84 mit Vakuum beaufschlagbar bzw. belüftbar.

Bei der in den Figuren 15a, 15b gezeigten Saugleiste 80' wird ebenfalls von einem im Wesentlichen halbkreisförmigen Rohr ausgegangen, in dessen offene Seite hier ein Gitter aus Lamellen mit beispielsweise einem Längssteg 86 und einer Vielzahl kurzer in Nischen 87 eingelassener Querstege 85 gebildet ist. Die mit den Querstegen verstemmten Längsseiten des Halbrohres sind im Bereich der Anlagefläche 88' mit den Gitterlamellen bündig geschliffen. Das Vakuum kann der Saugleiste über einen ebenfalls in der das rotierende Greifwerkzeug tragenden Welle angeordneten Sauganschluss 84' zugeführt werden. Der Vorteil der Saugleiste 80' nach den Figuren 15a, 15b gegenüber der Saugleiste 80 besteht in einem größeren Übertrittsquerschnitt vom Inneren der Saugleiste in die saugwirksame Fläche selber. Bei der Saugleiste 80' (Figuren 15a, 15b) sind der Übertrittsquerschnitt einerseits und die saugwirksame Fläche andererseits gleichgroß, wogegen bei der Saugleiste 80 (Figuren 14a, 14b) in dieser Hinsicht ein großer Unterschied besteht.

### Bezugszeichenliste

**Karosserie**
   - 1: Karosserieteil
   - 2: Unterkante Fensterrahmen
   - 3, 4: unbenutzt
**Lackfolie**
   - 5: Folienverbund, Figur 1, 16a
   - 6: Lackfolienzuschnitt
   - 7: Stützfolie
   - 8: äußerer Schutzstreifen
   - 9: unterer Schutzstreifen
   - 10: startseitiger Überstand
   - 10': startseitiger Überstand, Fig. 17a, b
   - 11: endseitiger Überstand
   - 11': endseitiger Überstand, Fig. 17a
   - 11": endseitiger Überstand, Fig. 17b
   - 12: Abzugsfahne, Figur 1, 16a
   - 12': starts. Abzugsfahne, Fig. 16b, c;17a, b
   - 12": ends. Abzugsfahne, Figur 16c, 17b
   - 13: Unterbrechung zwischen Lack- und Stützfolie
   - 14: Schlitz zwischen Überstand und Abzugsfahne
   - 15: Folienverbund, Figur 16b
   - 15': Folienverbund, Figur 16c
   - 16: Folienverbund, Figur 17a
   - 16': Folienverbund, Figur 17b
   - L: Länge von 6
   - 1: Greiflänge
   - b₁: Aufsetzbreite, startseitiger Sauggreifer
   - b₂: Aufsetzbreite, endseitiger Sauggreifer
   - D: Dicke des Folienverbundes
   - 17 - 19: unbenutzt
**Applikationswerkzeug, allgemein**
   - 20: Applikationswerkzeug, Fig. 3
   - 20': Applikationswerkzeug, Fig. 4 + 5
   - 20": Applikationswerkzeug, Fig. 9
   - 21: Aufnahmeebene
   - 22: Arbeitsseite von 20, 20', 20"
   - 23: Rückseite von 20, 20', 20"
   - 24: Arbeitsarm des Industrieroboters
   - 25: Handgelenk von 24
   - 26 - 29: unbenutzt
**Sauggreifer**
   Figuren 1 bis 3 und 6 bis 8
      - 30: startseitiger Sauggreifer
      - 31: endseitiger Sauggreifer
      - 32: saugwirksame Aufnahmefläche
      - 33, 33': zugekehrte Begrenzungskante
      - 34: Schwenkzapfen von 30, 31
      - 35: Lagerung von 34
      - 36, 36': Schwenkhebel
      - 37: Schwenkantrieb
      - 38, 38': Anschlag f. Aufnahmestellung
      - 39, 39': Anschlag f. Arbeitsstellung
      - α: Schwenkwinkel von 30, 30'
      - α': Schwenkwinkel von 31, 31'
      - β, β': V-förmige Abwinkelung der Folie ggü. 21
   Figur 4 und 5
      - 30': startseitiger Sauggreifer
      - 31': endseitiger Sauggreifer
      - 34': Schwenkzapfen an 30', 31'
      - 35': Lagerung von 34'
      - 36, 36': Schwenkhebel an 30', 31'
      - 40: Antrieb für 30'
      - 40': Antrieb für 31'
      - 41: Schlitten
      - 41': Anschlagring
      - 42: Spannfeder
      - 43, 43': Anschlag für Aufnahmestellung
      - 44, 44': Anschlag für Arbeitsstellung
      - h: Hub der Begrenzungskanten
      - 2h: Hub des Schlittens 41
   Figur 9
      - 30": startseitiger Sauggreifer
      - 31": endseitiger Sauggreifer
      - 32: saugwirksame Aufnahmefläche
      - 34": Schwenkzapfen von 30"
      - 35": Lagerung von 34"
      - 36, 36': Schwenkhebel
      - 37: Schwenkantrieb
      - 45, 45': Schwingen an 31'
      - 46: Momentanpol, am Anfang
      - 46': Momentanpol, am Ende
      - 46": Momentalpolbahn
      - 47, 47': Anschlag f. Aufnahmestellung
      - 48, 48': Anschlag f. Arbeitsstellung
      - h': Hub der Begrenzungskanten
      - 49: -
**Schutzstreifen-Abziehvorrichtung**
   Figuren 4, 5, 9, 10
      - 50: Schnabelzange
      - 51: oberes Schnabelteil
      - 51": Anlageebene von 51 (und von 51')
      - 52: unteres Schnabelteil
      - 53: Arbeitsebene
      - 54: Winkelgetriebe
      - 55: Antriebsmotor
      - 56: Parallelogrammlenker
      - 57: Schwenkantrieb
      - 58, 58': Anschläge
      - 59: Schlitten
      - 60: Führungsstangen
      - 61: Verschiebeantrieb
      - 62: Schwenklager des unteren ggü. dem oberen Schnabelteil
      - 63: Kniehebelgestänge
      - 64: Kniegelenk
      - 65: Koppelglied
      - 66: Betätigungsstößel
      - 67: Hubzylinder
      - 68: Schutzstreifen-Wickel
      - 69: Ablösestelle 9 von 6
      - 69': Ablösestelle 8 von 6
      - A: Abstand Ablösestelle 69/Rakel
   Figuren 11 und 12
      - 50': Schnabelzange
      - 51': oberes Schnabelteil
      - 52': unteres Schnabelteil
      - 51": Anlagefläche von 51' (und von 51)
      - 54': Winkelgetriebe
      - 70: Hohlwelle
      - 71: Pinole
      - 72: Führungsstange
      - 73: Parallelogrammlenker
      - 74: Querstift
      - 75: Anschlagring
      - 75': axial von 75 abragende Stege
      - 76: Öffnungsfeder
      - 77: Betätigungszylinder
      - 78: Druckversorgungskopf an 77
      - Hq: Querhub von 50'
      - hₐ: axialer Hub von 52' ggü. 51'
      - 79: -
   Figuren 13, 14a, 14b
      - 54": Winkelgetriebe
      - 55: Antriebsmotor
      - 80: Saugleiste
      - 81: Noppenblech
      - 82: Stütznoppen
      - 83: Übertrittsöffnungen
      - 84: Sauganschluss
      - 88: Anlagefläche
   Figuren 15a und 15b
      - 80': Saugleiste
      - 84': Sauganschluss
      - 85: Querstege
      - 86: Längssteg
      - 87: Nischen
      - 88': Anlagefläche
      - 89: -
**Rakelvorrichtung**
   - 90: Rakelhalter
   - 91: Rakelblatt
   - 92: Anstellantrieb
   - 93: Anstellführung
   - 94: -
**Stapelvorrichtung**
   Figur 4
      - 95: Stapel von Folienverbunden
      - 96: Stapelplattform
      - 97: Haltestege
      - 98: Führungsstege
      - 99: Führungszapfen an 96
      - 100: Grundgestell
      - 101: Tragsäulen
      - 102: Vertikalführung
      - 103: Hubfeder
      - 104: elast. Zwischenglied
      - 105: Verstellmutter
      - 106: Verstellspindel
      - 107: Verstellmotor
      - 108: Zahnriehmen
      - 109: Lichtschranke
      - 110: Steuergerät

## Patentansprüche

1. Verfahren zum automatisierten Applizieren von selbsthaftender Folie auf Karosserieteile, bei dem ein Folienzuschnitt auf der nichtklebenden Außenseite an zwei gegenüberliegend Enden mittels vakuumbeaufschlagbarer Sauggreifer erfasst und ausgespannt gehalten wird, bei dem der ausgespannt gehaltene Folienzuschnitt über dem zu beklebenden Karosserieteil lagegenau ausgerichtet und an ihm angeklebt wird,
**dadurch gekennzeichnet, dass**
zum Applizieren von Lackfolie vorkonfektionierte, längliche Lackfolienzuschnitte (6) in einer Ausbildung gemäß den Merkmalen a bis c) bereitgestellt werden und dass zum automatisierten Applizieren der so bereitgestellten Lackfolienzuschnitte (6) gemäß den Merkmalen d) bis g) verfahren wird:
a) jeder vorkonfektionierte, längliche Lackfolienzuschnitt (6) ist in einem Folienverbund (5, 15, 15', 16, 16') enthalten und außen- und unterseitig mit einem anhaftenden aber leicht ablösbaren Schutzstreifen (8, 9) versehen, wobei beide Schutzstreifen (8, 9) an den beiden, im Bereich der Schmalseiten des Lackfolienzuschnitts (6) liegenden Enden gegenüber der Nutzlänge (L) des Lackfolienzuschnitts (6) jeweils überstehen (Überstände 10, 10', 11, 11'),
b) die in Längsrichtung des Folienzuschnittes (6) gemessene Länge des einen, nachfolgend "endseitiger Überstand" genannten Überstandes (11, 11') ist etwa auf die in Längsrichtung des Lackfolienzuschnitts (6) gemessene Aufsetzbreite (b₂) des zugehörigen Sauggreifers (31) ausgebildet, wogegen die Länge des anderen, nachfolgend "startseitiger Überstand" genannten Überstandes (10, 10') zwar ebenfalls etwa auf die Aufsetzbreite (b₁) des zugehörigen Sauggreifers (30) ausgebildet ist, wobei jedoch am startseitigen Überstand (10, 10') zumindest der unterseitige Schutzstreifen (9) um eine bestimmte Greiflänge (1) über die genannte Aufsetzbreite (b₁) hinaus verlängert ist (Abzugsfahne 12, 12'),
c) der solcherart ausgebildete, den Lackfolienzuschnitt (6) enthaltende Folienverbund (5, 15, 15', 16, 16') wird in definierter Lage mit dem außenseitigen Schutzstreifen (8) frei zugänglich im Arbeitsbereich eines mit einem Applikationswerkzeug (20, 20', 20") versehenen, frei programmierbaren Industrieroboters zur Aufnahme durch das Applikationswerkzeug (20, 20', 20") dargeboten,
d) der Folienverbund (5, 15, 15', 16, 16') wird durch zwei am Applikationswerkzeug (20, 20', 20") vorgesehenen, mit ihren saugwirksamen Aufnahmeflächen (32) in einer einheitlichen Aufnahmeebene (21) liegenden Sauggreifer (30, 30', 30", 31, 31', 31") am oberseitigen Schutzstreifen (8) im Bereich der beiden Überstände (10, 10', 11, 11') aufgenommen, wobei beide Sauggreifer (30, 30', 30", 31, 31', 31") anschließend aus der Aufnahmeebene (21) heraus um jeweils einen bestimmten Winkel (α, α') verschwenkt werden, derart, dass die aufgenommenen Überstände (10, 10', 11, 11') des ausgespannt gehaltenen Folienverbundes (5, 15, 15', 16, 16') schräg und zueinander angenähert spiegelbildlich von der Aufnahmeebene (21) in Richtung zur Rückseite (23) des Applikationswerkzeuges (20, 20', 20") hin abragen,
e) der unterseitige Schutzstreifen (9) wird vom startseitigen Ende des Lackfolienzuschnittes (6) her beginnend und angeführt durch den als Abzugsfahne (12, 12') dienenden, von einem innerhalb des Applikationswerkzeuges (20, 20', 20") beweglichen Greifwerkzeug (50, 50', 80, 80') erfassten startseitigen Überstand (10, 10') abgezogen und so die Klebeseite des Lackfolienzuschnittes (6) freigelegt,
f) nach dem lagerichtigen Ausrichten des durch das Applikationswerkzeug (20, 20', 20") ausgespannt gehaltenen Folienverbundes (5, 15, 15', 16, 16') in geringem Abstand zu der zu beklebenden und lagedefiniert und unnachgiebig festgehaltenen Karosseriepartie (1) wird der Lackfolienzuschnitt (6) durch eine innerhalb des Applikationswerkzeuges (20, 20', 20") längsbeweglichen und flexiblen Rakel (90, 91) aus der ausgespannten Abstandslage heraus auf die zu beklebende Karosseriepartie (1) aufgerakelt,
g) anschließend wird der oberseitige Schutzstreifen (8) von der Außenseite des applizierten Lackfolienzuschnittes (6) aufgrund einer Abzugbewegung des Applikationswerkzeuges (20, 20', 20"), insbesondere des endseitigen Sauggreifers (31, 31', 31"), abgezogen.

2. Verfahren nach Anspruch 1,
**dadurch gekennzeichnet, dass**
die Schwenkbewegung der beiden Sauggreifer (30, 30', 30", 31, 31', 31") in der Weise erfolgt, dass die Zugspannung in dem aufgenommenen Folienverbund (5, 15, 15', 16, 16') durch die Schwenkbewegung allenfalls in vernachlässigbarer Weise verändert wird.

3. Verfahren nach Anspruch 1,
**dadurch gekennzeichnet, dass**
die Größe des Schwenkwinkels (α, α') der Sauggreifer (30, 30', 30", 31, 31', 31") größer ist als der größte, während des Applikationsvorganges auftretende Winkel (β) zwischen Folienverbund (5, 15, 15', 16, 16') einerseits und Verbindungslinie zwischen den beiden in der Aufnahmeebene (21) liegenden Begrenzungskanten (33, 33') der gegenüberliegenden Sauggreifer (30, 30', 30", 31, 31', 31") andererseits.

4. Verfahren nach Anspruch 1,
**dadurch gekennzeichnet, dass**
im Bereich der Überstände (10, 11) zwischen beiden Schutzstreifen (8, 9) jeweils eine der Stärke der Lackfolie (6) ensprechende Stützfolie (7) zwischengefügt ist, so dass der Folienverbund (5, 15, 15') - abgesehen von gewissen Unterbrechungen - auf seiner gesamten Länge dreilagig ausgebildet ist und eine gleichmäßige Dicke (D) aufweist, und dass die Folienverbunde (5, 15, 15') gestapelt dargeboten werden.

5. Verfahren nach Anspruch 4,
**dadurch gekennzeichnet, dass**
die Folienverbunde (5, 15, 15') zumindest in angenäherter horizontaler Lage gestapelt dargeboten werden.

6. Verfahren nach Anspruch 1,
**dadurch gekennzeichnet, dass**
zu Beginn des Applikationsvorganges der untere Schutzstreifen (9) nur partiell abgezogen und die Klebeseite des Lackfolienzuschnittes (6) zunächst nur teilweise freigelegt wird und dass das weitere Abziehen des unteren Schutzstreifens (9) bzw. Freigelegen der Klebeseite des Lackfolienzuschnittes (6) entsprechend dem Voranschreiten des Aufrakelns des Lackfolienzuschnittes (6) auf das Karosserieteil (1) erfolgt.

7. Verfahren nach Anspruch 1,
**dadurch gekennzeichnet, dass**
der Lackfolienzuschnitt (6) nur in einer einzigen Richtung und mit nur einer Rakel (90, 91) auf das Karosserieteil (1) aufgerakelt wird.

8. Verfahren nach Anspruch 1,
**dadurch gekennzeichnet, dass**
während des Aufrakelns ein annähernd konstanter Abstand (A) zwischen der voranschreitenden Rakel (90, 91) einerseits und der ebenfalls voranschreitenden Abzugsstelle des abzuziehenden unteren Schutzstreifens (9) eingehalten wird.

9. Verfahren nach Anspruch 1,
**dadurch gekennzeichnet, dass**
das Abziehen des unteren Schutzstreifens (9) durch Überlagerung einer Translationsbewegung einer den unteren Schutzstreifen (9) aufwickelnden Wickeleinrichtung einerseits, die mit einer mit der Geschwindigkeit der Rakel übereinstimmenden Geschwindigkeit bewegt wird, und einer Wickelbewegung der Wickeleinrichtung andererseits erfolgt, wobei die Wickeleinrichtung - für sich betrachtet - den abgezogenen Schutzstreifen (9) ebenfalls mit einer mit der Geschwindigkeit der Rakel (90, 91) übereinstimmenden Geschwindigkeit aufwickelt.

10. Verfahren nach Anspruch 1,
**dadurch gekennzeichnet, dass**
gegen Ende des Aufrakelvorganges der endseitige Sauggreifer (31, 31', 31") an die zu überklebene Karosserieoberfläche (1) angenähert wird.

11. Verfahren nach Anspruch 1,
**dadurch gekennzeichnet, dass**
der vom endseitigen Sauggreifer (31, 31', 31") erfasste endseitige Überstand (11, 11') des Folienverbundes (5, 15, 15', 16, 16') gegen Ende des Aufrakelvorganges nachgleiten gelassen wird.

12. Verfahren nach Anspruch 1,
**dadurch gekennzeichnet, dass**
mit einem Liniendruck in der Stärke von 10 bis 50 N/cm, vorzugsweise von 20 bis 30 N/cm aufgerakelt wird.

13. Verfahren nach Anspruch 1,
**dadurch gekennzeichnet, dass**
der Lackfolienzuschnitt (6) mit einer Rakel (91) aus einem harten Filz von etwa 10 bis 20 mm Stärke aufgerakelt wird.

14. Verfahren nach Anspruch 1,
**dadurch gekennzeichnet, dass**
zum Abziehen des äußeren Schutzstreifens (8) vom vollständig applizierten Lackfolienzuschnitt (6) das Applikationswerkzeug (20, 20', 20") um eine in der Nähe eines der Sauggreifer (30, 30', 30", 31, 31', 31"), vorzugsweise in der Nähe des startseitigen Sauggreifers (30, 30', 30") liegende, virtuelle Schwenkachse von der Karosserieoberfläche (1) weggeschwenkt und/oder in Richtung zum gegenüberliegenden Ende des Lackfolienzuschnitts (6) hin bewegt wird, derart dass der wegbewegte Sauggreifer (31, 31', 31") den äußeren Schutzstreifen (8) vom applizierten Lackfolienzuschnitt (6) abzieht.

15. Vorrichtung zum automatisierten Applizieren von selbsthaftender Folie auf Karosserieteile, bestehend aus einem durch einen frei programmierbaren Industrieroboter handhabbaren Applikationswerkzeug, welches an der einen, nachfolgend "Arbeitsseite" genannten Flachseite des Applikationswerkzeuges zwei im Abstand zueinander angeordnete, gezielt mit Vakuum beaufschlagbare bzw. belüftbare Sauggreifer aufweist, die einen Folienzuschnitt auf der nichtklebenden Außenseite an zwei gegenüberliegend Enden zu erfassen und ausgespannt zu halten vermögen, derart, dass der Folienzuschnitt in ausgespanntem Zustand durch den Industrieroboter frei handhabbar ist, insbesondere zur Ausübung des Verfahrens nach Anspruch 1,
**dadurch gekennzeichnet, dass**
zum Applizieren von länglichen, vorkonfektionierten, jeweils in einem automationsgerecht ausgebildeten und einzeln bereitgestellten Folienverbund (5, 15, 15', 16, 16') enthaltenen Lackfolienzuschnitten (6) das Applikationswerkzeug (20, 20', 20") mit den folgenden Merkmalen versehen ist:
a) die beiden Sauggreifer (30, 30', 30", 31, 31', 31") sind jeweils schwenkbar im Applikationswerkzeug (20, 20', 20") angeordnet und mit einem Schwenkantrieb (37, 40, 40') versehen, derart dass die Sauggreifer (30, 30', 30", 31, 31', 31") mit ihrer saugwirksamen Aufnahmefläche (32) in eine einheitliche Aufnahmeebene (21) - Aufnahmestellung - zur Übernahme eines bereitgelegten Lackfolienverbundes (5, 15, 15' , 16, 16') oder in eine annähernd spiegelbildlich zueinander liegende Arbeitsstellung einschwenkbar sind, bei welch letzterer die saugwirksamen Aufnahmeflächen (32) von der einheitlichen Aufnahmeebene (21) in Richtung zu der nachfolgend "Rückseite" (23) genannten, der Arbeitsseite (22) gegenüberliegend Flachseite des Applikationswerkzeuges (20, 20', 20") abragen,
b) benachbart zu einem der Sauggreifer, nachfolgend "Start-Sauggreifer" (30, 30', 30") genannt, ist ein parallel-verschiebbares Greifwerkzeug (50, 50', 80, 80') angeordnet, das zum einen aufnahmebereit an die Aufnahmeebene (21) neben dem Start-Sauggreifer (30, 30', 30") bewegbar, zum anderen aus dieser Startposition unter die Aufnahmeebene (21) in eine Arbeitsebene (53) und ferner innerhalb der Arbeitsebene (53) parallel zur Arbeitsebene (53) und parallel zu sich selber (50, 50', 80, 80') verfahrbar ist,
c) ferner ist innerhalb des Applikationswerkzeuges (20, 20', 20") eine Rakel (90, 91) angeordnet, welche mit ihrer Arbeitskante aus einer von der Aufnahmeebene (21) abgerückten Warteposition in eine nahe bei der Aufnahmeebene (21) liegende Arbeitsposition verschiebbar und mit bestimmter Kraft anpressbar und in dieser Stellung geradlinig und parallel zur Aufnahmeebene (21) verschiebbar ist.

16. Vorrichtung nach Anspruch 15,
**gekennzeichnet durch** eine im Arbeitsbereich des das Applikationswerkzeug (20, 20', 20") handhabenden Industrieroboters angeordnete, elastisch gelagerte, horizontale Stapelplattform (96) mit seitlichen Halte- und Führungsstegen (97, 98), auf der die Folienverbunde (5, 15, 15') zumindest angenähert in Horizontallage dem Applikationswerkzeug (20, 20', 20") gestapelt (95) dargeboten sind.

17. Vorrichtung nach Anspruch 16,
**dadurch gekennzeichnet, dass**
die Stapelplattform (96) in der Weise höhenveränderbar gehaltert und mit einem steuerbaren (109, 110) Höhenverstellantrieb (105 bis 108) versehen ist, dass sich die Oberkante des Stapels (95) unabhängig von der Anzahl der im Stapel (95) befindlichen Folienverbunde (5, 15, 15') stets in konstanter Höhenposition befindet.

18. Vorrichtung nach Anspruch 15,
**dadurch gekennzeichnet, dass**
die Schwenkachsen (34) der beiden Sauggreifer (30, 31) in der Aufnahmeebene (21) und nahe an der dem Lackfolienzuschnitt (6) zugekehrt liegenden Begrenzungskante (33, 33') der Sauggreifer (30, 31) liegen, derart dass die Zugspannung in dem aufgenommenen Folienverbund (5, 15, 15', 16, 16') durch eine Schwenkbewegung der Sauggreifers (30, 31) allenfalls in vernachlässigbarer Weise verändert wird.

19. Vorrichtung nach Anspruch 15,
**gekennzeichnet durch** die Gemeinsamkeit folgender Merkmale:
a) die Schwenklagerung (34", 35") des startseitigen Sauggreifers (30") ist als übliche Zapfenlagerung ausgebildet, deren Mittelpunkt gegenüber der Aufnahmeebene (21) des Applikationswerkzeuges (20") in Richtung zu dessen Rückseite (23) um ein solches Maß versetzt ist, dass selbst die der Aufnahmeebene (21) am nächsten liegenden Umrisse der Zapfenlagerung (35") noch gegenüber der Aufnahmeebene (21) des Applikationswerkzeuges (20") in Richtung zu dessen Rückseite (23) hin versetzt liegen,
b) die Schwenklagerung des endseitigen Sauggreifers (31") ist als Gelenkviereck mit zwei einerseits jeweils am endseitigen Sauggreifer (31") und andererseits jeweils am Applikationswerkzeug (20") angelenkten Schwingen (45, 45') ausgebildet, wobei der **dadurch** bewirkte, bewegliche Momentanpol (46, 46') der Schwenkbewegung des endseitigen Sauggreifers (31") in allen Stellungen derselben gegenüber der Aufnahmeebene (21) des Applikationswerkzeuges (20") in der entgegengesetzten Richtung wie die Zapfenlagerung (34", 35") versetzt liegt,
c) die Gelenkviereck-Lagerung des endseitigen Sauggreifers (31") ist bezüglich der gegenseitigen Anordnung der Gelenkpunkte und der Länge der Schwingen (45, 45') so ausgebildet, dass der verschwenkungsbdingte Lageversatz (Hub h') der zuschnittnahen Begrenzungskante (33') des endseitigen Sauggreifers (31") nach Betrag und Richtung ebenso groß ist, wie der entsprechende Lageversatz (Hub h') des startseitigen Sauggreifers (30").

20. Vorrichtung nach Anspruch 15,
**dadurch gekennzeichnet, dass**
die Sauggreifer (30, 30', 30", 31, 31', 31") um einen durch Anschläge (38, 39; 38', 39'; 43, 44; 43', 44'; 47, 48; 47', 48') vorgebbaren festen Schwenkwinkel (α, α') in der Größe von 10 bis 45°, vorzugsweise 15 bis 30° verschwenkbar sind.

21. Vorrichtung nach Anspruch 15,
**dadurch gekennzeichnet, dass**
das Greifwerkzeug (50, 50', 80, 80') drehbar gelagert und dreantreibbar ausgebildet ist und über seine Längserstreckung hinweg einen etwa konstanten, der Rundform angenäherten Querschnitt aufweist, derart dass es zugleich als Wickelkern für ein vom Greifwerkzeug (50, 50', 80, 80') endseitig ergriffenes, bandförmiges Gut verwendbar ist.

22. Vorrichtung nach Anspruch 15 oder 21,
**dadurch gekennzeichnet, dass**
das Greifwerkzeug als eine innerhalb des Applikationswerkzeuges bewegliche Schnabelzange (50, 50') ausgebildet ist, die einen - zumindest in der aufnahmebereiten Ausgangsposition - oberhalb der Aufnahmeebene (21) angeordneten oberen (51, 51') und einen unterhalb der Aufnahmeebene (21) angeordneten unteren Schnabelteil (52, 52') aufweist, wobei nur der untere Schnabelteil (52, 52 ') im Sinne einer Öffnungs- und Schließbewegung der Schnabelzange (50, 50') beweglich ist.

23. Vorrichtung nach Anspruch 22,
**dadurch gekennzeichnet, dass**
der untere Schnabelteil (52) im Sinne einer Öffnungs- und Schließbewegung der Schnabelzange (50) um 90° verschwenkbar ist, derart dass in der aufnahmebereiten Ausgangsposition der ganz geöffneten Schnabelzange (50) der untere Schnabelteil (52) rechtwinklig zur Aufnahmeebene (21) und vom Applikationswerkzeug (20, 20', 20") weg abragt.

24. Vorrichtung nach Anspruch 22,
**dadurch gekennzeichnet, dass**
der untere Schnabelteil (52') im Sinne einer Öffnungs- und Schließbewegung der Schnabelzange (50') parallel zu sich selber im Schließsinn an den oberen Schnabelteil (51') annäherbar bzw. im Öffnungssinn von ihm abrückbar ist und dass die Schnabelzange (50') als ganzes aus dem Bereich des aufzunehmenden Folienverbundes (5, 15, 15', 16, 16') von der Seite her quer zu dessen Längsrichtung herausfahrbar bzw. einfahrbar ist, wobei der ausführbare Verfahrweg (Querhub Hq) des Greifwerkzeuges (50') mindestens der Breite des aufzunehmenden Folienverbundes (5, 15, 15', 16, 16') entspricht.

25. Vorrichtung nach Anspruch 24,
**dadurch gekennzeichnet, dass**
das drehantreibbare, zugleich als Wickelkern für den unteren Schutzstreifen (9) dienende Greifwerkzeug (50') in einer Pinole (71) gehaltert ist, die ihrerseits in einer drehbar gelagerten und drehantreibbaren (70) Hohlwelle axialverschiebbar gelagert und mit einem Verschiebeantrieb (77) gekoppelt ist, wobei die Schließ- und Öffnungsbewegung des Greifwerkzeuges (50') von der Axialbewegung der Pinole (70) abgeleitet ist.

26. Vorrichtung nach Anspruch 15,
**dadurch gekennzeichnet, dass**
das drehantreibbare, zugleich als Wickelkern für den unteren Schutzstreifen (9) dienende Greifwerkzeug (80, 80') als eine innerhalb des Applikationswerkzeuges (20, 20', 20") bewegliche, gesteuert mit Vakuum beaufschlagbare bzw. belüftbare Saugleiste (80, 80') von angenähert halbkreisförmigem oder D-förmigem Querschnitt ausgebildet ist, die an der Flachseite eine saugwirksame Anlagefläche (88, 88') aufweist und die mit ihrer Anlagefläche (88, 88') an den startseitigen Überstand (12, 12') des im Applikationswerkzeug (20, 20', 20") aufgenommenen Folienverbundes (5, 15, 15', 16, 16') anlegbar ist.

27. Vorrichtung nach Anspruch 15,
**dadurch gekennzeichnet, dass**
das drehantreibbare, zugleich als Wickelkern für den unteren Schutzstreifen (9) dienende Greifwerkzeug (50, 50', 80, 80') gezielt in eine solche Drehstellung einfahrbar ist, dass das Greifwerkzeug (50, 50', 80, 80') mit seiner Aufnahmefläche (51", 88, 88') aufnahmebereit parallel zum startseitigen Überstand (12, 12') des im Applikationswerkzeug (20, 20', 20") aufgenommenen Folienverbundes (5, 15, 15', 16, 16') steht.

28. Vorrichtung nach Anspruch 15,
**dadurch gekennzeichnet, dass**
der Drehantrieb des zugleich als Wickelkern dienenden Greifwerkzeuges (50, 50', 80, 80') während des Wickelvorganges in der Weise bezüglich der Drehgeschwindigkeit steuerbar ist, dass ungeachtet eines zunehmenden Durchmessers des Wickels (68) des unteren Schutzstreifens (9) eine vorgebbare, zumindest angenähert konstante Umfangsgeschwindigkeit des Wickels (68) eingehalten werden kann.

29. Vorrichtung nach Anspruch 15,
**dadurch gekennzeichnet, dass**
die Rakel (90, 91) und das Greifwerkzeug (50, 50', 80, 80') in Arbeitsstellung in fester Zuordnung (Abstand A) miteinander verbunden oder aneinander gekoppelt und mit einheitlicher Geschwindigkeit verschiebbar sind.

30. Vorrichtung nach Anspruch 15,
**dadurch gekennzeichnet, dass**
die Höhe des Vakuums während der Beaufschlagungszeit zumindest für den endseitigen Sauggreifer (31, 31', 31") separat veränderbar ist, derart dass die Festhaltekraft gegen Ende des Aufrakelvorganges im Sinne eines Nachgleiten-lassens veränderbar ist.

31. Vorrichtung nach Anspruch 15,
**dadurch gekennzeichnet, dass**
die Rakel (90, 91) mit einem Liniendruck in der Höhe von 10 bis 50 N/cm, vorzugsweise von 20 bis 30 N/cm auf den Folienzuschnitt (6) bzw. auf das unnachgiebig gehaltene Karosserieteil (1) anpressbar ist.

32. Vorrichtung nach Anspruch 15,
**dadurch gekennzeichnet, dass**
die Rakel (91) aus einem harten Filz von etwa 10 bis 20 mm Stärke besteht.

33. Länglicher, vorkonfektionierter, zur Applikation auf bestimmte Karosserieteile bestimmter Lackfolienverbund, bei dem der nutzbare Lackfolienzuschnitt sowohl außen- als auch unterseitig mit einem anhaftenden aber leicht ablösbaren Schutzstreifen versehen ist,
**dadurch gekennzeichnet, dass**
für eine automatisierte Applikation des Lackfolienzuschnitts (6) mittels eines durch einen programmierbaren Industrieroboter handhabbaren Applikationswerkzeuges (20, 20', 20") an dem Folienverbund (5, 15, 15', 16, 16') sowohl der außenseitige (8) als auch der unterseitige Schutzstreifen (9) an den beiden, im Bereich der Schmalseiten des Lackfolienzuschnitts (6) liegenden Enden jeweils gegenüber dem Lackfolienzuschnitt (6) überstehen, wobei die in Längsrichtung des Folienzuschnitts (6) gemessene Länge des einen, nachfolgend "endseitiger Überstand" genannten Überstandes (11, 11') etwa auf die in Längsrichtung des Lackfolienzuschnitts (6) gemessene Aufsetzbreite (b₂) des zugehörigen Sauggreifers (31, 31', 31") ausgebildet ist, wogegen die Länge des anderen, nachfolgend "startseitiger Überstand" genannten Überstandes (10, 10') ebenfalls etwa auf die Aufsetzbreite (b₁) des zugehörigen Sauggreifers (30, 30', 30") ausgebildet ist, wobei jedoch am startseitigen Überstand (10, 10') zumindest der unterseitige Schutzstreifen (9) um eine bestimmte Greiflänge (1) zum Erfassen durch eine Schutzstreifen-Abzugsvorrichtung (Greifwerkzeuge 50, 50', 80, 80') über die genannte Aufsetzbreite (b₁) hinaus verlängert ist.

34. Lackfolienverbund nach Anspruch 33,
**dadurch gekennzeichnet, dass**
im Bereich der Überstände (10, 10', 11, 11') der Schutzstreifen (8, 9) zwischen beiden Schutzstreifen (8, 9) jeweils eine der Stärke der Lackfolie (6) entsprechende Stützfolie (7) zwischengefügt ist, so dass der Folienverbund (5, 15, 15', 16, 16') - abgesehen von gewissen, schmalen Unterbrechungen (13) - auf der gesamten Länge zumindest des äußeren Schutzstreifens (8) dreilagig ausgebildet ist und in soweit eine gleichmäßige Dicke (D) aufweist.

35. Lackfolienverbund nach Anspruch 34,
**dadurch gekennzeichnet, dass**
im Bereich des startseitigen Überstandes (10) auch der oberseitige Schutzstreifen (8) um die Greiflänge (1) über die genannte Aufsetzbreite (b₁) hinaus verlängert und mit dem verlängerten (Abzugsfahne 12) unterseitigen Schutzstreifen (9) unter Zwischenfügung einer Stützfolie (7) verbunden ist und dass der oberseitige Schutzstreifen (8) und die Stützfolie (7) entlang einer quer zur Längsrichtung des Folienverbundes (5) verlaufenden Linie, die im Bereich zwischen dem startseitigen Überstand (10) und der Abzugsfahne (12) um die genannte Greiflänge (1) liegt, an der gleichen Stelle und auf der ganzen Breite des Folienverbundes (5) geschlitzt (14) sind, wogegen der unterseitige Schutzstreifen (9) auch an dieser Stelle durchgehend ausgebildet ist.

36. Lackfolienverbund nach Anspruch 33,
**dadurch gekennzeichnet, dass**
die Stützfolie (7) identisch mit der Lackfolie (6) ausgebildet aber von dem nutzbaren Teil des Lackfolienzuschnitts (6) durch eine Unterbrechung (13) getrennt ist.

37. Lackfolienverbund nach Anspruch 33,
**dadurch gekennzeichnet, dass**
der untere Schutzstreifen (9) mit einer Antihaftbeschichtung versehen ist, derart, dass der untere Schutzstreifen (9) sich leichter von der Klebeseite des Lackfolienzuschnitts (6) löst als letzter (6) von dem äußeren Schutzstreifen (8).

## Claims

1. Method for automated application of self-adhesive film to bodywork parts, in which a film blank is gripped on the non-adhesive outer face at two opposite ends by means of suction grippers to which a vacuum can be applied, and is held stretched out, in which the film blank which is held stretched out is aligned accurately in position above the bodywork part to be bonded to and is adhesively bonded to it,
**characterized in that**
prefabricated, elongated paint film blanks (6) are provided in a configuration according to features a to c) for application of paint film, and **in that** the paint film blanks (6) which have been provided in this way are moved according to features d) to g) for automated application:
a) each prefabricated, elongated paint film blank (6) is included in a film composite (5, 15, 15', 16, 16') and is provided on the outside and underneath with an adherent but easily detachable protective strip (8, 9), with each of the two protective strips (8, 9) projecting (projections 10, 10', 11, 11') beyond the useful length (L) of the paint film blank (6) at the two ends, which are located in the area of the narrow faces of the paint film blank (6),
b) the length, measured in the longitudinal direction of the film blank (6), of the first projection (11, 11'), which is referred to in the following text as an "end projection", is approximately matched to the attachment width (b₂) of the associated suction gripper (31) measured in the longitudinal direction of the paint film blank (6) while, in contrast, the length of the other projection (10, 10'), which is referred to in the following text as the "start-side projection", is likewise matched approximately to the attachment width (b₁) of the associated suction gripper (30) but with at least the lower protective strip (9) on the start-side projection (10, 10') being lengthened by a specific gripping length (1) beyond said attachment width (b₁) (pulling-off lug 12, 12'),
c) the film composite (5, 15, 15', 16, 16') which is formed in this way and includes the paint film blank (6) is offered in a defined position with the outer protective strip (8) being freely accessible in the working area of a freely programmable industrial robot, which is provided with an application tool (20, 20', 20"), for picking up by the application tool (20, 20', 20"),
d) the film composite (5, 15, 15', 16, 16') is picked up by two suction grippers (30, 30', 30", 31, 31', 31"), which are provided on the application tool (20, 20', 20") and whose sucking picking-up surfaces (32) are located on a standard picking-up plane (21), on the upper protective strip (8) in the area of the two projections (10, 10', 11, 11'), with the two suction grippers (30, 30', 30", 31, 31', 31") then being pivoted from the picking-up plane (21) through a respective specific angle (α, α'), in such a way that the projections (10, 10', 11, 11') which have been picked up of the film composite (5, 15, 15', 16, 16') that is held stretched out project obliquely and approximately in mirror-image form with respect to one another from the picking-up plane (21) in the direction of the rear face (23) of the application tool (20, 20', 20"),
e) the lower protective strip (9) is pulled off, starting from the start-side end of the paint film blank (6) and guided by the start-side projection (10, 10'), which is used as a pulling-off lug (12, 12') and is gripped by a gripping tool (50, 50', 80, 80'), which can move within the application tool (20, 20', 20") thus exposing the adhesive face of the paint film blank (6),
f) once the film composite (5, 15, 15', 16, 16'), which is held stretched out by the application tool (20, 20', 20") has been aligned in the correct orientation at a short distance from the bodywork part (1), which is to be bonded to and is held firmly in the defined orientation and inflexibly, the paint film blank (6) is wiped onto the bodywork part (1) to be bonded to, from the stretched-out separated position, by means of a flexible wiper (90, 91) which can move longitudinally within the application tool (20, 20', 20"),
g) the upper protective strip (8) is then pulled off the outer face of the applied paint film blank (6) by means of a pulling-off movement of the application tool (20, 20', 20"), in particular of the end suction gripper (31, 31', 31").

2. Method according to Claim 1,
**characterized in that**
the pivoting movement of the two suction grippers (30, 30' , 30", 31, 31', 31") takes place in such a manner that the tensile stress in the picked-up film composite (5, 15, 15', 16, 16') is changed no more than negligibly by the pivoting movement.

3. Method according to Claim 1,
**characterized in that**
the magnitude of the pivoting angle (α, α') of the suction grippers (30, 30', 30", 31, 31', 31") is greater than the largest angle (β) which occurs during the application process between the film composite (5, 15, 15', 16, 16') on the one hand and the connecting line between the two boundary edges (33, 33'), which are located on the picking-up plane (21), of the opposite suction grippers (30, 30', 30" , 31, 31', 31") on the other hand.

4. Method according to Claim 1,
**characterized in that**
a supporting film (7) which corresponds to the thickness of the paint film (6), is in each case inserted between the two protective strips (8, 9) in the area of the projections (10, 11), so that the film composite (5, 15, 15') is formed with three layers over its entire length - apart from certain interruptions - and has a uniform thickness (D) and **in that** the film composites (5, 15, 15') are offered in a stacked form.

5. Method according to Claim 4,
**characterized in that**
the film composites (5, 15, 15') are offered stacked at least in an approximately horizontal position.

6. Method according to Claim 1,
**characterized in that**,
at the start of the application process, the lower protective strip (9) is pulled off only partially and the adhesive face of the paint film blank (6) is initially only partially exposed, and **in that** the rest of the process of pulling off the lower protective strip (9) and exposure of the adhesive face of the paint film blank (6) are carried out corresponding to the progress of the process of wiping the paint film blank (6) onto the bodywork part (1).

7. Method according to Claim 1,
**characterized in that**
the paint film blank (6) is wiped onto the bodywork part (1) in only a single direction and with only one wiper (90, 91).

8. Method according to Claim 1,
**characterized in that**,
during the wiping on process, an approximately constant distance (A) is maintained between the progressing wiper (90, 91) on the one hand and the likewise progressing pulling-off point on the lower protective strip (9) that is to be pulled off.

9. Method according to Claim 1, **characterized in that** the process of pulling off the lower protective strip (9) is carried out by the superimposition on the one hand of a translational movement of a winding device, which winds up the lower protective strip (9) and is moved at a speed which matches the speed of the wiper, and on the other hand by a winding movement of the winding device, with the winding device - in its own right - likewise winding up the pulled-off protective strip (9) at a speed which matches the speed of the wiper (90, 91).

10. Method according to Claim 1,
**characterized in that**
the end suction gripper (31, 31', 31") approaches the bodywork surface (1) to be bonded over towards the end of the wiping-on process.

11. Method according to Claim 1,
**characterized in that**
the end projection (11, 11') of the film composite (5, 15, 15', 16, 16') which is gripped by the end suction gripper (31, 31', 31") is allowed to continue sliding towards the end of the wiping-on process.

12. Method according to Claim 1,
**characterized in that**
the wiping-on process is carried out with a linear pressure of between 10 and 50 N/cm, preferably between 20 and 30 N/cm.

13. Method according to Claim 1,
**characterized in that**
the paint film blank (6) is wiped on by means of a wiper (91) composed of a hard felt with a thickness of about 10 to 20 mm.

14. Method according to Claim 1,
**characterized in that**,
in order to pull the outer protective strip (8) off the completely applied paint film blank (6), the application tool (20, 20', 20") is pivoted away from the bodywork surface (1) about a virtual pivoting axis which is located in the vicinity of one of the suction grippers (30, 30', 30", 31, 31', 31"), preferably in the vicinity of the start-side suction gripper (30, 30', 30"), and/or is moved in the direction of the opposite end of the paint film blank (6) such that the suction gripper (31, 31', 31") which has been moved away pulls the outer protective strip (8) off the applied paint film blank (6).

15. Apparatus for automated application of self-adhesive film to bodywork parts, comprising an application tool which can be handled by a freely programmable industrial robot and which has two suction grippers, which are arranged at a distance from one another and to which air or a vacuum can be applied deliberately, on the one flat face, which is referred to in the following text as the "working face" of the application tool, which suction grippers can grip one film blank at two opposite ends on the non-adhesive outer face and can hold it stretched out, such that the film blank can be handled freely by the industrial robot in the stretched-out state, in particular in order to carry out the method according to Claim 1,
**characterized in that**,
for the application of elongated, prefabricated paint film blanks (6), which are in each case included in a film composite (5, 15, 15', 16, 16') which is designed to be suitable for automation and is produced on an individual basis, the application tool (20, 20', 20") is provided with the following features:
a) the two suction grippers (30, 30', 30", 31, 31', 31") are each arranged in the application tool (20, 20', 20") such that they can pivot and are provided with a pivoting drive (37, 40, 40') such that the suction grippers (30, 30', 30" , 31, 31', 31") can be pivoted with their sucking picking-up surface (32) onto a standard picking-up plane (21) - the picking-up position - in order to transfer a paint film composite (5, 15, 15', 16, 16') which has been provided, or can be pivoted to a working position, which positions are approximately in mirror-image form with respect to one another, and in which working position the sucking picking-up surfaces (32) project from the standard picking-up plane (21) in the direction of the flat face of the application tool (20, 20', 20") which is opposite the working face (22) and is referred to in the following text as the "rear face" (23),
b) a gripping tool (50, 50', 80, 80') which can be moved parallel is arranged adjacent to one of the suction grippers, which is referred to in the following text as the "start suction gripper" (30, 30', 30"), and this gripping tool (50, 50', 80, 80') can on the one hand be moved onto the picking-up plane (21) alongside the start suction gripper (30, 30', 30") such that it is ready to pick up, and on the other hand can be moved from this start position under the picking-up plane (21) to a working plane (53) and, furthermore, on the working plane (53) parallel to the working plane (53) and parallel to itself (50, 50', 80, 80').
c) furthermore, a wiper (90, 91) is arranged within the application tool (20, 20', 20"), can be moved with its working edge from a waiting position, in which it has been moved back from the picking-up plane (21), to a working position in which it is located close to the picking-up plane (21), can be pressed on with a specific force, and in this position can be moved in a straight line and parallel to the picking-up plane (21).

16. Apparatus according to Claim 15,
**characterized by**
a horizontal stacking platform (96) which is mounted elastically, is arranged in the working area of the industrial robot that is handling the application tool (20, 20', 20"), and has side holding and guide webs (97, 98), on which the film composites (5, 15, 15') are offered at least approximately in a horizontal position to the application tool (20, 20', 20") in a stacked form (95).

17. Apparatus according to Claim 16,
**characterized in that**
the stacking platform (96) is held at a variable height and is provided with a controllable (109, 110) height adjustment drive (105 to 108), in such a way that the upper edge of the stack (95) is always at a constant height position, irrespective of the number of film composites (5, 15, 15') in the stack (95).

18. Apparatus according to Claim 15,
**characterized in that**
the pivoting axes (34) of the two suction grippers (30, 31) are located on the picking-up plane (21) and close to that boundary edge (33, 33') of the suction grippers (30, 31) which faces the paint film blank (6), such that the tensile stress in the picked-up film composite (5, 15, 15', 16, 16') is changed no more than negligibly by a pivoting movement of the suction grippers (30, 31).

19. Apparatus according to Claim 15,
**characterized by**
the totality of the following features:
a) the pivoting bearing (34", 35") of the start-side suction gripper (30") is in the form of a conventional journal bearing, whose center point is offset with respect to the picking-up plane (21) of the application tool (20") in the direction of its rear face (23) to such an extent that those outlines of the journal bearing (35") which are closest to the picking-up plane (21) are themselves still offset with respect to the picking-up plane (21) of the application tool (20") in the direction of its rear face (23),
b) the pivoting bearing for the end suction gripper (31") is in the form of a four-bar linkage with two rockers (45, 45') which are each articulated on the one hand on the end suction gripper (31") and are each articulated on the other hand the application tool (20"), with the moving instantaneous center of rotation (46, 46') for the pivoting movement of the end suction gripper (31") which is caused by this being offset in all of its positions with respect to the picking-up plane (21) of the application tool (20") in the opposite direction to the journal bearing (34", 35")
c) the four-bar linkage bearing for the end suction gripper (31") is designed with respect to the mutual arrangement of the hinge points and the length of the rockers (45, 45') such that the position offset (distance h'), which results from the pivoting, of the boundary edge (33') of the end suction gripper (31") close to the blank is of the same size, in terms of its magnitude and direction, as the corresponding position offset (distance h') of the start-side suction gripper (30").

20. Apparatus according to Claim 15,
**characterized in that**
the suction grippers (30, 30', 30' ', 31, 31', 31") can pivot through a fixed pivoting angle (α, α') which can be predetermined by stops (38, 39; 38', 39'; 43, 44; 43', 44'; 47, 48; 47', 48') in the order of magnitude of 10 to 45°, preferably 15 to 30°.

21. Apparatus according to Claim 15,
**characterized in that**
the gripping tool (50, 50', 80, 80') is mounted such that it can rotate and is designed so that it can be driven to rotate, and has an approximately constant, approximately round cross section over its longitudinal extent, such that it can at the same time be used as a coil core for a material which is in the form of a strip and is gripped by the gripping tool (50, 50', 80, 80') at the end.

22. Apparatus according to Claim 15 or 21,
**characterized in that**
the gripping tool is in the form of long-nose pliers (50, 50') which can move within the application tool and have an upper jaw part (51, 51') which is arranged above the picking-up plane (21), at least in the initial position in which it is ready to pick up - and have a lower jaw part (52, 52'), which is arranged underneath the picking-up plane (21), wherein only the lower jaw part (52, 52') can move, in the sense of an opening and closing movement of the long-nose pliers (50, 50').

23. Apparatus according to Claim 22,
**characterized in that**
the lower jaw part (52) can be pivoted through 90° in the sense of an opening and closing movement of the long-nose pliers (50), such that, in the initial position of the long-nose pliers (50), in which they are completely open and are ready to pick up, the lower jaw part (52) projects at right angles to the picking-up plane (21) and away from the application tool (20, 20', 20").

24. Apparatus according to Claim 22,
**characterized in that**,
in the sense of an opening and closing movement of the long-nose pliers (50'), the lower jaw part (52') can be moved parallel to itself in the closing sense towards the upper jaw part (51'), and can be moved away from it in the opening sense, and **in that** the long-nose pliers (50') as an entity can be moved out of and into the area of the film composite (5, 15, 15', 16, 16') to be picked up from the side and transversely with respect to its longitudinal extent, wherein the distance (transverse distance Hq) through which the gripping tool (50') can be moved corresponds at least to the width of the film composite (5, 15, 15', 16, 16') to be picked up.

25. Apparatus according to Claim 24,
**characterized in that**
the gripping tool (50'), which can be driven to rotate and is at the same time used as a coil core for the lower protective strip (9) is held in a spindle (71) which itself is mounted such that it can move axially in a hollow shaft (70) which is mounted such that it can rotate and can be driven to rotate, and is coupled to a linear movement drive (77), wherein the closing and opening movement of the gripping tool (50') is derived from the axial movement of the spindle (70).

26. Apparatus according to Claim 15,
**characterized in that**
the gripping tool (80, 80'), which can be driven to rotate and is at the same time used as a coil core for the lower protective strip (9), is in the form of a suction strip (80, 80'), which can move within the application tool (20, 20', 20") and to which air or a vacuum can be applied in a controlled manner, which suction strip (80, 80') has an approximately semicircular or D-shaped cross section, has a sucking contact surface (88, 88') on the flat face, and whose contact surface (88, 88') can be applied to the start-side projection (12, 12') of the film composite (5, 15, 15', 16, 16') that is held in the application tool (20, 20', 20").

27. Apparatus according to Claim 15,
**characterized in that**
the gripping tool (50, 50', 80, 80'), which can be driven to rotate and is at the same time used as a coil core for the lower protective strip (9), can be moved deliberately to a rotation position such that the picking-up surface (51", 88, 88') of the gripping tool (50, 50', 80, 80') is ready to pick up parallel to the start-side projection (12, 12') of the film composite (5, 15, 15', 16, 16') which is held in the application tool (20, 20', 20").

28. Apparatus according to Claim 15,
**characterized in that**
the rotation speed of the rotary drive of the gripping tool (50, 50', 80, 80') which is used at the same time as a coil core can be controlled during the winding process such that an at least approximately constant circumferential speed of the coil (68) which can be predetermined, can be maintained irrespective of an increasing diameter of the coil (68).

29. Apparatus according to Claim 15,
**characterized in that**
the wiper (90, 91) and the gripping tool (50, 50', 80, 80') are connected to one another, or are coupled to one another and can be moved at the same speed, with a fixed association (distance A) in the working position.

30. Apparatus according to Claim 15,
**characterized in that**
the intensity of the vacuum during the time in which it can be applied can be varied separately at least for the end suction gripper (31, 31', 31") such that the fixing force can be varied towards the end of the wiping-on process in the sense of allowing it to continue to slide.

31. Apparatus according to Claim 15,
**characterized in that**
the wiper (90, 91) can be pressed onto the film blank (6) and/or onto the bodywork part (1) which is held inflexibly with a linear pressure amounting to 10 to 50 N/cm, preferably 20 to 30 N/cm.

32. Apparatus according to Claim 15,
**characterized in that**
the wiper (91) is composed of a hard felt with a thickness of about 10 to 20 mm.

33. Elongated, prefabricated paint film composite which is intended for application to specific bodywork parts, in which the usable paint film blank is provided both on the outside and underneath with an adherent but easily detachable protective strip,
**characterized in that**,
for automated application of the paint film blank (6) by means of an application tool (20, 20', 20"), which can be handled by means of a programmable industrial robot, to the film composite (5, 15, 15', 16, 16'), both the outer protective strip (8) and the lower protective strip (9) each project beyond the paint film blank (6) at the two ends which are located in the area of the narrow faces of the paint film blank (6), wherein the length, measured in the longitudinal direction of the film blank (6), of the one projection (11, 11'), which is referred to in the following text as an "end projection", is approximately matched to the attachment width (b2) of the associated suction gripper (31, 31', 31") measured in the longitudinal direction of the paint film blank (6) while, in contrast, the length of the other projection (10, 10'), which is referred to in the following text as the "start-side projection" is likewise matched approximately to the attachment width (b₁) of the associated suction gripper (30, 30', 30") wherein, however, at least the lower protective strip (9) is lengthened beyond the said attachment width (b₁) on the start-side projection (10, 10') by a specific gripping length (1) in order to be gripped by a protective strip pulling-off apparatus (gripping tools 50, 50', 80, 80').

34. Paint film composite according to Claim 33,
**characterized in that**,
a supporting film (7) which corresponds to the thickness of the paint film (6), is in each case inserted between the two protective strips (8, 9) in the area of the projections (10, 10', 11, 11') of the protective strips (8, 9), such that the film composite (5, 15, 15', 16, 16') has three layers over the entire length of at least the outer protective strip (8) - apart from certain narrow interruptions (13) - and to this extent has a uniform thickness (D).

35. Paint film composite according to Claim 34,
**characterized in that**,
in the area of the start-side projection (10) the upper protective strip (8) is also lengthened by the gripping length (1) beyond said attachment width (b₁) and is connected to the lengthened (pulling-off lug 12) lower protective strip (9) with a supporting film (7) inserted between them, and **in that** the upper protective strip (8) and the supporting film (7) are slotted at the same point and over the entire width of the film composite (5) along a line which runs transversely with respect to the longitudinal direction of the film composite (5) and which is located in the area between the start-side projection (10) and the pulling-off lug (12) around said gripping length (1) while, in contrast, the lower protective strip (9) is also continuous at this point.

36. Paint film composite according to Claim 33,
**characterized in that**
the supporting film (7) is identical to the paint film (6) but is separated from the usable part of the paint film blank (6) by an interruption (13).

37. Paint film composite according to Claim 33,
**characterized in that**
the lower protective strip (9) is provided with an antistick coating such that it is easier to detach the lower protective strip (9) from the adhesive face of the paint film blank (6) than to detach the latter (6) from the outer protective strip (8).

## Revendications

1. Procédé pour l'application automatisée d'un film autoadhésif sur des pièces de carrosserie, dans lequel un flan de film est saisi et est maintenu tendu, du côté extérieur non adhésif, par deux extrémités opposées, au moyen de dispositifs de préhension aspirants pouvant être sollicités par le vide, le flan de film maintenu tendu étant orienté en position exacte par-dessus la pièce de carrosserie à revêtir par collage et étant collé sur celle-ci,
**caractérisé en ce que**
des flans de film de peinture allongés préconfectionnés (6) pour l'application d'un film de peinture, sont préparés dans une réalisation selon les caractéristiques a) à c) et **en ce que** pour l'application automatisée des flans de film (6) ainsi préparés, on procède conformément aux caractéristiques d) à g) :
a) chaque flan de film de peinture allongé préconfectionné (6) est contenu dans un composite de film (5, 15, 15', 16, 16') et est pourvu, du côté extérieur et inférieur, d'une bande protectrice (8, 9) adhérente mais facilement décollable, les deux bandes protectrices (8, 9) dépassant à chaque fois (dépassements 10, 10', 11, 11') au niveau des deux extrémités situées dans la région des petits côtés du flan de film de peinture (6) par rapport à la longueur utile (L) du flan de film de peinture (6),
b) la longueur mesurée dans la direction longitudinale du flan de film (6), d'un des dépassements (11, 11') ci-après désigné "dépassement du côté du bout", est réalisée approximativement de manière correspondant à la largeur d'application (b₂) du dispositif de préhension aspirant associé (31), mesurée dans la direction longitudinale du flan de film de peinture (6), tandis que la longueur de l'autre dépassement (10, 10'), ci-après désigné "dépassement du côté du début" est certes aussi réalisée approximativement de manière correspondant à la largeur d'application (b₁) du dispositif de préhension apsirant associé (30), mais au niveau du dépassement du côté du début (10, 10') au moins la bande protectrice (9) du côté inférieur est prolongée d'une longueur de préhension définie (1) au-delà de ladite largeur d'application (b₁) (languette de traction 12, 12'),
c) le composite de film (5, 15, 15', 16, 16') ainsi réalisé et contenant le flan de film de peinture (6) se présente, dans une position définie de la bande protectrice (8) du côté extérieur, de manière librement accessible dans la zone de travail d'un robot industriel librement programmable pourvu d'un outil d'application (20, 20', 20") de manière à être reçu par l'outil d'application (20, 20', 20"),
d) le composite de film (5, 15, 15', 16, 16') est reçu par deux dispositifs de préhension aspirants (30, 30', 30", 31, 31', 31") prévus sur l'outil d'application (20, 20', 20"), reposant avec leurs surfaces de réception aspirantes (32) dans un plan de réception unitaire (21), au niveau de la bande protectrice (8) du côté supérieur, dans la région des deux dépassements (10, 10', 11, 11'), les deux dispositifs de préhension aspirants (30, 30', 30", 31, 31', 31") étant ensuite pivotés hors du plan de réception (21) suivant un angle respectif déterminé (α, α'), de telle sorte que les dépassements reçus (10, 10', 11, 11') du composite de film maintenu tendu (5, 15, 15', 16, 16') dépassent obliquement et approximativement symétriquement l'un par rapport à l'autre depuis le plan de réception (21) dans la direction du côté arrière (23) de l'outil d'application (20, 20', 20"),
e) la bande protectrice (9) du côté inférieur est retirée, en commençant par l'extrémité du côté du début du flan de film de peinture (6), guidée par le dépassement (10, 10') du côté du début, servant de languette de traction (12, 12') et saisi par un outil de préhension (50, 50', 80, 80') déplaçable à l'intérieur de l'outil d'application (20, 20', 20"), et ainsi le côté adhésif du flan de film de peinture (6) est exposé,
f) après l'orientation correcte du composite de film (5, 15, 15', 16, 16') maintenu tendu par l'outil d'application (20, 20', 20") à faible distance de la partie de la carrosserie (1) à coller et fixée de manière définie et inflexible, le flan de film de peinture (6) est appliqué par raclage, par une racle (90, 91) flexible et déplaçable longitudinalement le long de l'outil d'application (20, 20', 20") depuis la position tendue à distance sur la partie de la carrosserie (1) à coller,
g) ensuite la bande protectrice (8) du côté supérieur est retirée depuis le côté extérieur du flan de film de peinture (6) appliqué, par le biais d'un mouvement de traction de l'outil d'application (20, 20', 20"), notamment du dispositif de préhension aspirant du côté du bout (31, 31', 31").

2. Procédé selon la revendication 1,
**caractérisé en ce que**
le mouvement de pivotement des deux dispositifs de préhension aspirants (30, 30', 30", 31, 31', 31") s'effectue de telle manière que la tension de traction dans le composite de film reçu (5, 15, 15', 16, 16') est modifiée tout au plus de manière négligeable par le mouvement de pivotement.

3. Procédé selon la revendication 1,
**caractérisé en ce que**
la valeur de l'angle de pivotement (α, α') des dispositifs de préhension aspirants (30, 30', 30", 31, 31', 31") est supérieure à l'angle maximal (β) produit pendant l'opération d'application entre le composite de film (5, 15, 15', 16, 16') d'une part et la ligne de connexion entre les deux arêtes de limitation (33, 33') situées dans le plan de réception (21) des dispositifs de préhension aspirants opposés (30, 30', 30", 31, 31', 31"), d'autre part.

4. Procédé selon la revendication 1,
**caractérisé en ce que**
dans la région des dépassements (10, 11) entre les deux bandes protectrices (8, 9), à chaque fois un film de support (7) correspondant à l'épaisseur du film de peinture (6) est inséré, de sorte que le composite de film (5, 15, 15') - à part certaines interruptions - soit réalisé avec trois couches sur toute sa longueur et présente une épaisseur uniforme (D), et **en ce que** les composites de film (5, 15, 15') sont offerts sous forme empilée.

5. Procédé selon la revendication 4,
**caractérisé en ce que**
les composites de film (5, 15, 15') sont offerts sous forme empilée au moins en position approximativement horizontale.

6. Procédé selon la revendication 1,
**caractérisé en ce que**,
au début de l'opération d'application, la bande protectrice inférieure (9) n'est que partiellement retirée et le côté adhésif du flan de film de peinture (6) est d'abord seulement partiellement exposé et **en ce que** la poursuite du retrait de la bande protectrice inférieure (9) ou l'exposition du côté adhésif du flan de film de peinture (6) s'effectue en fonction de l'avance de l'application par raclage du flan de film de peinture (6) sur la pièce de carrosserie (1).

7. Procédé selon la revendication 1,
**caractérisé en ce que**
le flan de film de peinture (6) n'est appliqué par raclage sur la pièce de carrosserie (1) que dans une direction unique et avec seulement une racle (90, 91).

8. Procédé selon la revendication 1,
**caractérisé en ce que**
pendant l'application par raclage, une distance (A) approximativement constante est conservée entre la racle avançant (90, 91) d'une part et le point de traction également avançant de la bande protectrice inférieure (9) à retirer.

9. Procédé selon la revendication 1,
**caractérisé en ce que**
le retrait de la bande protectrice inférieure (9) s'effectue par superposition d'une part d'un mouvement de translation d'un dispositif d'enroulement enroulant la bande protectrice inférieure (9), lequel est déplacé avec une vitesse coïncidant avec la vitesse de la racle, et d'autre part un mouvement d'enroulement du dispositif d'enroulement, le dispositif d'enroulement - considéré en soi - enroulant la bande protectrice retirée (9) également avec une vitesse coïncidant avec la vitesse de la racle (90, 91).

10. Procédé selon la revendication 1,
**caractérisé en ce que**
vers la fin de l'opération d'application par raclage, le dispositif de préhension aspirant du côté du bout (31, 31', 31") est rapproché de la surface de la carrosserie (1) à revêtir par collage.

11. Procédé selon la revendication 1,
**caractérisé en ce que**
le dépassement du côté du bout (11, 11') du composite de film (5, 15, 15', 16, 16'), saisi par le dispositif de préhension aspirant du côté du bout (31, 31', 31"), continue de glisser vers la fin de l'opération d'application par raclage.

12. Procédé selon la revendication 1,
**caractérisé en ce que**
l'on effectue l'application par raclage avec une pression linéaire de l'ordre de 10 à 50 N/cm, de préférence de 20 à 30 N/cm.

13. Procédé selon la revendication 1,
**caractérisé en ce que**
le flan de film de peinture (6) est appliqué par raclage avec une racle (91) constituée d'un feutre dur ayant une épaisseur d'environ 10 à 20 mm.

14. Procédé selon la revendication 1,
**caractérisé en ce que**
pour le retrait de la bande protectrice extérieure (8) du flan de film de peinture appliqué complètement (6), l'outil d'application (20, 20', 20") est écarté de la surface de la carrosserie (1) par pivotement autour d'un axe de pivotement virtuel situé à proximité d'un des dispositifs de préhension aspirants (30, 30', 30", 31, 31', 31"), de préférence à proximité du dispositif de préhension aspirant du côté du début (30, 30', 30"), et/ou est déplacé dans la direction de l'extrémité opposée du flan de film de peinture (6), de telle sorte que le dispositif de préhension aspirant écarté (31, 31', 31") retire la bande protectrice extérieure (8) du flan de film de peinture appliqué (6).

15. Dispositif pour l'application automatisée d'un film autoadhésif sur des pièces de carrosserie, constitué d'un outil d'application pouvant être manipulé par un robot industriel librement programmable, qui présente, d'un côté plat de l'outil d'application, appelé ci-dessous "côté de travail", deux dispositifs de préhension aspirants disposés à distance l'un de l'autre, pouvant être ventilés ou sollicités par du vide de manière ciblée, qui permettent de saisir au niveau de deux extrémités opposées et de maintenir tendu un flan de film du côté extérieur non adhésif, de telle sorte que le flan de film puisse être manipulé librement dans l'état tendu par le robot industriel, notamment pour mettre en oeuvre le procédé selon la revendication 1,
**caractérisé en ce que**
pour l'application de flans de film de peinture allongés préconfectionnés (6), contenus à chaque fois dans un composite de film (5, 15, 15', 16, 16') réalisé de manière automatisée et préparé individuellement, l'outil d'application (20, 20', 20") présente les caractéristiques suivantes :
a) les deux dispositifs de préhension aspirants (30, 30', 30", 31, 31', 31") sont à chaque fois disposés de manière pivotante dans l'outil d'application (20, 20', 20") et sont pourvus d'un entraînement de pivotement (37, 40, 40'), de telle sorte que les dispositifs de préhension aspirants (30, 30', 30", 31, 31', 31") puissent pivoter avec leur surface de réception aspirante (32) dans un plan de réception unitaire (21) - position de réception - pour reprendre un composite de film de peinture préparé (5, 15, 15', 16, 16') ou dans une position de travail située approximativement symétriquement par rapport à l'autre, dans laquelle les surfaces de réception aspirantes (32) dépassent du plan de réception unitaire (21) dans la direction du côté plat de l'outil d'application (20, 20', 20") opposé au côté de travail (22), et appelé ci-après "coté arrière" (23),
b) à proximité de l'un des dispositifs de préhension aspirants, ci-après appelé "dispositif de préhension aspirant du début" (30, 30', 30"), est disposé un outil de préhension déplaçable en parallèle (50, 50', 80, 80'), qui peut être déplacé d'une part, en position prête à la réception, vers le plan de réception (21) à côté du dispositif de préhension aspirant du début (30, 30', 30"), et d'autre part depuis cette position de départ sous le plan de réception (21) dans un plan de travail (53) et en outre à l'intérieur du plan de travail (53) parallèlement au plan de travail (53) et parallèlement à lui-même (50, 50', 80, 80'),
c) en outre, à l'intérieur de l'outil d'application (20, 20', 20") est disposée une racle (90, 91), qui peut être déplacée avec son arête de travail d'une position d'attente en retrait du plan de réception (21) dans une position de travail proche du plan de réception (21) et qui peut être pressée avec une force déterminée et déplacée dans cette position en ligne droite et parallèlement au plan de réception (21).

16. Dispositif selon la revendication 15,
**caractérisé par** une plate-forme d'empilage (96) horizontale, montée élastiquement, disposée dans la région de travail du robot industriel manipulant l'outil d'application (20, 20', 20"), comprenant des nervures de fixation et de guidage latérales (97, 98), sur laquelle plate-forme les composites de film (5, 15, 15') sont présentés sous forme empilée (95) au moins approximativement en position horizontale par rapport à l'outil d'application (20, 20', 20").

17. Dispositif selon la revendication 16,
**caractérisé en ce que**
la plate-forme d'empilage (96) est fixée de manière déplaçable en hauteur et est pourvue d'un entraînement de réglage en hauteur (105 à 108) commandable (109, 110) de telle sorte que l'arête supérieure de la pile (95) se trouve indépendamment du nombre des composites de film (5, 15, 15') dans la pile (95), toujours dans une position en hauteur constante.

18. Dispositif selon la revendication 15,
**caractérisé en ce que**
les axes de pivotement (34) des deux dispositifs de préhension aspirants (30, 31) se situent dans le plan de réception (21) et à proximité de l'arête de limitation (33, 33') du dispositif de préhension aspirant (30, 31) tournée vers le flan de film de peinture (6), de telle sorte que la tension de traction dans le composite de film reçu (5, 15, 15', 16, 16') soit modifiée tout au plus de manière négligeable par le mouvement de pivotement du dispositif de préhension aspirant (30, 31).

19. Dispositif selon la revendication 15,
**caractérisé par** l'ensemble des caractéristiques suivantes :
a) le support pivotant (34", 35") du dispositif de préhension aspirant du côté du début (30") est réalisé sous forme de support usuel sur tourillon, dont le centre est décalé par rapport au plan de réception (21) de l'outil d'application (20") dans la direction de son côté arrière (23) dans une mesure telle que même les pourtours du support sur tourillon (35") les plus proches du plan de réception (21) soient encore décalés par rapport au plan de réception (21) de l'outil d'application (20") dans la direction de son côté arrière (23),
b) le support pivotant du dispositif de préhension aspirant du côté du bout (31") est réalisé sous forme de quadrilatère articulé avec deux bielles oscillantes (45, 45') articulées d'une part au dispositif de préhension aspirant du côté du bout (31") et d'autre part à chaque fois à l'outil d'application (20"), le pôle instantané (46, 46') mobile ainsi créé du mouvement de pivotement du dispositif de préhension aspirant du côté du bout (31"), dans toutes ses positions, étant décalé par rapport au plan de réception (21) de l'outil d'application (20") dans la direction opposée au support sur tourillon (34", 35"),
c) le support à quadrilatère articulé du dispositif de préhension aspirant du côté du bout (31") est réalisé par rapport à l'agencement mutuel des points d'articulation et de la longueur des bielles oscillantes (45, 45') de telle sorte que le décalage de position (Course h') dû au pivotement, de l'arête de limitation (33') proche du flan du dispositif de préhension aspirant du côté du bout (31") soit identique, en valeur et en direction, au décalage de position correspondant (Course h') du dispositif de préhension du côté du début (30").

20. Dispositif selon la revendication 15,
**caractérisé en ce que**
les dispositifs de préhension aspirants (30, 30', 30", 31, 31', 31") peuvent pivoter d'un angle de pivotement fixe (α, α') prédéfinissable par des butées (38, 39 ; 38', 39' ; 43, 44 ; 43', 44' ; 47, 48, 47', 48') de l'ordre de 10 à 45°, de préférence de 15 à 30°.

21. Dispositif selon la revendication 15,
**caractérisé en ce que**
l'outil de préhension (50, 50', 80, 80') est monté à rotation et est réalisé de manière à pouvoir être entraîné en rotation et présente sur son étendue longitudinale, une section transversale constante, approximativement circulaire, de telle sorte qu'il puisse être utilisé à la fois comme noyau d'enroulement pour un produit en bande saisi du côté de l'extrémité par l'outil de préhension (50, 50', 80, 80').

22. Dispositif selon la revendication 15 ou 21,
**caractérisé en ce que**
l'outil de préhension est réalisé sous forme de pince à bec (50, 50') mobile à l'intérieur de l'outil d'application, qui présente une partie de bec supérieure (51, 51') disposée - au moins dans la position de départ prête à la réception - au-dessus du plan de réception (21), et une partie de bec inférieure (52, 52') disposée sous le plan de réception (21), seule la partie de bec inférieure (52, 52') étant mobile au sens d'un mouvement d'ouverture et de fermeture de la pince à bec (50, 50').

23. Dispositif selon la revendication 22,
**caractérisé en ce que**
la partie de bec inférieure (52) peut pivoter de 90° au sens d'un mouvement d'ouverture et de fermeture de la pince à bec (50), de telle sorte que dans la position de départ prête à la réception de la pince à bec complètement ouverte (50), la partie de bec inférieure (52) s'écarte à angle droit du plan de réception (21) et de l'outil d'application (20, 20', 20").

24. Dispositif selon la revendication 22,
**caractérisé en ce que**
la partie de bec inférieure (52') peut être rapprochée de la partie de bec supérieure (51') au sens d'un mouvement d'ouverture et de fermeture de la pince à bec (50') parallèlement à elle-même dans le sens de fermeture, ou peut s'écarter d'elle dans le sens de l'ouverture, et **en ce que** la pince à bec (50') peut être écartée dans son ensemble de la région du composite de film à recevoir (5, 15, 15', 16, 16') depuis le côté transversale à sa direction longitudinale, ou peut y entrer, la course de déplacement à réaliser (course transversale Hq) de l'outil de préhension (50') correspondant au moins à la largeur du composite de film à recevoir (5, 15, 15', 16, 16').

25. Dispositif selon la revendication 24,
**caractérisé en ce que**
l'outil de préhension (50') pouvant être entraîné en rotation, servant en même temps de noyau d'enroulement pour la bande protectrice inférieure (9), est fixé dans une douille (71) qui pour sa part est montée de manière déplaçable axialement dans un arbre creux (70) monté à rotation et pouvant être entraîné en rotation et est accouplée à un entraînement de déplacement (77), le mouvement de fermeture et d'ouverture de l'outil de préhension (50') étant dérivé du mouvement axial de la douille (71).

26. Dispositif selon la revendication 15,
**caractérisé en ce que**
l'outil de préhension (80, 80') pouvant être entraîné en rotation, servant en même temps de noyau d'enroulement pour la bande protectrice inférieure (9), est réalisé sous forme de bande aspirante (80, 80') ventilable ou pouvant être sollicitée par du vide de manière ciblée, déplaçable à l'intérieur de l'outil d'application (20, 20', 20"), de section transversale approximativement semi-circulaire ou en forme de D, qui présente sur le côté plat une surface d'application aspirante (88, 88') et qui peut être appliquée avec sa surface d'application (88, 88') contre le dépassement du côté du début (12, 12') du composite de film (5, 15, 15', 16, 16') reçu dans l'outil d'application (20, 20', 20").

27. Dispositif selon la revendication 15,
**caractérisé en ce que**
l'outil de préhension (50, 50', 80, 80') pouvant être entraîné en rotation, servant en même temps de noyau d'enroulement pour la bande protectrice inférieure (9), peut être introduit de manière ciblée dans une position rotative telle que l'outil de préhension (50, 50', 80, 80'), avec sa surface de réception (51", 88, 88') soit prêt à la réception, parallèlement au dépassement du côté du début (12, 12') du composite de film (5, 15, 15', 16, 16') reçu dans l'outil d'application (20, 20', 20").

28. Dispositif selon la revendication 15,
**caractérisé en ce que**
l'entraînement en rotation de l'outil de préhension (50, 50', 80, 80') servant en même temps de noyau d'enroulement peut être commandé pendant l'opération d'enroulement en fonction de la vitesse de rotation de telle sorte que l'on puisse maintenir une vitesse périphérique de la bobine (68) au moins approximativement constante prédéfinissable indépendamment du diamètre croissant de la bobine (68) de la bande protectrice inférieure (9).

29. Dispositif selon la revendication 15,
**caractérisé en ce que**
la racle (90, 91) et l'outil de préhension (50, 50', 80, 80') sont connectés ou accouplés l'un à l'autre dans un agencement fixe (espace A) dans la position de travail et peuvent être déplacés avec une vitesse unitaire.

30. Dispositif selon la revendication 15,
**caractérisé en ce que**
la force du vide pendant le temps de sollicitation peut être modifiée séparément au moins pour le dispositif de préhension aspirant du côté du bout (31, 31', 31"), de telle sorte que la force de retenue puisse être modifiée vers la fin de l'opération d'application par raclage dans le sens d'un glissement ultérieur possible.

31. Dispositif selon la revendication 15,
**caractérisé en ce que**
la racle (90, 91) peut être pressée contre le flan de film (6) ou la pièce de carrosserie (1) maintenue de manière inflexible avec une pression linéaire de l'ordre de 10 à 50 N/cm, de préférence de 20 à 30 N/cm.

32. Dispositif selon la revendication 15,
**caractérisé en ce que**
la racle (91) se compose d'un feutre dur d'une épaisseur d'environ 10 à 20 mm.

33. Composite de film de peinture allongé préconfectionné prévu pour l'application sur des pièces de carrosserie déterminées, dans lequel le flan de film de peinture utilisable est pourvu à la fois sur le côté extérieur et sur le côté inférieur d'une bande protectrice adhérente mais facilement détachable,
**caractérisé en ce que**
pour une application automatisée du flan de film de peinture (6) au moyen d'un outil d'application (20, 20', 20") pouvant être manipulé par un robot industriel programmable sur le composite de film (5, 15, 15', 16, 16'), à la fois la bande protectrice (8) du côté extérieur et la bande protectrice (9) du côté inférieur dépassent aux deux extrémités situées dans la région des côtés étroits du flan de film de peinture (6) à chaque fois par rapport au flan de film de peinture (6), la longueur mesurée dans la direction longitudinale du flan de film (6) d'un des dépassements (11, 11'), ci-après appelé "dépassement du côté du bout", étant réalisée approximativement de manière correspondant à la largeur d'application (b₂) du dispositif de préhension aspirant associé (31, 31', 31"), mesurée dans la direction longitudinale du flan de film de peinture (6), tandis que la longueur de l'autre dépassement (10, 10'), ci-après désigné "dépassement du côté du début" est aussi réalisée approximativement de manière correspondant à la largeur d'application (b₁) du dispositif de préhension aspirant associé (30, 30', 30"), mais au niveau du dépassement du côté du début (10, 10') au moins la bande protectrice (9) du côté inférieur est prolongée d'une longueur de préhension définie (1) au-delà de ladite largeur d'application (b₁) pour pouvoir être saisie par un dispositif de retrait de bande protectrice (outils de préhension 50, 50', 80, 80').

34. Composite de film de peinture selon la revendication 33,
**caractérisé en ce que**
dans la région des dépassements (10, 10', 11, 11') des bandes protectrices (8, 9), un film de support (7) correspondant à l'épaisseur du film de peinture (6) est inséré à chaque fois entre les deux bandes protectrices (8, 9), de telle sorte que le composite de film (5, 15, 15', 16, 16') - à part certaines interruptions étroites (13) - soit réalisé avec trois couches sur toute la longueur au moins de la bande protectrice extérieure (8) et présente dans cette mesure une épaisseur uniforme (D).

35. Composite de film de peinture selon la revendication 34,
**caractérisé en ce que**
dans la région du dépassement du côté du début (10), la bande protectrice du côté supérieur (8) est également prolongée de la longueur de préhension (1) au-delà de ladite largeur d'application (b₁) et est connectée à la bande protectrice (9) du côté inférieur prolongée (languette de traction 12) avec interposition d'un film de support (7), et **en ce que** la bande protectrice (8) du côté supérieur et le film de support (7) sont fendus (14) le long d'une ligne s'étendant transversalement à la direction longitudinale du composite de film (5), qui, dans la région entre le dépassement du côté du début (10) et la languette de traction (12), vaut ladite longueur de préhension (1), au même endroit et à la même largeur que le composite de film (5), tandis que la bande protectrice (9) du côté inférieur est réalisée de manière continue à cet endroit.

36. Composite de film de peinture selon la revendication 33,
**caractérisé en ce que**
le film de support (7) est réalisé de manière identique au film de peinture (6) mais est séparé de la partie utile du flan de film de peinture (6) par une interruption (13).

37. Composite de film de peinture selon la revendication 33,
**caractérisé en ce que**
la bande protectrice inférieure (9) est pourvue d'un revêtement antiadhésif de telle sorte que la bande protectrice inférieure (9) se détache plus facilement du côté adhésif du flan de film de peinture (6) que ce dernier (6) de la bande protectrice extérieure (8).
